# EUROPEAN PATENT APPLICATION

(11) **EP 1 400 898 A2**
(43) Date of publication of application: **24.03.2004**
(21) Application number: 03018793.4
(22) Date of filing: 28.08.2003
(51) Int. Cl.: G06F 9/46, G06F 17/30, H04N 1/00, H04L 29/06

(54) **Image forming apparatus including web service functions**

(30) Priority: 30.08.2002 JP 2002255333; 30.08.2002 JP 2002255334; 30.08.2002 JP 2002255335; 30.08.2002 JP 2002255336; 11.11.2002 JP 2002327061; 18.03.2003 JP 2003074119; 18.03.2003 JP 2003074120
(71) Applicant: Ricoh Company, Ltd., Tokyo 143-8555 (JP)
(72) Inventor: Ito, Tatsuo, Sagamihara-shi Kanagawa (JP)
(74) Representative: Schwabe - Sandmair - Marx

(57) **Abstract**

In an image forming apparatus, a network communication controlling part controls communications by a process request from a device connected through a network and a process response to the device, and a Web service providing process part processes internal information concerning said image forming apparatus based on a message described in accordance with a predetermined message exchange protocol within the process request and generating the process response showing a process result.

## Description

### BACKGROUND OF THE INVENTION

### 1. Field of the Invention

The present invention generally relates to image forming apparatuses, and more particularly to an image forming apparatus in which instead of installing several driver software to a computer terminal of a user in order to utilize several image forming functions, the user only installs software supporting a standard Web service, that is capable of providing a Web service without depending a machine type and an operating system of the computer terminal, and that is capable of systematically processing process requests from other apparatuses.

### 2. Description of the Related Art

Recently, an image forming apparatus that includes the function of each of a printer, a copier, a facsimile, and a scanner in one chassis is known. Such a combined image forming apparatus provides a display, a printing part, an image-pickup part, etc. in one chassis, provides applications corresponding to the printer, the copier, the facsimile, and a scanner, and switches the applications so that the combined image forming apparatus itself operates as the printer, the copier, the facsimile, or the scanner.

However, in the combined image apparatus, when PCs (Personal Computers) use the printer, the copier, the facsimile, or the scanner, each of the PCs is required to install drivers corresponding to the printer, the copier, the facsimile, or the scanner. Also, software to install the PCs should support the machine type and the operating system of the PCs. In addition, a computer server connecting to the PCs through a network requires the similar requirements. Moreover, since a protocol and a process unit of a process are different between the computer server and the PCs, it is required to satisfy requirements of both the computer server and the PCs to realize a system providing use the printer, the copier, the facsimile, and the scanner through the network. Furthermore, in a conventional practice, a process is limited to a specific process provided by each driver of the printer, the copier, the facsimile, or the scanner.

### SUMMARY OF THE INVENTION

It is a general object of the present invention to provide image forming apparatuses for managing electronic data in which the above-mentioned problems are eliminated.

A more specific object of the present invention is to provide an image forming apparatus, in which instead of installing various driver software to a network apparatus of a user in order to use a plurality of image forming functions, independent of a machine type and an operating system of the network apparatus, the user can utilize various functions of the image forming apparatus as accessible and programmable application components by using various Web protocol that is an Internet standard, through a network, and the user can request Web service from a Web browser, and also, that can realize a distributed environment in which Web service exchanges with other Web service in the image forming apparatus itself or between the image forming apparatus and other apparatuses.

The above objects of the present invention are achieved by an image forming apparatus, including: a network communication controlling part controlling communications by a process request from a device connected through a network and a process response to the device; and a Web service providing process part processing internal information concerning said image forming apparatus based on a message described in accordance with a predetermined message exchange protocol within the process request and generating the process response showing a process result.

In the image forming apparatus according to the present invention, it is possible to provide the Web service, regardless of the machine type and the operating system of the device connected through the network.

The predetermined message protocol may be an SOAP (Simple Object Access Protocol).

The internal information shows information such as image information, status information concerning the image information, and control parameters for changing settings of the device and a network IP, or a like.

In a viewpoint in that the image forming apparatus provide the Web service, the image forming apparatus may further include an application including said Web service providing process part; a control service managing hardware resources used in an image forming process and controlling use in respect to the hardware resources in response to a use request from the application; and an operating system controlling said application and said control service.

The image forming apparatus according to the present invention includes function as a computer apparatus, can directly control the hardware resources used to form images, and can provide the Web service to the device connected through the network.

The above objects of the present invention are achieved by an image forming apparatus, including: a network communication controlling part controlling communications by a process request from a device connected through a network and a process response to the device; and a Web service providing process part processing internal information concerning said image forming apparatus based on a message described in a predetermined description format within the process request and generating the process response showing a process result.

The internal information shows information such as image information, it is possible to provide the Web service, instead of using the SOAP. The predetermined description format is a description format defined (For example, XML (extensible Markup Language)) between the image forming apparatus and the device.

### BRIEF DESCRIPTION OF THE DRAWINGS

Other objects, features, and advantages of the present invention will become more apparent from the following detailed description when read in conjunction with the accompanying drawings, in which:
FIG. 1 is a block diagram showing the functional configuration of the multi-functional business apparatus uniting various image forming functions according to a first embodiment of the present invention;
FIG.2 is a block diagram showing the hardware configuration of the Multi-functional business apparatus shown in FIG. 1, according to the first embodiment of the present invention;
FIG.3 is a diagram showing a network configuration where the Web service is provided, according to the first embodiment of the present invention;
FIG.4 is a diagram showing an example of the interface definition by the WSDL, according to the first embodiment of the present invention;
FIG.5 is a diagram showing an example of the interface definition by the WSDL, according to the first embodiment of the present invention;
FIG.6 is a flowchart diagram for explaining the automatic generation process generating a source code of the handler according to the first embodiment of the present invention;
FIG.7 is a flowchart diagram for explaining a code example of structure definitions generated by the automatic generation process, according to the first embodiment of the present invention;
FIG.8 is a flowchart diagram for explaining an example of a function for calling a Web service function, according to the first embodiment of the present invention;
FIG.9 is a diagram showing a first function configuration of the multi-functional business apparatus that provides Web service;
FIG. 10 is a diagram showing the example of a second functional configuration of the multi-functional business apparatus that provides the Web service;
FIG. 11A is a diagram showing an example of the HTTP request according to the first embodiment of the present invention and FIG. 11B is a diagram showing an example of the HTTP response according to the first embodiment of the present invention;
FIG. 12 is a diagram showing a third functional configuration of the multi-functional business apparatus that provides the Web service, according to the first embodiment of the present invention;
FIG.13 is a diagram showing a fourth functional configuration of the multi-functional business apparatus that provides the Web service, according to the first embodiment of the present invention;
FIG.14 is a diagram showing a fifth functional configuration of the multi-functional business apparatus that provides the Web service, according to the first embodiment of the present invention;
FIG. 15 is a block diagram showing a first functional configuration of the multi-functional business apparatus for providing a combined Web service, according to a second embodiment of the present invention;
FIG. 16 is a diagram showing an example of the document list described in the XML by the XML processing part, according to the second embodiment of the present invention;
FIG. 17 is a diagram showing an example of the HTTP request in accordance with the SOAP, according to the second embodiment of the present invention;
FIG. 18 is a diagram showing an example of the HTTP response by SOAP, according to the second embodiment of the present invention;
FIG. 19 is a diagram showing an example of a screen displayed at the network apparatus, according to the second embodiment of the present invention;
FIG. 20 is a diagram showing an example of a second functional configuration of the multi-functional business apparatus for providing the combined Web service, according to the second embodiment of the present invention;
FIG.21 is a block diagram showing the functional configuration of the multi-functional business apparatus uniting various image forming functions according to a third embodiment of the present invention;
FIG. 22 is a block diagram showing an example of a first functional configuration of the multi-functional business apparatus including the Web server, according to the third embodiment of the present invention;
FIG.23 is a block diagram showing the second functional configuration of the multi-functional business apparatus 1200 including the Web server, according to the third embodiment of the invention;
FIG.24 is a diagram showing an example of the third functional configuration of the multi-functional business apparatus including the Web server, according to the third embodiment of the present invention;
FIG.25 is a block diagram showing a first functional configuration of the multi-functional business apparatus including the Web server according to the fourth embodiment of the present invention;
FIG.26 is a diagram showing the document list described in the HTML by the HTML creating part, according to the fourth embodiment of the present invention;
FIG.27 is a diagram showing a second functional configuration of the multi-functional business apparatus including the Web server, according to the fourth embodiment of the present invention;
FIG 28 is a diagram showing a first functional configuration of the multi-functional business apparatus for providing Web service, according to the fifth embodiment of the present invention;
FIG.29 is a block diagram showing a second functional configuration of the multi-functional business apparatus including a combined Web service, according to the fifth embodiment of the present invention;
FIG.30 is a block diagram showing the hardware configuration of the information processing apparatus according to the sixth embodiment of the present invention;
FIG.31 is a diagram showing the first functional configuration of the information processing apparatus for providing the Web service, according to the sixth embodiment of the present invention; and
FIG.32 is a block diagram showing a second functional configuration of the information processing apparatus including a combined Web service, according to the sixth embodiment of the present invention.

### DESCRIPTION OF THE PREFERRED EMBODIMENTS

In the following, embodiments of the present invention will be described with reference to the accompanying drawings.

### [First Embodiment]

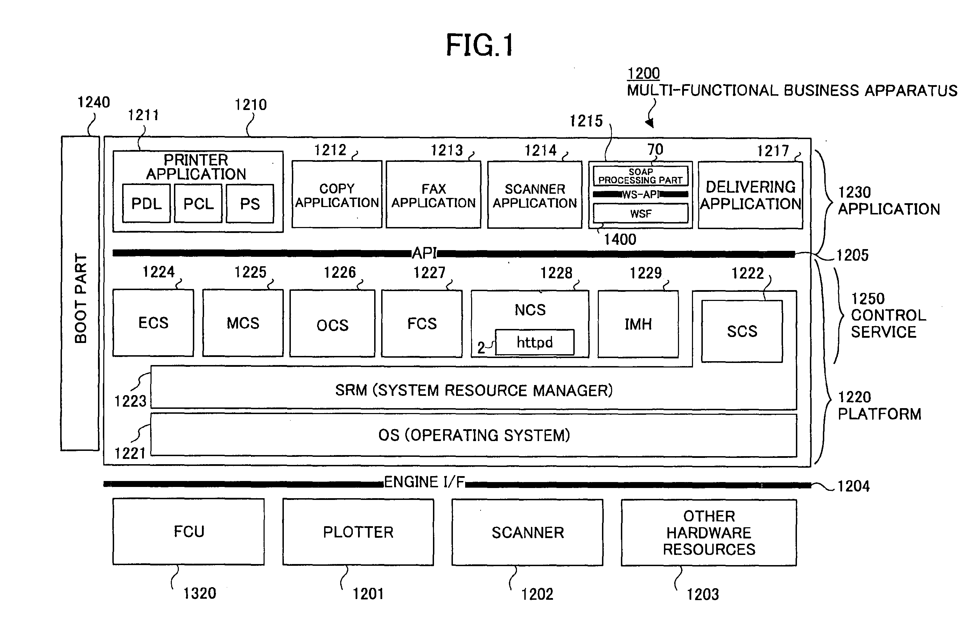

An image forming apparatus uniting various image forming functions (hereinafter, called a multi-functional business apparatus) has a functional configuration as shown in FIG. 1. FIG. 1 is a block diagram showing the functional configuration of the multi-functional business apparatus uniting various image forming functions according to a first embodiment of the present invention.

In FIG. 1, a multi-functional business apparatus 1200 includes a plotter 1201, a scanner 1202, an FCU (Fax Control Unit) 1320, and other hardware resources, as well as a software group 1210 and a boot part 1240.

The boot part 1240 is first activated when the multi-functional business apparatus 1200 is turned on. Then, a platform 1220 and an application 1230 are started.

The platform 1220 interprets the process request from application 1230, and manages the control service 1250 (described later) which generates an acquisition requirement of acquiring hardware resources, and at least one hardware resource. The platform 1220 includes a system resource manager (SRM (System Resource Manager) 1223) that mediates the acquisition requirement from the control service 1250, and an OS (Operating System) 1221.

This control service 1250 is formed of a plurality of services modules. In detail, SCS (System Control Service) 1222, ECS (Engine Control Service) 1224, MCS 1225 (Memory Control Service) , OCS 1226 (Operation panel Control Service), FCS 1227 (FAX Control Service), NCS 1228 (Network Control Service) , IMH (Imaging Memory Handler) 1229. In addition, this platform 1220 includes an application program interface that can receive the process request from the above-mentioned application by functions defined beforehand.

The OS 1221 is an operating system such as UNIX ™ and executes the platform 1220 and software of the application 1230 in parallel as a process. By using UNIX™ as an open source, a program can be secured, an application to a network can be realized, and a source code of UNIX™ can be easily obtained. In addition; royalty of the OS 1221 and TCP/IP are not required. Also, an outsourcing can be easily realized.

SRM 1223 as well as SCS 1222 controls a system and manages hardware resources via an engine interface 1204 and a like, mediates a request from upper layers utilizing hardware resources: an engine part such as the plotter 1201, the scanner 1202, the FCU 1320, and the like, a memory, an HDD file, host I/Os (a centro I/F, a network I/F, an IEEE1394 I/F, RS232C I/F, and a like), and control the hardware resources based on the request.

In detail, the SRM 1223 determines whether or not a hardware resource respective to the request is available to a user (that is, the hardware resource is being used for another request). When the hardware resource is available, the SRM 1223 informs the upper layer conducing the request that the hardware resource respective to the request is available to use. In addition, the SRM 1223 may conduct a utilization scheduling of the hardware resources in respect to the request sent from the upper layers, and directly conducts an indication of the request (for example, operations for conveying paper sheets or forming an image by a printer engine (the plotter 1201), an operation of securing memory, an operation of generating a file, or a like).

The SCS 1222 conducts a plurality of functions:
an application management (function 1), an operation panel control (function 2), a system screen display (a job list screen, a counter display screen, and a like) (function 3),
an LED display (function 4) , a resource management (function 5), an interruption application control (function 6), and a like. In detail, the application management (function 1) conducts processes for registering an application and informing information related to the registration of the application to other applications. The operation panel control (function 2) conducts an exclusive control for a use right of the operation panel in respect with the applications. The system screen display (function 3) displays a warning screen corresponding to a state of the engine part, in response to the request from the application having the use right of the operation panel. The LED display (function 4) controls a display of a system LED such as a warning LED, an application key, and a like. The resource management (function 5) provides service due to the exclusive control of the engine resources (the scanner 1324, a stapler (not shown), and a like) that should be exclusive when the ECS 1224 (application) executes a job. The interruption application control (function 6) conducts a control or service for a priority operation in respect to a special application.

The ECS 1224 controls the engine part such as the plotter 1201, the scanner 1202, other hardware resources 1203, and a like, and conducts an image reading operation and a printing operation, a state informing operation, a jam recovering operation, and a like.

The MCS 1225 conducts a memory control. In detail, the MCS 1225 obtains and releases an image memory, utilizes a hard disk device (HD), compresses and expands an image data.

The OCS 1226 is a module for controlling the operation panel as a communicating part between an operator (user) and a controller of the multi-functional business apparatus 1200. The OCS 1226 conducts a process for informing the controller an event occurred by a key operation of the operator, a process for providing library functions in order for each application to build a GUI, a process for managing GUI information for each application, and a process for reflecting a display to the operation panel.

The FCS 1227 provides the API 1205 for a facsimile sending/receiving operation to ¥ from each application using a PSTN/ISDN, for a registering/quoting operation in respect to various facsimile data managed in a BKM (BacKup SRAM), for a facsimile reading operation, for a facsimile receiving and printing operation, and for an integrated sending/receiving operation.

The NCS 1228 is a module group for providing service in order for the application requiring a network I/O to share the network I/O. The NCS 1228 distributes data received in accordance with each protocol from the network to each application, and mediates for the applications when the application send data to the network.

For example, the NCS 1228 includes at least an httpd (HyperText Transfer Protocol Daemon) 2 for communicating with apparatuses connected through the network.

In this embodiment, NCS 1228 controls data communications with a network apparatus, to which the multi-functional apparatus provides a Web service through the network, in accordance with a HTTP (Hypertext Transfer Protocol) by HTTP (Hypertext Transfer Protocol) 2. NCS 1228 executes a plurality of Web services necessary for a process indicated in specified by the HTTP request header, by a function call. Then, NCS 1228 sends the network apparatus a process result produced by the plurality of Web services by a HTTP response. For example, the Web service conducts a process in accordance with a message described in XML (extensible Markup Language).

The IMH 1229 maps image data from a virtual memory area to a physical memory area. When a process is activated, the IMH 1229 conducts a system call, maps the virtual memory area for the process, and releases the virtual memory area mapped for the process when the process is terminated.

The application 1230 includes a plurality of applications: a printer applications 1211 for a printer having a Page Description Language (PDL) , PCL and Post Script (PS) , a copy application 1212 for a copier, an FAX application 1213 for a facsimile, a scanner application 1214 for a scanner, a Web service process application 1215 for a Web service, a delivery application 1217 for delivering information concerning an image form.

Since each of the applications 1211 through 1217 is executed using each process on the platform 1220, a screen display control program, which conducts a screen control, a key operation control, a job generation, and a like, is a main function. In addition, a new application can be loaded by the network to which the NCS 1228 is connected. Also, each application can be deleted and added.

The Web service process application 1215 includes a SOAP processing part 70 for exchanging messages in accordance with a SOAP (Simple Object Access Protocol), a Web service function (WSF) 1400 for conducting a predetermined process by using the control service 1250 through an API (Application Program Interface) and providing a process result trough a WS-API (Web Service Application Program Interface) as the Web service.

As described above, the multi-functional business apparatus 1200 has the platform 1220 centralize and manage necessary processes to be shared with the applications.

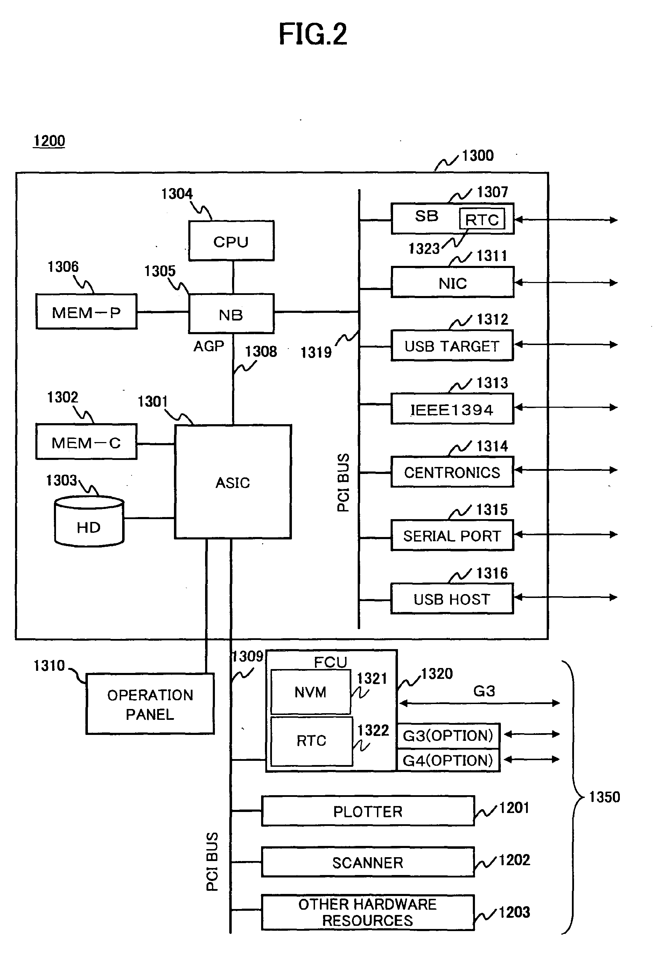

Next, a hardware configuration of the multi-functional business apparatus 1200 will be described. FIG.2 is a block diagram showing the hardware configuration of the Multi-functional business apparatus shown in FIG. 1, according to the first embodiment of the present invention. As shown in FIG.2, in the Multi-functional business apparatus 1200, an engine part 1350 including an operation panel 1310, a FCU (Fax Control Unit) 1320, a plotter 1201, a scanner 1202, and other hardware 1203, are connected to an ASIC (Application Specified IC) 1301 of a controller 1300 by a PCI (Peripheral Component Interconnect) bus 1309. FCU 1320 includes an NVM (non-volatile memory) 1321 for storing received facsimile data, and an RTC (Real Time Clock) 1322 for measuring the time within FCU 1320, and facsimile data are usually sent and received according to a G3 standardization. FCU 1320 may further include an optional G3 standardization and an optional G4 standardization.

The controller 1300 connects the ASIC 1301 to a MEM-C 1302 and a HD (Hard Disk) 1303, and connects the ASIC 1301 to a CPU 1304 via an NB 1305 of a CPU chip set. Because the CPU 1304 itself is not disclosed.

It should be noted that the ASIC 1301 is connected to the NB 1305 via an AGP (Accelerated Graphics Port) 1308, instead of simply connecting via the PCI bus 1309. Because a connection via the PCI bus 1309, which is slower, ends up to too low performance to execute and control a plurality of processes forming the platform 1220 and the application 1230 shown in FIG. 1.

The CPU 1304 controls the entire Multi-functional business apparatus 1200. In detail, the CPU 1304 activates and executes the SCS 1222, the SRM 1223, the ECS 1224, the MCS 1225, the OCS 1226, the FCS 1227, the NCS 1228, and the IMH 1229, all of which form the platform 1220 on the OS 1221, as processes, respectively. Also, the CPU 1304 activates and executes the printer application 1211, the copy application 1212, the FAX application 1213, the scanner application 1214, the Web service process application 1215, and the delivery application 1217.

The NB 1305 serves as a bridge to connect the CPU 1304 with an MEM-P 1306, an SB 1307, and the ASIC 1301, respectively. The MEM-P 1306 is a system memory used as a drawing memory of the Multi-functional business apparatus 1200. The MEM-C 1302 serves as a local memory used as an image buffer for a copy and a coding buffer. The ASIC 1301 is an IC (Integrated Circuit) used for the image process including hardware elements.

NB 1305 connects with the SB 1307 through the PCI bus 1319. Also, NB 1305 connects with NIC 1311 (Network Interface Card) for controlling network communication, a USB (Universal Serial Bus) target 1312 capable of receiving data as a USB disk, an IEEE1394 1313 to be connected by a dedicate cable for IEEE1394, a centronics 1314 to be connected by a parallel cable, a serial port 1315 to be connected by a serial cable, a USB host 1316 capable of sending and receiving a large amount of image data by connecting with another USB target (for example, a personal computer).

The SB 1307 is a bridge to connect the NB 1305 with a ROM (Read Only Memory) , a PCI device, and a peripheral device. SB 1307 includes an RTC (Real Time Clock) 1323 which measures a time in the controller 1300. Moreover, SB 1307 includes a USB host inside. For example, SB 1307 can receive image data by connecting a camera that supports a USB connection. Moreover, SB 1307 can also receive data from other USB targets.

In the multi-functional business apparatus 1200, data are sent and received through a plurality of ports: the SB 1307, the NIC 1311, the USB target 1312, the IEEE1394 1313, and the centronics 1314, the serial port 1315, the USB host 1316, the G3 standard, the G3 option, and G4 option of the FCU 1320. Then, the data are accumulated and are managed unitary in the HDD 1303.

The HDD 1303 is storage to store image data, programs, font data, forms, and a like. The operation panel 1310 is an operation part to receive an input operation from the operator and display information for the operator.

Therefore, in the ASIC 1301, a RAM interface to connect to the MEM-C 1302 and a hardware interface to connect to the HDD 1303 are provided. When the image data is input or output to or from the MEM-C 1302 or the HDD 1303, the ASIC 1301 switches to the RAM interface or the hardware interface.

The AGP 1308 is a bus interface for a graphic accelerator card, which is provided to improve a speed of a graphic process. The AGP 1308 can realize improved speed of the graphic accelerator card by directly accessing the system memory by a higher throughput.

In the following, various functional configurations realizing the Web service will be described according to the first embodiment of the present invention, in which the multi-functional business apparatus 1200, which has the functional configuration shown in FIG.1 and the hardware configuration shown in FIG.2, provides the Web service. It should be noted that the Web service means that the multi-functional business apparatus 1200 conducts a predetermined process in response to a service request indicated by a HTTP request sent from the network apparatus and sends a process result indicated by a HTTP response. Body parts of the HTTP request and the HTTP response are described in an XML (extensible Markup Language).

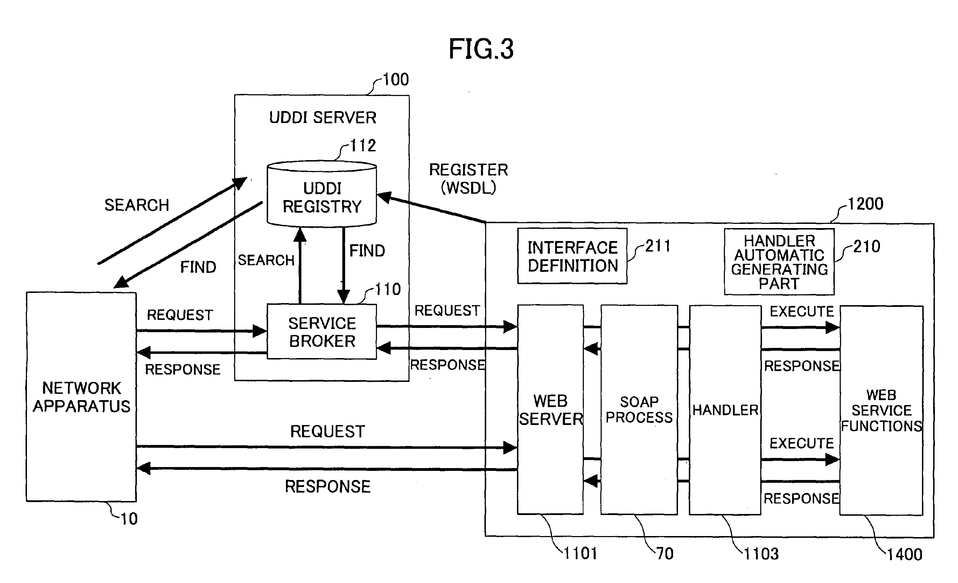

A method for providing the Web service from the multi-functional business apparatus 1200 through the networks will be described in reference to FIG. 3. FIG.3 is a diagram showing a network configuration where the Web service is provided, according to the first embodiment of the present invention. In FIG.3, in order to schematically explain the method for providing the Web service, a detailed explanation of the functional configuration is omitted.

In FIG.3, the multi-functional business apparatus 1200 includes a Web server 1101 for controlling communications with the network apparatus 10, a SOAP process 70 for exchanging messages of a request and a response of the Web service in accordance with a SOAP with the network apparatus 10, a handler 1103 for executing the Web service functions 1400 based on an interface definition 211 and receiving the response from the Web service function 1400, the Web service function (WSF) 1400 executed by the Web server 1101 for providing the Web service by executing a process. The SOAP processing part 70 may be included in the handler 1103 in a functional configuration described later.

The interface definition 211 is a WSDL (Web Service Description Language) which shows the service specification of the Web service registered to the UDDI server 100, the handler 1103 realizes that Web service specification described by the WSDL. The multi-functional business apparatus 1200 may include a handler automatic generating part 210 for automatically generating the handler 1103 based on the interface definition 211.

The UDDI server 100 manages the WSDL that shows the service specification of the Web service, which is conducted by the multi-functional business apparatus 1200, received from the multi-functional business apparatus 1200. The UDDI server 100 includes a function for providing the WSDL discovered in response to a retrieval request, and also includes a service broker 110 for intermediating with the multi-functional business apparatus 1200 and the network apparatus 10, and a UDDI registry 112 for managing the WSDL registered from the multi-functional business apparatus 1200.

A case in which the Web service requested by the network apparatus 10 is provided by the service broker 110 will be explained. In response to a request of the Web service from the network apparatus 10, the service broker 110 searches WSDL corresponding to the request from the UDDI registry 112. Then, the service broker 110 sends the request message showing the request of the Web service to the multi-functional business apparatus 1200 in accordance to the SOAP based on the Web service specification described by the WSDL discovered by the UDDI registry 112. When the Web server 1101 of the multi-functional business apparatus 1200 receives the request of the Web service, a request message is processed by the SOAP processing part 70, and the handler 1103 executes the Web service function 1400 which conducts the process according to the message. When the handler 1103 receives the response from the Web service function 1400, the response is processed by the SOAP processing part 70 as a response message in accordance with the SOAP, and is sent to the service broker 110 by the Web server 1101.

The service broker 110 sends the response to the network apparatus 10, when the service broker 110 receives the response message showing the response of the Web service from the Web server 1101. Thus, the network apparatus 10 can request the Web service of the multi-functional business apparatus 1200 by the service broker 110 mediating between the network apparatus 10 and the multi-functional business apparatus 1200, instead of obtaining the WSDL.

Moreover, the network apparatus 10 may obtain the WSDL corresponding to the Web service, which is desired by the network apparatus 10, from the UDDI server 100. In this case, the network apparatus 10 makes the UDDI server 100 to search for the WSDL corresponding to the desired Web service, and obtains the WSDL that the UDDI server 100 discovers in the UDDI registry 112. And the network apparatus 10 sends the request message showing the request of the Web service to the multi-functional business apparatus 1200 in accordance with the SOAP based on the specification of the Web service described by the WSDL.

When the Web server 1101 of the multi-functional business apparatus 1200 receives the request of Web service, after the same process is conducted by the SOAP processing part 70 and the handler 1103, the Web service function (WSF) 1400 which conducts the process according to the request message which shows the request of Web service is activated. When the Web server 1101 receives the response through the process by the handler 1103 and the SOAP processing part 70, the Web server 1101 sends the response message which shows the response of the Web service in accordance with the SOAP to the network apparatus 10. As described above, the network apparatus 10 requests a desired Web service of the multi-functional business apparatus 1200 according to the SOAP based on an obtained WSDL.

Moreover, in the multi-functional business apparatus 1200, the Web service function (WSF) 1400 may be configured so that the WSDL can describe. That is, the request of the Web service based on the WSDL can be processed and also, the request of the Web service in accordance with a predetermined protocol defined between the network apparatus 10 and the multi-functional business apparatus 1200 can be processed.

In the network configuration where the Web service is provided, a case in which the SOAP that is a message exchange protocol is used is described above. However, the message exchange protocol capable of providing the Web service is not limited to the SOAP. A predetermined message exchange protocol defined between the multi-functional business apparatus 1200 and the network apparatus 10 can be applied to realize the Web service.

Also, by automatically generating the handler 1103 based on the interface definition 211 in the multi-functional business apparatus 1200, the Web service function (WSF) 1400 can be automatically generated based on the WSDL describing the Web service specification registered in the UDDI server 100. In this case, based on the WSDL newly registered in the UDDI server 100, the multi-functional business apparatus 1200 itself can dramatically generate the handler 1103 if required. For example, an operation environment of the handler 1103 is made to be the environment where a Java™ program can be executed. Alternatively, the handler automatic generating part 210 can be used in a program development environment, and then, an object code of the handler 1103 generated in the program development environment may be mounted in the multi-functional business apparatus 1200. In this case, it is possible to reduce steps necessary to develop the handler 1103.

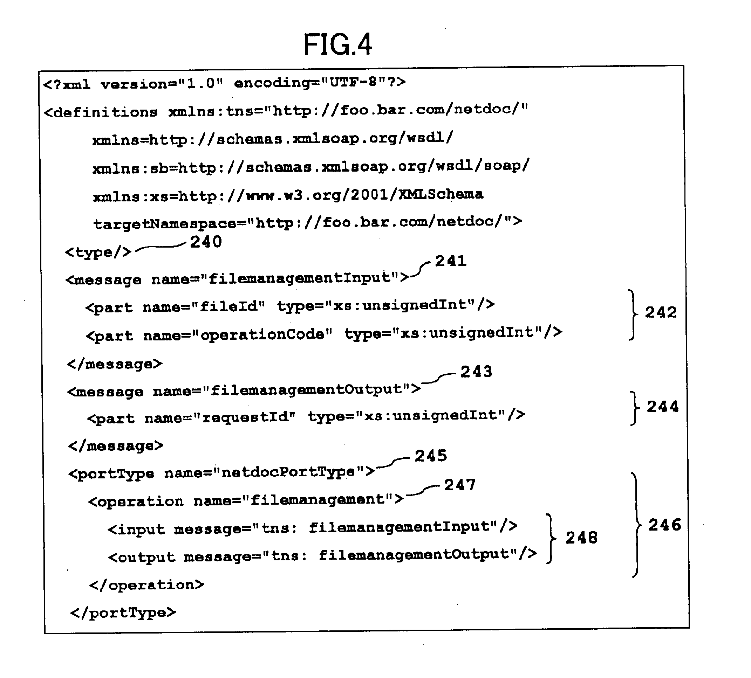

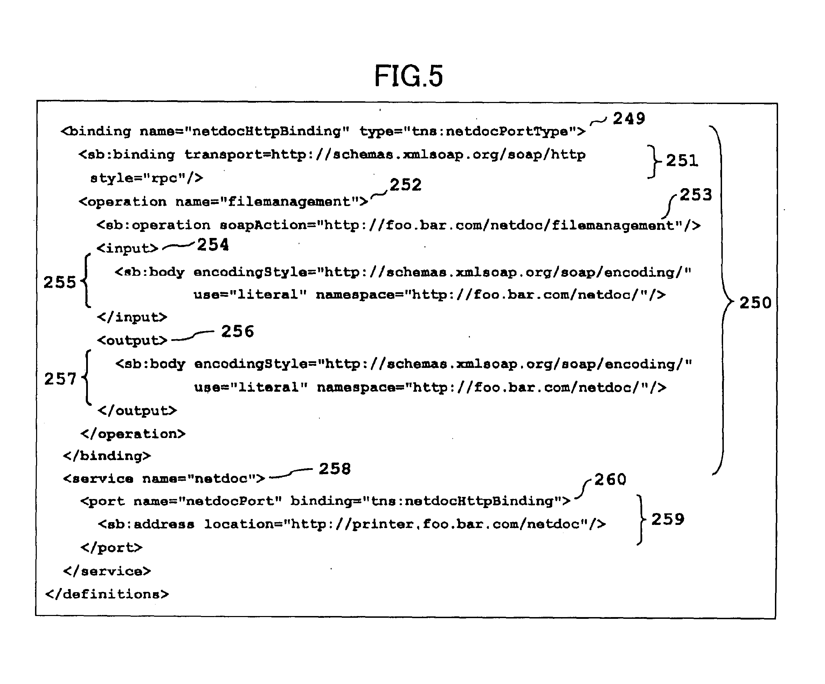

An automatic generation process conducted by the handler automatic generating part 210 for generating the handler 1103 will be described with reference to FIG.4 through FIG.8. For example, the Web service function 1400 conducts a file management process and then, provides a result of the file management as the Web service. In this case, for example, the interface definition 211 for the Web service function 1400 is described as shown in FIG. 4 and FIG. 5. A request message and a response message are described in XML.

FIG.4 and FIG.5 are diagrams showing an example of the interface definition by the WSDL, according to the first embodiment of the present invention. In FIG.4, a <type> tag 240 defining a data type defines a data type to describe a message and sets a schema definition. In this example, only </type> is described to show that the data type is a basic type of a schema of the XML.

In a definition information 242 defined by a <message> tag 241 (<message name="filemanagementInput">) defining a message format, by <part name="fileId" type="xs:unsignedInt"/> and <part name="operationCode" type="xs:unsignedInt"/>, an input parameter (filemanagementInput) of a file management request defines so as to be formed by a "fileId" being a unsigned integer (unsignedInt) and a "operationCode" being a unsigned integer (unsignedInt). In a definition information 244 deined by a <message> tag 243 (<message name="filemanagementOutput">) defining the message format, by <part name="requestId" type="xs:unsignedInt"/>, an output parameter (filemanagementOutput) of the file management request is defined so as to be formed by a "requestId" being a unsigned integer (unsignedInt) by description.

In definition information 246 defined by a <portType> tag 245 (<portType name="netdocPortType">) defining an operation set (operation), an input message and an output message are defined for every operation. For example, in a definition information 248 defined by a <operation> tag 247 (<operation name="filemanagement">), the input message is defined to be a "filemanagementInput" by <input message="tns:filemanagementInput"/> and the output massage is defined to be a "filemanagementOutput" by <output message="tns:filemanagementOutput"/>. In this case, only a file management (filemanagement) is defined.

In a definition information 250 defined by a <binding> tag 249 (<binding name="netdocHttpBinding"type=" tns:netdocPortType">) mapping the operation and the message defined by the <portType> tag 245 to a specific protocol and a specific data format, for a port type defined by "netdocPortType", a mapping method is defined to map the operation and the message to a protocol and a data format.

In the definition information 250, by a <sb:binding> tag 251 (<sb:binding transport="http://schemas.xmlsoap.org/soap/http" style="rpc"/>) , usage of RPC (Remote Procedure Call) by SOAP HTTP binding is defined. By a <operation> tag 252 (<operation name="filemanagement">), a SOAP message concerning the file management (filemanagement) is defined as follows:

First, by a <sb:operation> tag 253 (<sb:operation soapAction="http://foo.bar.com/netdoc/filemanagement"/>), a value of a SOAPAction header is defined as "http://foo.bar.com/netdoc/filemanagement" when the file management (filemanagement) is requested.

Next, in a definition information 255 defined by a <input> tag 254, a "<sb:body encodingStyle="http://schemas.xmlsoap.org/soap/encoding/" use="literal" namespace="http://foo.bar.com/netdoc/"/>", an encoding form at the time of an input is defined. In a definition information 257 defined by a <output> tag 256, a "<sb:body encodingStyle="http://schemas.xmlsoap.org/soap/encoding/" use="literal" namespace="http://foo.bar.com/netdoc/"/>", the encoding form at the time of an output is defined.

And in a definition information 259 defined by <service> tag 258 (<service name="netdoc">) defining a set of nodes of the network, by a <port> tag 260 (<port name="netdocPort"binding=" tns:netdocHttpBinding">), a "netdocPort" to be one node of the network is defined and by a "<sb:address location="http://printer.foo.bar.com/netdoc"/>", an address of the node of the network is defined. That is, a binding of a service name "netdoc" is "netdocHttpBinding" and a URL (Uniform Resource Locator) of service is defined by "http://printer.foo.bar.com/netdoc."

As described above, by the interface definition 211 defined by the WSDL, the data type is defined, the operation is defined, and the URL and the SOAPAction header are defined.

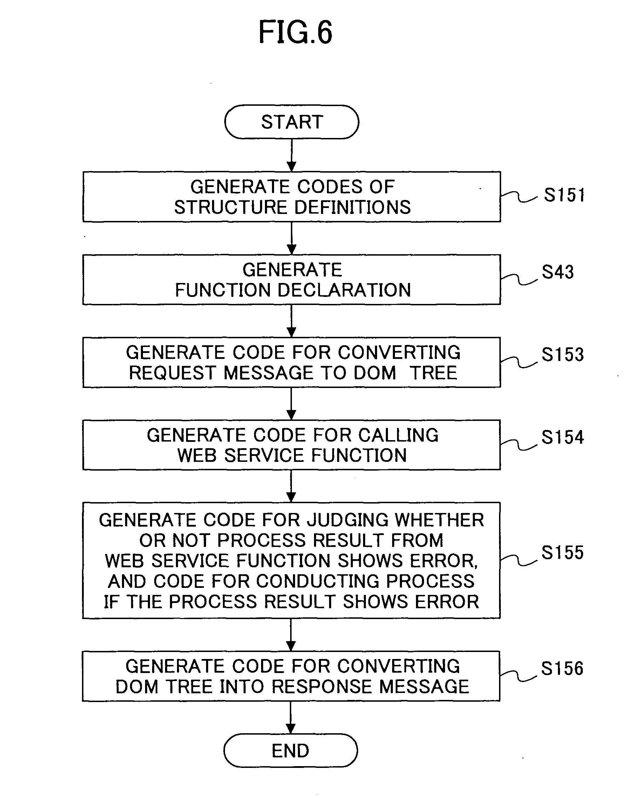

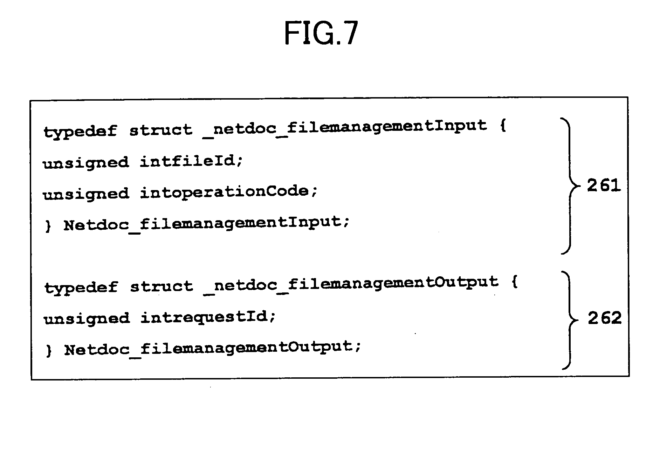

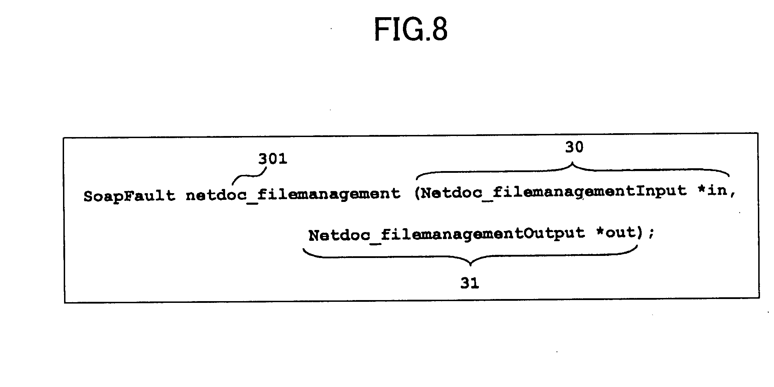

Based on the interface definition 211, the automatic generation process conducted by the handler automatic generating part 210 will be described based on a flowchart shown in FIG.6 with reference to FIG. 7 and FIG.8. FIG.6 is a flowchart diagram for explaining the automatic generation process generating a source code of the handler according to the first embodiment of the present invention. FIG. 7 is a flowchart diagram for explaining a code example of structure definitions generated by the automatic generation process, according to the first embodiment of the present invention. FIG.8 is a flowchart diagram for explaining an example of a function for calling a Web service function, according to the first embodiment of the present invention.

In FIG.6, the handler automatic generating part 210 generates codes of structure definitions (step S151). In this case, the handler automatic generating part 210 generates a code defining a structure "Netdoc_filemanagementInput" used as an argument 30, which is input to a file management function 301 executing a file management process shown in FIG.8. A code like "typedef struct_netdoc_filemanagementInput" is generated as a declaration. Subsequently, based on the definition information 242 defined by the <message> tag 241 in FIG. 4, a code 261 shown in FIG. 7 is generated. That is, in the definition information 242 in FIG. 4, a code like "unsigned int fileId;" is generated as a unsigned integer by type="unsignedInt" from element "fileId". Moreover, A code like "unsigned int operationCode;" is generated as a unsigned integer by type="unsignedInt" from an element "operationCode" by "name="operationCode"". Then, a code is generated in that this structure definition "_nnetdoc_filemanagementInput" is applied to the structure "Netdoc_filemanagementInpput". A structure for an input is defined by generating a code 261.

Next, a code is generated in that a structure "Netdoc_filemanagementOutput" used as an argument 31 output from the file management function 301 is defined. A code like "typedef struct_netdoc_filemanagementOutput" is generated as a declaration. Subsequently, based on the definition information 242 defined by the <message> tag 241 of FIG. 4, a code 262 shown in FIG. 7 is generated. In the definition information 244, a code like "unsigned int requestId;" is generated as a unsigned integer by "type="unsignedInt"" from the element "requestId" by name="requestId." Then, a code is generated in that this structure definition "_netdoc_filemanagementOutput" is applied to the structure "Netdoc_filemanagementOutput."

The handler automatic generation part 210 generates the function declaration for calling the file management function 301 (step S152). In this case, based on the definition information 248 defined by the <operation> tag 247 of FIG.4, for example, in order to call the file management function 301, a code like "SoapFault netdoc_filemanagement; (Netdoc_filemanagementInput *in and Netdoc_filemanagementOutput *out)" is generated.

The handler automatic generation part 210 generates a code for converting the request message into a DOM (Document Object Model) tree that shows a relation between tags by a tree structure (step S153). A code for calling the Web service function 1400 is generated (step S154). That is, the handler automatic generation part 210 generates a code of the file management function 301 using the code of the function declaration generated at step S151.

Subsequently, the handler automatic generation part 210 generates a code for judging whether or not a process result from the Web service function 1400 shows an error, and a code for conducting a process if the process result shows the error (step S155). Moreover, the handler automatic generation part 210 generates a code for converting the DOM tree into the response message (step S156).

Consequently, the handler automatic generation part 210 can generate the handler 1103 based on the interface definition 211. As described above, since the source code that realizes the handler 1103 can be automatically generated, it is not required for a programmer to make a DOM program that is simple but repeated many times. Accordingly, it is possible to develop software with high quality within a short time. In addition, since an input and an output of the Web service function 1400 can be made into the form that is easily developed by programming language, the programmer is not required to have knowledge of the XML and the HTTP to develop the Web service function 1400. Accordingly, it is possible to reduce a cost required to educate the programmer. Furthermore, even if it is needed to add or change a protocol, it is possible to automatically generate the source code of the handler 1103 by changing the interface definition 211. Therefore, higher maintainability can be realized.

In the following, a functional configuration of the multi-functional business apparatus 1200 that can provide the Web service will be described explaining the multi-functional business apparatus 1200 and the network apparatus 10.

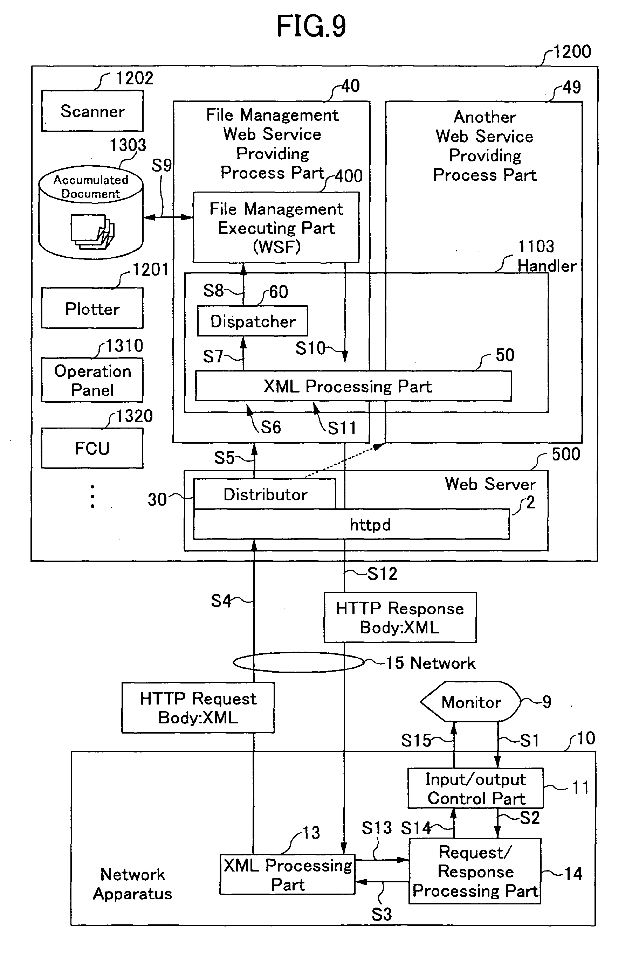

First, based on the message described in the XML, instead of using SOAP which is the message exchange protocol, the multi-functional business apparatus 1200 that provides the Web service the network apparatus 10 connected through the network will be described. FIG.9 is a diagram showing a first function configuration of the multi-functional business apparatus that provides Web service. In FIG. 9, only main processing parts are illustrated among the processing parts of the multi-functional business apparatus 1200 shown in FIG. 1, and other processing parts are omitted.

In FIG.9, the multi-functional business apparatus 1200 conducts a communication control in accordance with the HTTP and includes a Web server 500 for distributing a process to an internal Web service providing process part, a file management Web service providing process part 40 and another Web service providing process part 49 as a plurality of Web service providing process part, a handler 1103 for distributing a process, a scanner 1202, a HDD 1303, a plotter 1201, an operation panel 1310, a FAX control-unit 1530, and a like. The Web server 500 includes a httpd 2 for conducting the communication control in accordance with the HTTP, a distributor 30 for distributing a process to the Web service providing process part corresponding to the HTTP request, and a like.

For example, the file management Web service providing process part 40 includes a file management executing part 400 for controlling the file management, such as a document accumulated to the HDD 1303, as the Web service function 1400 (FIG.3) that executes the Web service.

As shown in FIG.3, based on the WSDL describing the Web service function of each of Web service providing process parts 40 and 49 provided by the interface definition 211, the handler 1103 is a processing part generated by the handler automatic generation part 210 and includes a XML processing part 50 shared with a plurality of Web service providing process parts 40 and 49, and a dispatcher 60 for dispatching the process concerning the Web service to the file management executing part 400 based on a process message that shows contents of a process of the Web service analyzed by the XML processing part 50.

In the multi-functional business apparatus 1200, for the sake of convenience, only the file management Web service providing process part 40 and another Web service providing process part 49 are shown as the plurality of Web service providing process parts. However, the multi-functional business apparatus 1200 can further include a plurality of Web service providing process parts. In this case, the handler 1103 includes a plurality of dispatchers 60 for dispatching the process to each executing part of the plurality of Web service providing process parts. The XML processing part 50 is shared with the plurality of Web service providing process part in the handler 1103.

Moreover, the network apparatus 10 connected to the multi-functional business apparatus 1200 through a network 15 controls input data from an input unit, such as a keyboard or a mouse, and includes an input/output control part 11 for controlling output data displayed on a monitor 9, an XML processing part 13 for processing the contents of the process of the Web service to the multi-functional business apparatus 1200 and the process result of the Web service from the multi-functional business apparatus 1200 by the XML, a request/response processing part 14 for generating the request and analyzing the response in accordance with the HTTP. It is shown that the HTTP request requests the Web service by the data communication in accordance with the HTTP, and the HTTP response indicates the process result of this Web service. Moreover, in the first functional configuration, body parts of the HTTP request and the HTTP response show an example described in the XML.

A user using such the network apparatus 10 requests a desired Web service of the multi-functional business apparatus 1200 from a screen for requesting of the multi-functional business apparatus 1200 (step S1). In response to a request of the Web service from the user, the input/output control part 11 sends the request data to the request/response processing part 14 (step S2). The request/response processing part 14 generates the HTTP request based on the request data from the input/output control part 11 (step S3). And the XML processing part 13 describes the contents of the process to the body part of the HTTP request in the XML. Then, the HTTP request is sent to the multi-functional business apparatus 1200 through the network 15 (step S4).

When the Web server 500 of the multi-functional business apparatus 1200 receives the HTTP request by the httpd 2, the Web server 500 distributes the HTTP request to the Web service providing process part, which is indicated by the header of the HTTP request, by the distributor 30 (step S5). For example, when the file management Web service providing process part 40 is indicated by the header of the HTTP request, the file management Web service providing process part 40 is called by the distributor 30.

In the file management Web service providing process part 40, the handler 1103 obtains the contents of the process from the body part described in the XML by the XML processing part 50 of the HTTP request (step S6). Then, the dispatcher 60 receives of the obtained contents of the process (step S7). The dispatcher 60 distributes the process by the Web service to the file management executing part 400 in accordance to the contents of the process (step S8). The file management executing part 400 executes the process to the HDD 1303 in accordance to the contents of the process, and obtains the process result (step S9). For example, the document is added, updated, or deleted in accordance with the contents of the process. The file management executing part 400 sends the process result to the XML processing part 50 (step S10). And the XML processing part 50 generates the body part of the HTTP response that shows the process result in the XML (step S11). Then, the Web server 500 which received the HTTP response from the file management Web service providing process part 40 sends the HTTP response, in which the body part the process result is described in the XML, through the httpd 2 to the network apparatus 10 (step S11).

When the HTTP response is received by the network apparatus 10, the XML processing part 13 analyzes the body part of the HTTP response, and obtains the process result (step S13). The request/response processing part 14 passes the obtained process result to the input/output control part 11 as output data displayed on the monitor 9 (step S14). And the input/output control part 11 is controlled to display the output data on the monitor 9 (step S15).

In the first functional configuration, by describing the contents of the process in the body part of the HTTP request in accordance with a description format by the XML defined beforehand, the network apparatus 10 can request the Web service from a remote place in respect to a multi-functional business apparatus 1200. By describing process result in the body part of the HTTP response in accordance with a description format by the XML defined beforehand, the multi-functional business apparatus 1200 can provide the Web service to the network apparatus 10 located in the remote place. The multi-functional business apparatus 1200 can also provide the Web service to a plurality of network apparatuses 10 through the network 15.

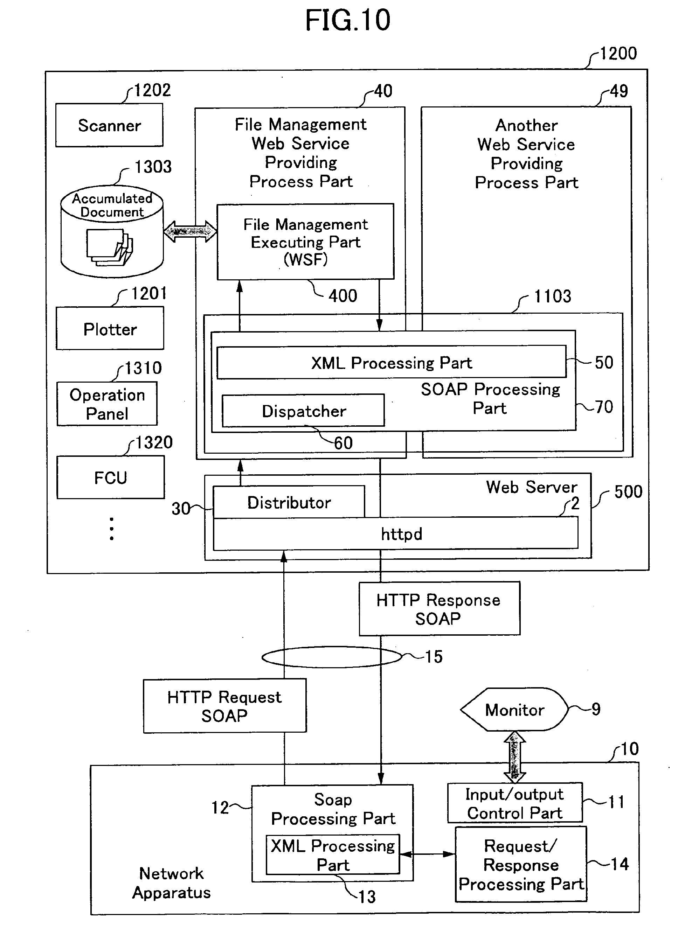

Next, an example of another functional configuration of the multi-functional business apparatus 1200 that can provide the Web service in accordance with the SOAP will be described. In the following, each Web service providing process part illustrated in FIG.10 is a function that executes the process (service) described based on the service specification described by the WSDL.

In the following, the example of the functional configuration of the multi-functional business apparatus 1200 that provides the Web service using the SOAP will be described. FIG. 10 is a diagram showing the example of a second functional configuration of the multi-functional business apparatus that provides the Web service. In FIG. 10, parts that are the same as the ones in FIG.9 are indicated by the same reference numerals and the explanation thereof will be omitted. Also, a process flow in FIG. 10 is similar to that in FIG.9 and the explanation thereof will be omitted. In the second functional configuration shown in FIG. 10, in the handler 1103 corresponding to the file management Web service providing process part 40 and a plurality of Web service providing process parts of other Web service providing process-part 49, the multi-functional business apparatus 1200 includes a SOAP processing part 70 shared with a plurality of Web service providing process parts. In a different point from the first functional configuration, the XML processing part 50 and a dispatcher 60 are included in the SOAP processing part 70. Moreover, a network apparatus 10 includes a SOAP processing part 12 for exchanging messages to the multi-functional business apparatus 1200 in accordance to the SOAP. In another different point from the first functional configuration, the XML processing part 13 that processes the message described in the XML is included in the SOAP processing part 12.

In the multi-functional business apparatus 1200, The SOAP processing part 70 analyzes a header of a HTTP request, and distributes a process by the dispatcher 60. The SOAP processing part 70 obtains the contents of the process from the message described in the XML in the body part of a HTTP request, by the XML processing part 50. For example, the dispatcher 60 distributes the process, which is to be conducted by the Web service, to the file management executing part 400. Then, when the SOAP processing part 70 receives the process result from the file management executing part 400 which executed the process, the SOAP processing part 70 describes the process result in the XML by the XML processing part 50 to set the process result the body part of the HTTP request. The HTTP request is sent to the network apparatus 10 in accordance with the SOAP.

In the second functional configuration, the dispatcher 60 may be included in the XML processing part 50.

As described above, in the multi-functional business apparatus 1200 and the network apparatus 10 to which the SOAP is applied, the network apparatus 10 can realize RPC (Remote Procedure Call) using the XML in respect to the multi-functional business apparatus 1200.

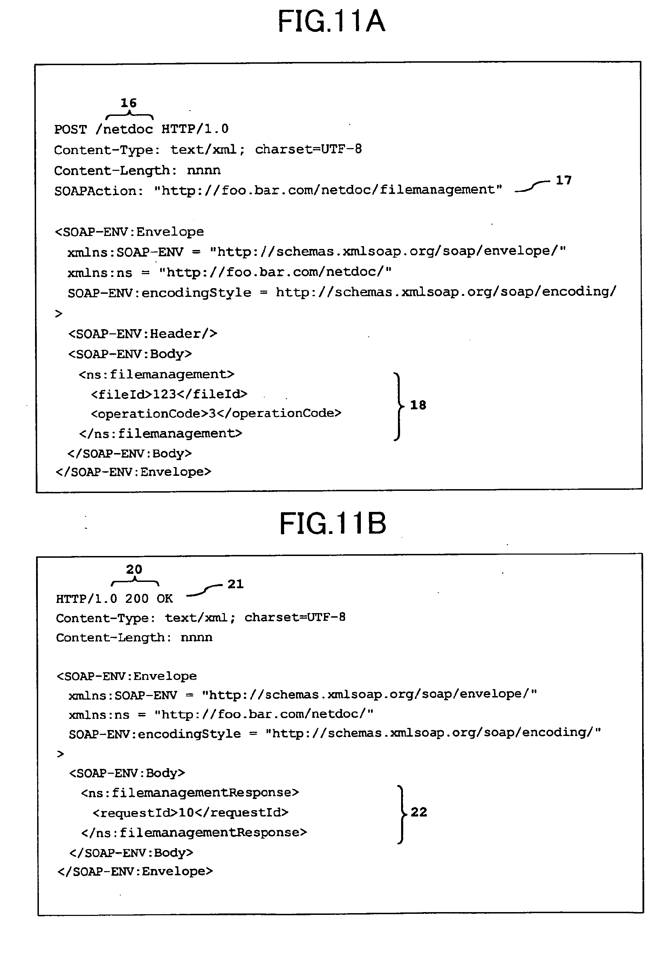

The HTTP request and HTTP response, in which the messages are exchanged between the multi-functional business apparatus 1200 and the network apparatus 10 in accordance with the SOAP, will be described in FIG. 11. FIG. 11A and FIG. 11B are diagrams showing examples of the HTTP request and the HTTP response according to the first embodiment of the present invention. In the HTTP request shown in FIG. 11 (A), a URI (Uniform Resource Indicator) 16 shows a URI to which the HTTP request is sent by a POST method. For example, the URI 16 indicates "netdoc." Moreover, a URI in which a purpose of the request in SOAPAction 17 is indicated is shown. For example, "file management" is specified by "http://foo.bar.com/netdoc/filemanagement."

The distributor 30 of the httpd 2 of the multi-functional business apparatus 1200 in FIG.10 calls the file management Web service providing process part 40 by a "filemanagement" specified by the SOAPAction 17. The file management Web service providing process part 40 processes the HTTP request in accordance with the SOAP by the SOAP processing part 70. In the SOAP processing part 70, the dispatcher 60 distributes the process to the file management executing part 400 by the "filemanagement" specified by SOAPAction 17. Moreover, the XML processing part 50 analyzes a message 18 described in the XML in the body of the SOAP envelope (from <SOAP-ENV:Body> to </SOAP-ENV:Body>). For example, the message 18 is shown by between <ns:filemanagement> and </ns:filemanagement>. The "filemanagement" shows a command. The contents of the process requested by the message 18 show that a process indicated by the operation code "3" specified between <operationCode> and </operationCode> is processed in respect to a file of the file ID "123" specified between <fileId> and </fileId>. For example, an operation code "3" indicates to delete the file, an operation code "1" indicates to add the file, and an operation code "2" indicates to update the file.

In this case, the file management executing part 400, to which the process is distributed by the dispatcher 60, deletes a document of the file ID "123" from the HDD 1303 according to the contents of the process analyzed by the XML processing part 50.

In the example of the HTTP request, by one command "filemanagement", a management method of the file is specified by setting a <operationCode>. Alternatively, a process of file management is subdivided. For example, such as a file adding Web service, a file editing Web service, a file deleting Web service, and a like, a plurality of Web services can be included in the Web service process application 1215 as the Web service function 1400. In this case, for example, such as "fileadd", "fileedit", and "filedelete", a command uniquely corresponding to each Web service is set as the XML message 18, so that operation code by <operationCode> is not needed.

The HTTP response shown in FIG. 11B is created based on the process result of the file management Web service providing process part 40, by the SOAP processing part 70 of the file management Web service providing process part 40. The SOAP processing part 70 sets "200" as a status code 20 and "O.K." as an explanation 21 based on the process result of the file management Web service providing process part 40. Moreover, the XML processing part 50 generates a message 22 described in the XML by the body of a SOAP envelope (between <SOAP-ENV:Body> and </SOAP-ENV:Body>). The response of a command "filemanagement" is shown between <ns:filemanagementRespo nse> and </ns:filemanagementRespo nse>. For example, a request ID "10" is set between <reguestId> and </requestId>. When the network apparatus 10 receives this HTTP response, the network apparatus 10 confirms by processing the message 22 described in the XML by the XML processing part 13 that the process has been conducted normally.

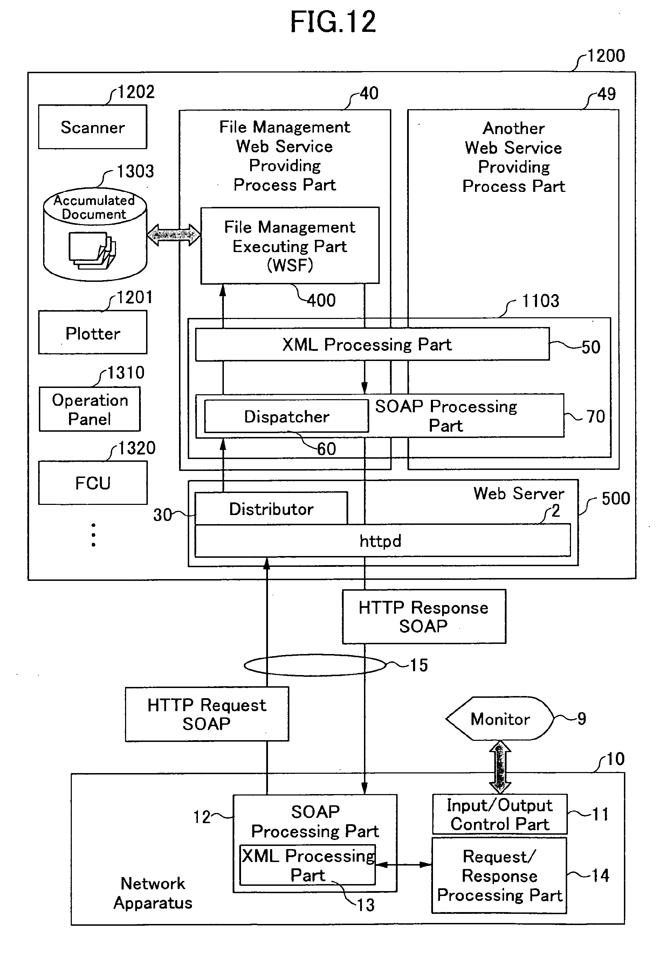

FIG.12 is a diagram showing a third functional configuration of the multi-functional business apparatus that provides the Web service, according to the first embodiment of the present invention. In FIG.12, parts that are the same as the ones in FIG. 10 are indicated by the same reference numerals and the explanation thereof will be omitted. Also, a process flow in FIG. 10 is similar to that in FIG. 10 and the explanation thereof will be omitted. In the third functional configuration shown in FIG. 12, similar to the second functional configuration shown in FIG.10, in the handler 1103 corresponding to a plurality of Web service providing process parts of the file management Web service providing process part 40 and another Web service providing process part 49, the multi-functional business apparatus 1200 includes the SOAP processing part 70 shared with the plurality of Web service providing process parts. However, in a different point from the second functional configuration, the XML processing part 50 independents of the SOAP processing part 70 and is shared with the plurality of Web service providing process parts. In the third functional configuration, similar to the second conventional configuration, the dispatcher 60 is included in the SOAP processing part 70. However, the dispatcher 60 can be contained in the XML processing part 50. The network apparatus 10 includes the same functional configuration as the network apparatus 10 shown in FIG.10.

As described above, in the multi-functional business apparatus 1200 and the network apparatus 10 to which the SOAP is applied, the network apparatus 10 can realize the RPC using the XML in respect to the multi-functional business apparatus 1200.

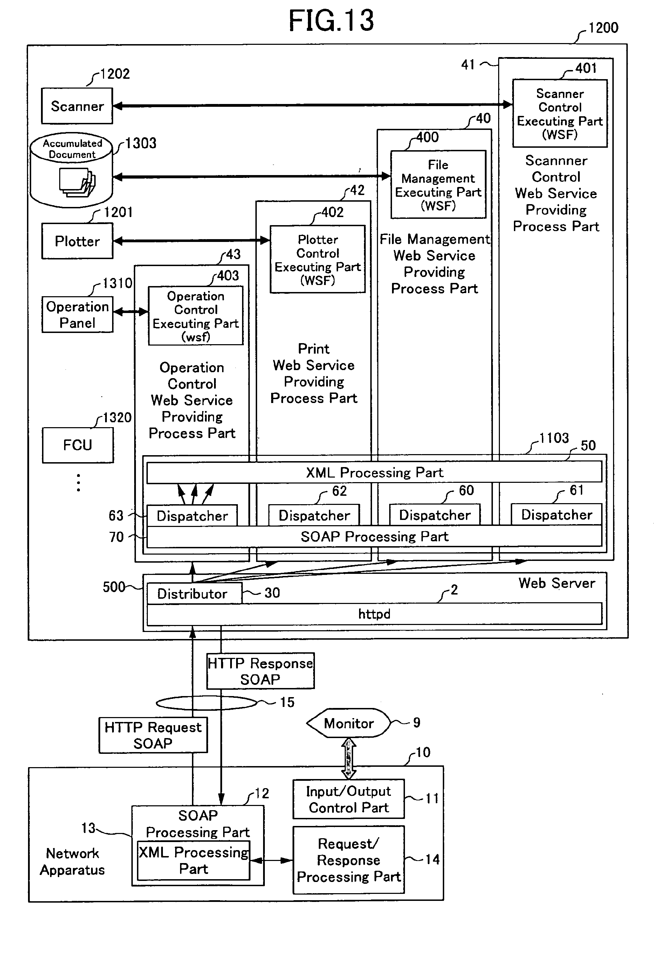

The multi-functional business apparatus 1200 can include a plurality of the Web service providing process parts corresponding to a plurality of functions, respectively. FIG. 13 is a diagram showing a fourth functional configuration of the multi-functional business apparatus that provides the Web service, according to the first embodiment of the present invention. In FIG.13, parts that are the same as the ones in FIG.10 are indicated by the same reference numerals and the explanation thereof will be omitted. In the third functional configuration shown in FIG.12, the multi-functional business apparatus 1200 includes a file management Web service providing process part 40 for providing the Web service that manages the document accumulated in HDD 1303, a scanner control Web service providing process part 41 for providing the Web service that controls a scanner 1202, a print Web service providing process part 42 for providing the Web service that controls a plotter 1201, an operation panel control Web service providing process part 43 for providing the Web service that controls the operation panel 1310, and a like. Moreover, the file management Web service providing process part 40 includes the file management executing part 400 that executes a process to HDD 1303. The scanner control Web service providing process part 41 includes the scanner control executing part 401 that executes a process to a scanner 1202. The print Web service providing process part 42 includes a plotter control executing part 402 that executes a process to the plotter 1201. The operation panel control Web service providing process part 43 includes the operation panel control executing part 403 that executes a process to the operation panel 1310.

Furthermore, in the handler 1103, the XML processing part 50 and the SOAP processing part 70 are separated from each other and shared with the plurality of Web service providing process parts 40-43. Moreover, the dispatchers 60-63 correspond to the plurality of Web service providing process parts 40-43, respectively.

The network apparatus 10 includes the same functional configuration as the network apparatus 10 shown in FIG. 10.

In the fourth functional configuration, in the multi-functional business apparatus 1200 and the network apparatus 10 to which the SOAP is applied, the network apparatus 10 can realize the RPC using the XML in respect to the multi-functional business apparatus 1200. Moreover, the network apparatus 10 can receive a desired Web service by transmitting the HTTP request corresponding to the desired Web service, from the multi-functional business apparatus 1200 that includes the plurality of Web service providing process parts 40-43. Accordingly, it is possible for the network apparatus 10 to use various functions of the scanner 1202, the HDD 1303, the plotter 1201, and the operation panel 1310 as the Web service, instead of installing a plurality of drivers for using the function of the image forming apparatus.

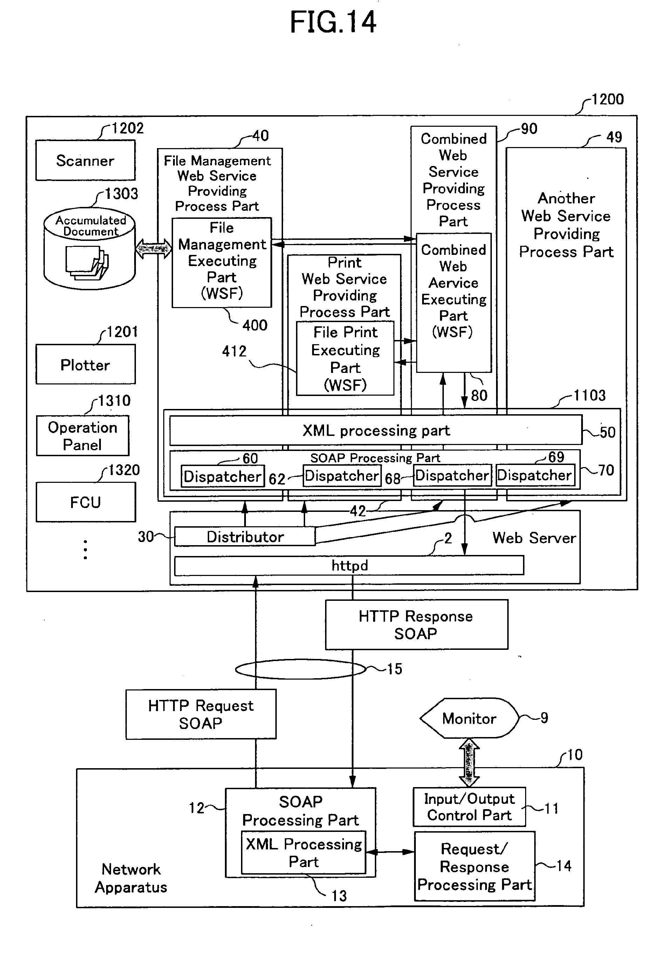

Next, an example of a functional configuration of the multi-functional business apparatus 1200 will be described in that the multi-functional business apparatus 1200 combines and executes the plurality of Web service providing process parts in response to a single HTTP request sent from the network apparatus 10. FIG.14 is a diagram showing a fifth functional configuration of the multi-functional business apparatus that provides the Web service, according to the first embodiment of the present invention. In FIG.14, parts that are the same as the ones in FIG. 12 and FIG. 13 are indicated by the same reference numerals and the explanation thereof will be omitted. In the fourth functional configuration shown in FIG. 14, in a different point from the third functional configuration shown in FIG. 12, the multi-functional business apparatus 1200 includes the file management Web service providing process part 40 and the print Web service providing process part 42, and also includes a combined Web service providing process part 90 combining and controlling the file management Web service providing process part 40 and the print Web service providing process part 42. In addition, in the handler 1103 of the multi-functional business apparatus 1200, the file management Web service providing process part 40, the print Web service providing process part 42, the combined Web service providing process part 90, and another Web service providing process part 49 share the XML processing part 50 and the SOAP processing part 70. Moreover, the SOAP processing part 70 includes the dispatchers 60, 62, 68, and 69 for dispatching the process to executing parts 400, 412, 80, and a like.

Based on the process distributed by the dispatcher 60, the file management executing part 400, the Web service function 1400 (FIG.3), of the file management Web service providing process part 40 executes the file management process in respect to the HDD 1303, and executes the file management process specified by the combined Web service executing part 80. Based on the process distributed by the dispatcher 62, the file print executing part 412 of the print Web service providing process part 42 as the Web service function 1400 executes the print of a file, and the file specified is printed by the combined-Web-service executing part 80.

The combined Web service providing process part 90 includes the combined Web service executing part 80 for combining and executing the file management Web service providing process part 40 and the print Web service providing process part 42.

The network apparatus 10 includes the same functional configuration as the network apparatus 10 shown in FIG. 10.

In FIG.14, for example, when the multi-functional business apparatus 1200 receives the HTTP request which requests a accumulation-and-print that stores and prints a document from the network apparatus 10 to the HDD 1303, the combined Web service providing process part 90 calls the combined Web service executing part 80 to store the document to the HDD 1303 by the file management executing part 400. Subsequently, the combined Web service executing part 80 conducts a sequence of processes so that the file-print executing part 412 executes a print process, by specifying the file ID of the accumulated document.

As described above, the combined-Web-service executing part 80 makes the file management executing part 400 and the file print executing part 412 consecutively conducted the process. Therefore, by sending only one HTTP request, it is possible for the network apparatus 10 connected to the multi-functional business apparatus 1200 to receive a sequence of the Web service provided by two or more Web service providing process parts. Moreover, the combined Web service executing part 80 itself does not need to be substantial process part as the Web service function 1400 for conducting a process for managing files and a print process. Therefore, it is possible to greatly reduce development steps. Furthermore, the network apparatus 10 can request the Web service only by the file management Web-service-providing process part 40, and request the Web service only by the print Web service providing process part 42.

Therefore, the multi-functional business apparatus 1200 forms an image, and provides wider Web service by a plurality of executing parts conducting the Web service and also by combining the plurality of executing parts.

In the first functional configuration through the fifth functional configuration, the multi-functional business apparatus 1200 provides the Web service to one network apparatus 10. However, when connecting with a plurality of network apparatuses 10 through the network 15, the multi-functional business apparatus 1200 can provides the Web service desired by each of the network apparatuses 10.

Moreover, the network apparatus 10 can describe the message in the XML and exchange messages with the multi-functional business apparatus 1200 in accordance with the SOAP. Therefore, it is possible for the network apparatus 10 to receive the Web service regardless of the machine type and the operating system of the network apparatus 10.

Furthermore, the user is not required to install various driver software to a computer terminal (network apparatus 10) in order to utilize the plurality of image forming functions, and the user can utilize various functions of the image forming apparatus as accessible and programmable application components by using various Web protocol that is an Internet standard.

Moreover, within the multi-functional business apparatus 1200 or between the multi-functional business apparatus 1200 and other apparatuses, it is possible to realize a distributed environment in that the Web service exchanges messages with other Web services.

According to the first embodiment of the present invention, the multi-functional business apparatus 1200 controls the operation panel 1310, conducts the print process, a scanner control, and a like, and processes various internal information concerning the image process, and then, can realize the Web service providing a process result to an apparatus that requested the Web service. It should be noted that the internal information can be various information concerning the multi-functional business apparatus 1200 and the image process, for example, image information, status information concerning the image information, information including control parameters to change settings of the multi-functional business apparatus 1200 or a Network IP, or a like. According to the first embodiment, it is possible to realize to conduct a predetermined process for the internal information and provide the process result as the Web service.

In the first embodiment of the present invention, the httpd 2 corresponds to a network communication controlling part, the Web service providing process part 40, 43, 49 and 90 correspond to Web service providing process parts, and the file management executing part 400, the scanner control executing part 401, the plotter control executing part 402, and the operation panel control executing part 403 correspond to Web service executing parts. And the SOAP processing part 70 corresponds to a protocol processing part, and the XML processing part 50 corresponds to a message processing part, in claims.

As described above, according to the present invention, instead of installing several driver software to a computer terminal of a user in order to utilize several image forming functions, the user only installs software supporting a standard Web service. Moreover, regardless of the machine type and the operating system of the computer terminal of the user, the computer terminal can send the process request to the multi-functional business apparatus 1200 having the plurality of the image forming functions. Furthermore, the multi-functional business apparatus 1200 can systematically process the process requests from other apparatuses.

### [Second Embodiment]

In the following, a second embodiment of the present invention will be described with reference to the accompanying drawings.

In the second embodiment of the present invention, the functional configuration shown in FIG. 1 and the hardware configuration shown in FIG.2 can be applied to an image forming apparatus uniting various image forming functions (hereinafter, called a multi-functional business apparatus). Therefore, the explanation thereof will be omitted.

In the following, various functional configurations realizing the Web service will be described according to the second embodiment of the present invention, in which the multi-functional business apparatus 1200, which has the functional configuration shown in FIG. 1 and the hardware configuration shown in FIG.2, provides the Web service. It should be noted that the Web service means that the multi-functional business apparatus 1200 conducts a predetermined process in response to a service request indicated by a HTTP request sent from the network apparatus and sends a process result indicated by a HTTP response. Body parts of the HTTP request and the HTTP response are described in an XML (extensible Markup Language).

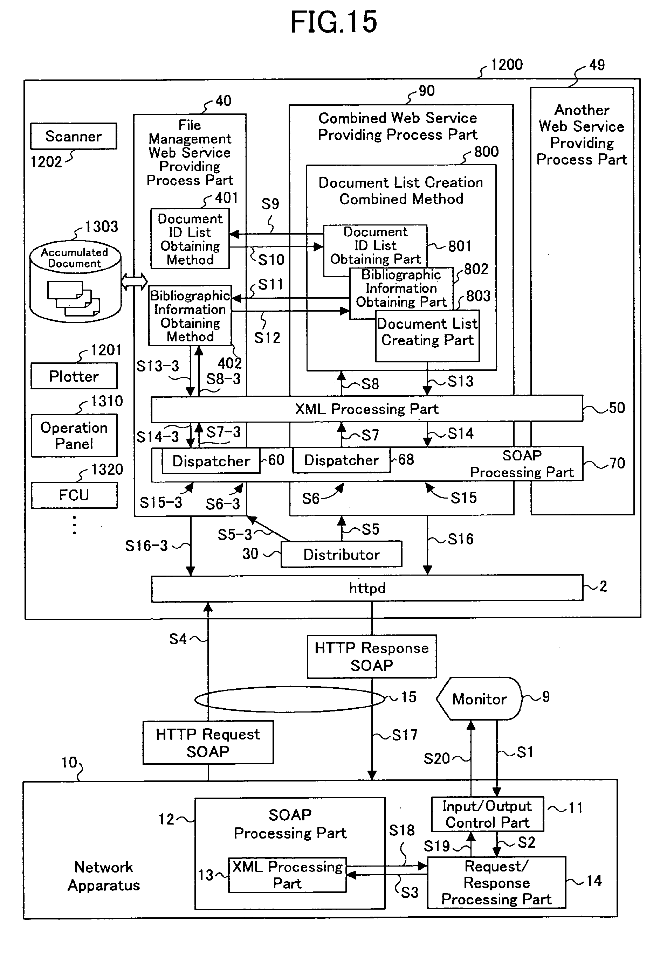

The multi-functional business apparatus 1200, which includes a combined Web service providing process part that combines and executes a plurality of methods of one Web service providing process part, will be described. FIG. 15 is a block diagram showing a first functional configuration of the multi-functional business apparatus for providing a combined Web service, according to the second embodiment of the present invention. In FIG.15, the multi-functional business apparatus 1200 mainly includes a httpd 2 for conducting the communication control in accordance with the HTTP, a distributor 30 for distributing a process to the Web service providing process part corresponding to the HTTP request, a file management Web service providing process part 40, another Web service providing process part 49, and a combined Web service providing process part 90 as a plurality of Web service providing process part, a XML processing part 50, which is shared with the plurality of Web service providing process parts 40, 49 and 90, for processing a message described in the XML (eXtensible Markup Language), a SOAP processing part 70, which is shared with the plurality of Web service providing process parts 40, 49 and 90, for exchanging messages with a network apparatus 10 in accordance with a SOAP (Simple Object Access Protocol), an operation panel 1310, a HDD (Hard Disk Drive) 1303, a FCU (Fax Control Unit) 1320, a plotter 1201, a scanner 1202, and a like.

The file management Web service providing process part 40 includes a document ID list obtaining method 401 for obtaining a list of document IDs identifying the documents accumulated in the HDD 1303, and a bibliographic information obtaining method 402 for obtaining bibliographic information concerning the document accumulated in the HDD 1303 corresponding to the document ID. A method shows a unit of the process of the Web service by the file management Web service providing process part 40. The file management Web service providing process part 40 realizes the Web service function 1400 shown in FIG. 1 by a plurality of methods, and provides the Web service in accordance with the request from the network apparatus 10. In a case of the first functional configuration shown in FIG.15, as the plurality of methods, it is not limited to the document ID list obtaining method 401 and the bibliographic information obtaining method 402. It is also possible to include a plurality of methods in addition to these methods.

The document list creation combined method 800 of the combined Web service providing process part 90 includes a document ID list obtaining part 801 for obtaining the list of document IDs by using the document ID list obtaining method 401, a bibliographic information obtaining part 802 for obtaining the bibliographic information corresponding to the document ID by using the bibliographic information obtaining method 402, and a document list creating part 803 for creating the document list based on the obtained bibliographic information. Since the document list creation combined method 800 utilizes the document ID list obtaining method 401 and the bibliographic information obtaining method 402, the document list creation combined method 800 does not have substantial methods. The portion developed in order to realize the document list creation combined method 800 is mainly only the document list creating part 803. Therefore, it is possible to reduce steps necessary to develop the document list creation combined method 800. Moreover, the combined Web service providing process part 90 includes a set of a plurality of process units in the document list creation combined method 800 and a plurality of process units by substantial methods, as the Web service function 1400 shown in FIG. 1.

The SOAP processing part 70 further includes dispatchers 60 and 68for dispatching the process to each Web service providing process part. For example, the dispatcher 60 dispatches the process to each of methods 401 and 402 of the file management Web service providing process part 40, and the dispatcher 68 dispatches the process to the document list creation combined method 800 of the combined Web service providing process part 90. In the multi-functional business apparatus 1200, for the sake of convenience, as a plurality of Web service providing process parts, only the file management Web service providing process part 40, the combined Web service providing process part 90, and the other Web service providing process part 49 are shown. However, the multi-functional business apparatus 1200 can include more Web service providing process parts. Also, the XML processing part 50 and the SOAP processing part 70 are shared with those Web service providing process parts.

Moreover, the network apparatus 10 connected to the multi-functional business apparatus 1200 through a network 15 controls input data from input units, such as a keyboard or a mouse, and includes an input/output control part 11 for controlling output data displayed on a monitor 9, a SOAP processing part 12 for exchanging messages to the multi-functional business apparatus 1200 in accordance to the SOAP, a request/response processing part 14 for generating the request and analyzing the response in accordance with the HTTP. The SOAP processing part 12 includes an XML processing part 13 for processing the contents of the process of the Web service to the multi-functional business apparatus 1200 and the process result of the Web service from the multi-functional business apparatus 1200 by the XML. It is shown that the HTTP request requests the Web service by the data communication in accordance with the HTTP, and the HTTP response indicates the process result of this Web service. Moreover, in the first functional configuration, body parts of the HTTP request and the HTTP response show an example described in the XML.

In FIG.15, a user using such the network apparatus 10 requests a desired Web service of the multi-functional business apparatus 1200 from a screen for requesting of the multi-functional business apparatus 1200 (step S1). For example, it is assumed that the user requests the Web service that provides a list of the document accumulated in the HDD 1303 of the multi-functional business apparatus 1200 from the screen of the monitor 9. In response to a request of the Web service from the user, the input/output control part 11 sends the request data to the request/response processing part 14 (step S2). The request/response processing part 14 generates the HTTP request based on the request data from the input/output control part 11 (step S3). And the XML processing part 13 describes the contents of the process to the body part of the HTTP request in the XML. Then, the HTTP request is sent to the multi-functional business apparatus 1200 through the network 15 (step S4).

When the Web server 500 of the multi-functional business apparatus 1200 receives the HTTP request by the httpd 2, the HTTP request received is distributed to the Web service providing process part specified by the header of the HTTP request (step S5). For example, when the combined Web service providing process part 90 is specified by the header of the HTTP request, the combined-Web-service providing process part 90 is executed by the distributor 30.

The combined Web service providing process part 90 sends the HTTP request received from the network apparatus 10 to the SOAP processing part 70, in order to process the HTTP request in accordance with SOAP (step S6). The SOAP processing part 70 processes the HTTP request in accordance with the SOAP, and the dispatcher 68 distributes the process to the document list creation combined method 800 specified by the header of the HTTP request, and executes the XML processing part 50 in accordance to the method of the HTTP (step S7). The XML processing part 50 converts the message showing the contents of the process in the body part of the HTTP request described in the XML into a data format that can be interpreted by the document list creation combined method 800, and then, sends to the document list creation combined method 800 (step S8).

First, the document list creation combined method 800 calls the document ID list obtaining method 401 of the file management Web service providing process part 40 by the document ID list obtaining part 801 (step S9). The document ID list obtaining method 401 obtains the document ID identifying the document managed in the HDD 1303, and creates the document ID list. In this case, it is assumed that the document ID list obtaining method 401 (listID (docIDList)) obtains a document ID "101", "102", and "103." A document ID list (docIDList) is set as follows:
docIDList= {101, 102, 103, and 0} ("0 (zero)" shows an end),
and the document ID list is sent to the document ID list obtaining part 801 (step S10).

Subsequently, the document list creation combined method 800 calls the bibliographic information obtaining method 402 of the file management Web service providing process part 40 by the bibliographic information obtaining part 802 (step S11). In respect to the document managed in the HDD 1303, the bibliographic information obtaining method 402 inquires the bibliographic information by the document ID received from the bibliographic information obtaining part 802, and creates bibliographic information. For example, in a case in that the bibliographic information is obtained for the document ID "101", the bibliographic information obtaining part 802 executes the bibliographic information obtaining method 402 (getProps (docID, props)) by calling getProps (101 props).

The bibliographic information obtaining method 402 inquires the bibliographic information by the specified document ID in respect to the HDD 1303, and sends the bibliographic information to the bibliographic information obtaining part 802 (step S12). That is, the bibliographic information obtaining method 402 obtains the bibliographic information from the HDD 1303 by the document ID "101" received from the bibliographic information obtaining part 802. The bibliographic information obtaining method 402 creates the bibliographic information to send to the bibliographic information obtaining part 802. For example, the bibliographic information is created as follows:
prop= {a document ID, a document name, pagination, an owner, and 0} ("0 (zero)" shows the end of bibliographic information).
In this case, prop= {101, the "accumulated document 1", 3, "a user 1", and 0} is set for the document ID "101". The bibliographic information obtaining method 402 sends a creation result of the bibliographic information for the specified document ID, to the bibliographic information obtaining part 802 of the document list creation combined method 800.

The bibliographic information obtaining part 802 of the document list creation combined method 800 repeats the same process as described above, for other document IDs "102" and "103", and then, obtains all document information.

The document list creation combined method 800 further creates the document list by the document list creating part 803, and sends the document list to the XML processing part 50 in order to describe in the XML (step S13). That is, for example, the document list creating part 803 creates a document list as follows:
docList={{101, the " accumulated document 1", 3, "a user 1", and 0}, {102, the " accumulated document 2", 10, "a user 2" and 0}, and {103, the " accumulated document 3", 1, "a user 1", 0}, 0}.
The document list (docList) is sent to the XML processing part 50. When the document list (docList) is received, the XML processing part 50 describes the document list (docList) in the XML and sends to the SOAP processing part 70 (step S14). When the SOAP processing part 70 receives the document list described in the XML, the SOAP processing part 70 sets the document list described in XML to the body part of the HTTP response, and generates the HTTP response in accordance to SOAP (step S15).

In the first functional configuration, by the document list creation combined method 800, the combined Web service providing process part 90 can process the sequence of Web services combining the plurality of methods, without having a substantial document ID list obtaining method 401 and a substantial bibliographic information obtaining method 402. Therefore, the network apparatus 10 can receive the sequence of Web services by a single HTTP request, without considering the unit of the Web service that the multi-functional business apparatus 1200 can provide.

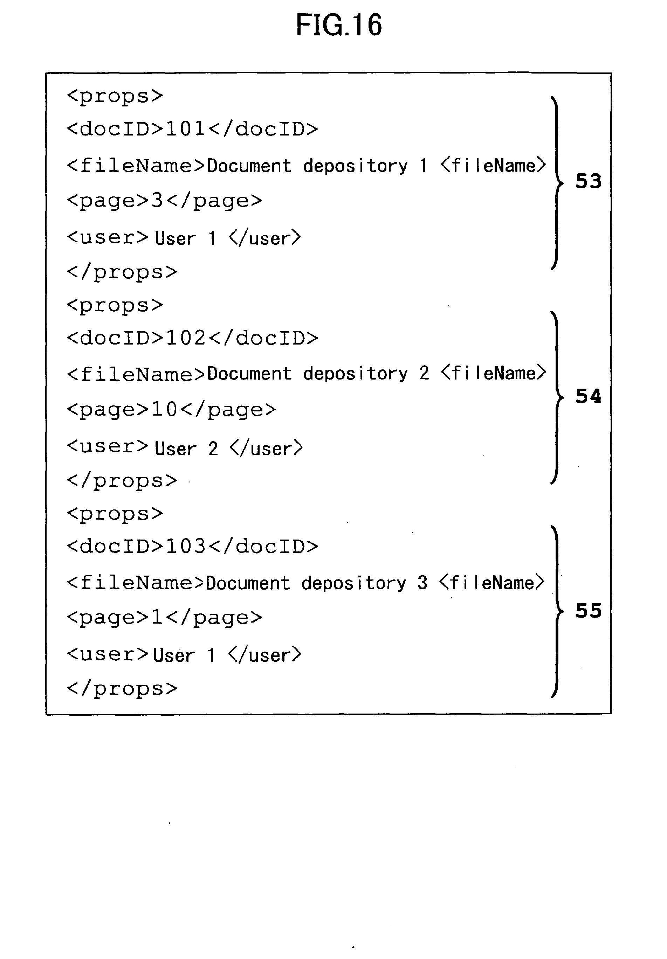

The XML processing part 50 shown in FIG.15 describes he document list (docList) in XML as shown in FIG. 16. FIG. 16 is a diagram showing an example of the document list described in the XML by the XML processing part, according to the second embodiment of the present invention. In FIG . 16 , a description 53 shows the bibliographic information of the document ID "101", a description 54 shows the bibliographic information of the document ID "102", and a description 55 shows the bibliographic information of the document ID "103." For example, in the description 53, the bibliographic information of a document ID "101" shows that a document name is "the accumulated document 1", the number of pages is "3" pages, an owner is "a user 1."

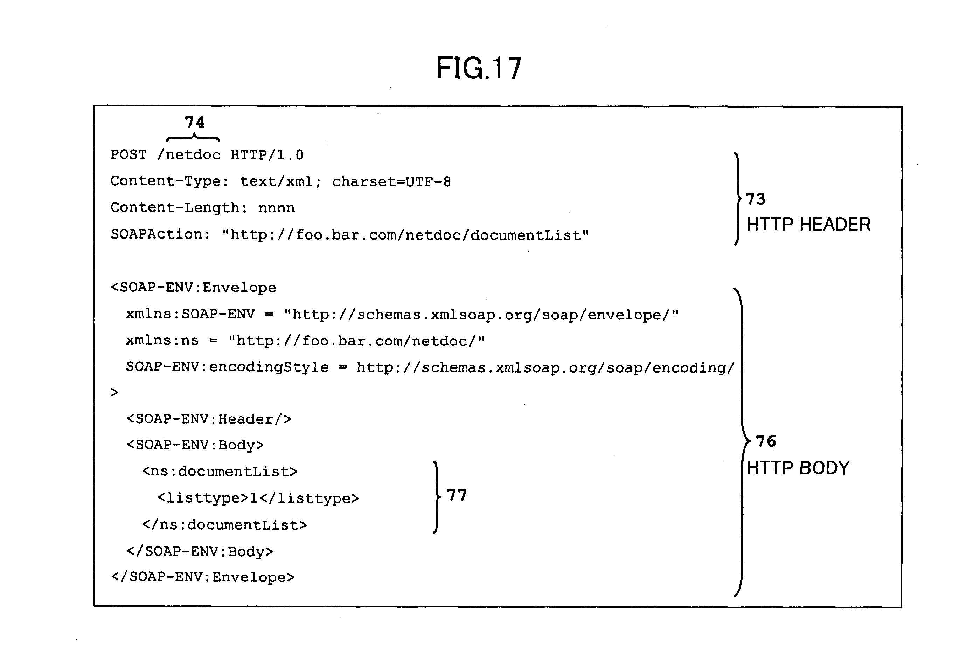

Moreover, it is created by the SOAP processing part 12 of the network apparatus 10, and the HTTP request sent to the multi-functional business apparatus 1200 is described as shown in FIG.17. FIG. 17 is a diagram showing an example of the HTTP request in accordance with the SOAP, according to the second embodiment of the present invention. In a HTTP header 73 of the HTTP request shown in FIG. 17, a URI 74 shows a URI to which the HTTP request is sent by a POST method, for example, the URI 74 is "netdoc." Furthermore, an URI expressing a purpose of the request by a SOAPAction 75 is shown, for example, "A document list" is specified by "http://foo.bar.com/netdoc/documentList." The httpd 2 of the multi-functional business apparatus 1200 receives the HTTP request, and the SOAP processing part 70 analyzes the HTTP header 75. The SOAP processing part 70 analyzes from <SOAP-ENV:Envelope> to </SOAP-ENV:Envelope>. The SOAP processing part 70 obtains the message which shows the contents of the process described in the XML from <ns:documentList> to </ns:documentList>. In an XML message, for example, in a case in that "1" set in <listtype> indicates to create a list of all documents, based on directions of the message, the document list creation combined method 800 obtains the list of all documents managed by the multi-functional business apparatus 1200 by the document ID list obtaining part 801, the bibliographic information obtaining part 802, and the document list creating part 803.

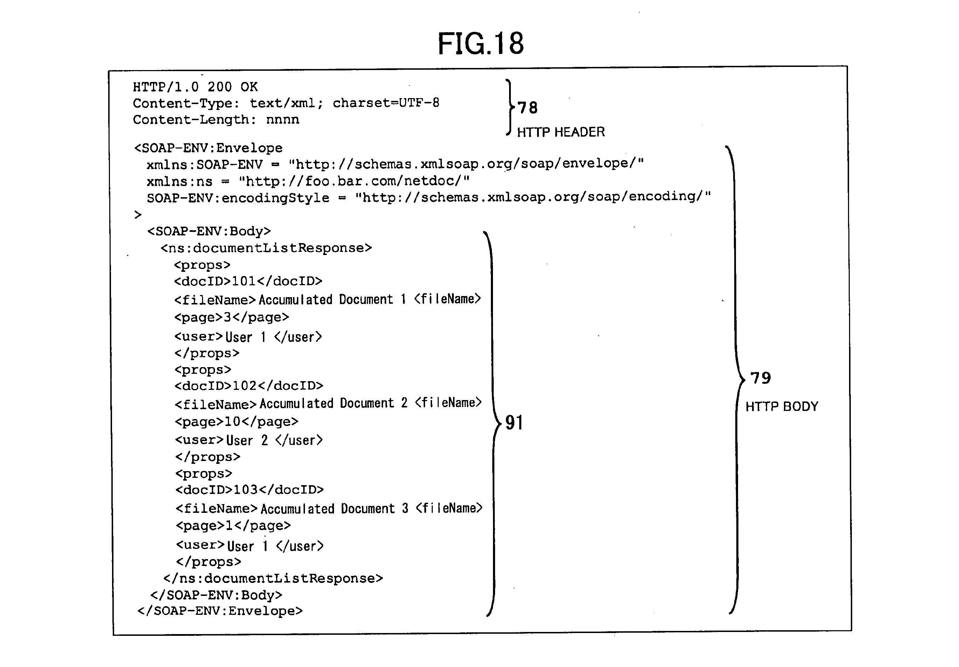

After the document list is described in the XML by the XML processing part 50, the HTTP response including the document list by the SOAP processing part 70. The HTTP response including the document list is shown as in FIG. 18. FIG. 18 is a diagram showing an example of the HTTP response by SOAP, according to the second embodiment of the present invention. In the example of the HTTP response shown in FIG. 18, the SOAP processing part 70 creates the HTTP header 78, and creates the HTTP body part 79. As a HTTP body part 79, <SOAP-ENV:Envelope> to </SOAP-ENV:Envelope> is created. A message 91 shown between <ns:documentListResponse> and </ns:documentListResponse> is a message describing the document list from the document list creation combined method 800, in the XML by the XML processing part 50.

Such this HTTP response is sent to the network apparatus 10. A message 91 is retrieved from between <SOAP-ENV:Body> and </SOAP-ENV:Body> by the SOAP processing part 12. The document list information which should be displayed on the monitor 9 is retrieved from the taken-out message 91, and sent to the request/response processing part 14 by the XML processing part 13. Furthermore, the document list information is processed by the request/response processing part 14 as screen data. For example, the document list is displayed on the monitor 9 by the input/output control part 11.

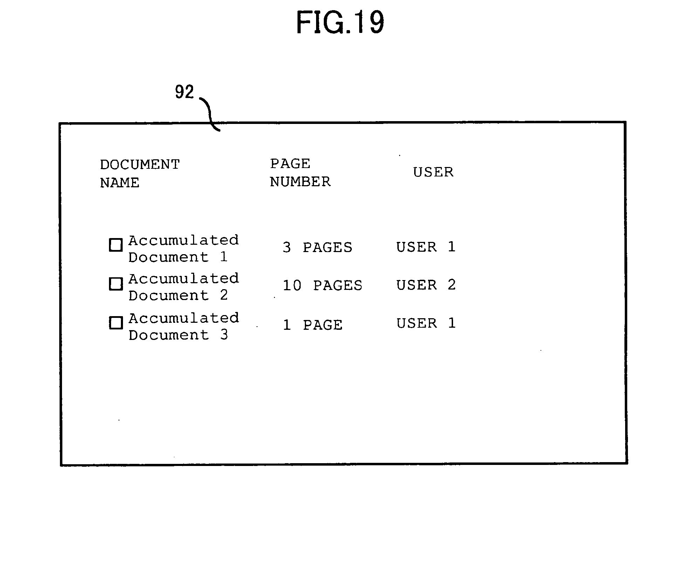

FIG. 19 is a diagram showing an example of a screen displayed at the network apparatus, according to the second embodiment of the present invention. In FIG. 19, a screen 92 displays the list of the information of the document name, the number of pages, the owner, and a like for each document.

Furthermore, in FIG.15, it is also possible to provide the Web service by the file management Web service providing process part 40 itself. That is, when the httpd 2 receives the HTTP request from a network apparatus 10 (step S4), in response to a request of the Web service for obtaining the bibliographic information that is indicated in the header part of the HTTP request, the distributor 30 distributes the HTTP request to the bibliographic information obtaining method 402 of the file management Web service providing process part 40 (step S5-3).

The file management Web service providing process part 40 sends the HTTP request to the SOAP processing part 70, in order to process the HTTP request in accordance with the SOAP (step S6-3). The SOAP processing part 70 processes the HTTP request in accordance to the SOAP. The dispatcher 60 dispatches the process to the bibliographic information obtaining method 402 specified by the header of the HTTP request, and executes the XML processing part 50 according to the method of HTTP (step S7-3). The XML processing part 50 converts the message showing the contents of the process in the body part of the HTTP request described in the XML into the data format that can be interpreted by the bibliographic information obtaining method 402, and sends to the bibliographic information obtaining method 402 (step S8-3).

In respect to the document managed in the HDD 1303, the bibliographic information obtaining method 402 inquires the bibliographic information by the document ID specified by the message processed by the XML processing part 50. And the bibliographic information obtaining method 402 sends to the XML processing part 50, in order to describe the bibliographic information in the XML (step S13-3). Furthermore, in the SOAP processing part 70, the bibliographic information described in the XML is set in the body part of the HTTP response, and the HTTP response is generated in accordance with the SOAP (step S15-3). Then, the HTTP response is sent from the httpd 2 to the network apparatus 10 (steps S16-3 and S17).

As described above, in response to the HTTP request for providing the bibliographic information from the network apparatus 10, the multi-functional business apparatus 1200 can execute the bibliographic information obtaining method 402 itself. Moreover, it is also possible to execute the document ID list obtaining method 401 itself.

Therefore, the multi-functional business apparatus 1200 forms an image, and provides wider Web service by a plurality of methods conducting the Web service and also by combining the plurality of methods.

In the first functional configuration, the functional configuration and process flow of the multi-functional business apparatus 1200, which includes the combined Web service providing process part for combining and executing the plurality of methods in one Web service providing process part, are described above. In the following, a case where the combined Web service providing process part for combining and executing the plurality of methods of one Web service providing process part and other Web providing process parts will be described.

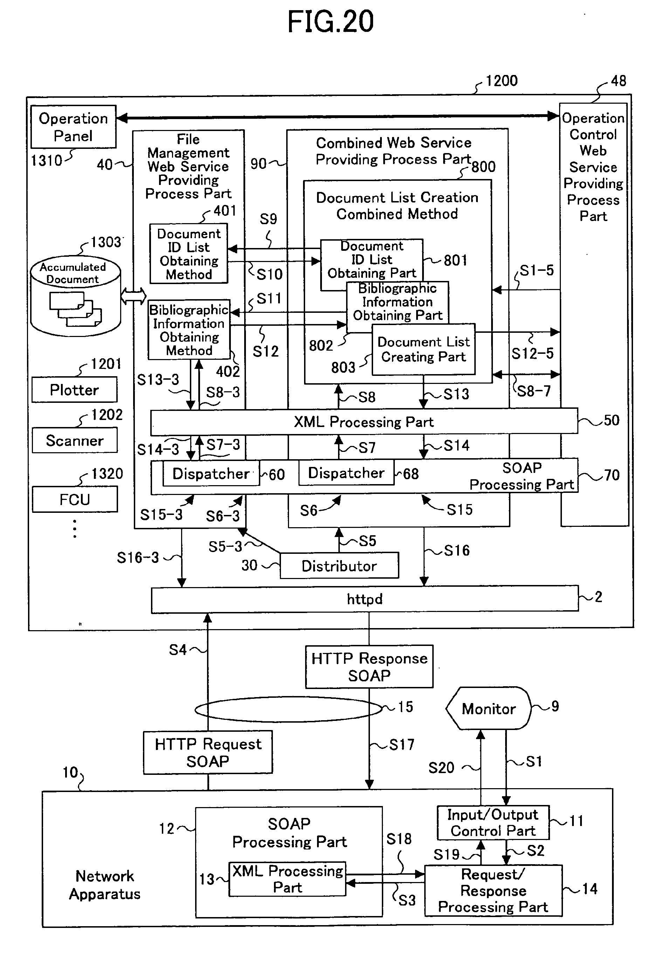

FIG. 20 is a diagram showing an example of a second functional configuration of the multi-functional business apparatus for providing the combined Web service, according to the second embodiment of the present invention. In FIG. 20, steps that are the same as the ones in FIG. 15 are indicated by the same reference numerals and the explanation thereof will be omitted. In FIG. 20, the multi-functional business apparatus 1200 further includes an operation panel Web service providing process part 48 for providing information currently displayed on the operation panel 1310 to the network apparatus 10, in addition to the parts in of the first functional configuration shown in FIG.15.

In the second functional configuration, a case where the document list is displayed on the operation panel 1310 by the request from the operation panel 1310 will be described. In response to a request from the operation panel 1310, due to an event internally generated and requesting the document list, the combined Web service providing process part 90 executes the document list creation combined method 800 (step S1-5). The document list creation combined method 800 obtains the document ID list from the document ID list obtaining method 401 by the document ID list obtaining part 801 (steps S9 and S10). The document list creation combined method 800 The document list creation combined method 800 obtains the bibliographic information corresponding to each document ID from the bibliographic information obtaining method 402 by the bibliographic information obtaining part 802 (steps S11 and S12). And the document list created by the document list creating part 803 is sent to the operation panel control Web service providing process part 48 (step S12-5). And the operation panel control Web service providing process part 48 sends the document list to the operation panel 1310 as display information. The document list is displayed on the operation panel 1310.

Next, a case where the document list displayed on the operation panel 1310 is currently displayed on the monitor 9 in response to the request from the network apparatus 10 will be described. When the document list creation combined method 800 receives the contents of a process changed into data format which can be interpreted by the document list creation combined method 800 in the message from the XML processing part 50, the document list creation combined method 800 obtains the current display information on the operation panel 1310 from the operation panel control Web service providing process part 48 (step S8-7). As described above, based on the display information, the document ID list is obtained from the document ID list obtaining method 401 by the document ID list obtaining part 801 (steps S9 and S10). The bibliographic information corresponding to each document ID is obtained from the bibliographic information obtaining method 402 by the bibliographic information obtaining part 802 (steps S11 and S12).

And the document list created by the document list creating part 803 is sent to the XML processing part 50 (step S13). For example, the document list described in the XML is description as shown in FIG. 16, and the description in the XML is sent to the SOAP processing part 70 (step S14). The document list described in the XML is formed in the HTTP response as shown in FIG. 18 (step S15), and is sent to the network apparatus 10 from the httpd 2 by the SOAP processing part 70 (steps S16 and S17).

In the network apparatus 10, a screen 92 as shown in FIG. 19 at the monitor 9 is displayed by this HTTP response. This screen 92 has the same configuration as the operation panel 1310.

In such an example of the second functional configuration, the XML processing part 50 and the SOAP processing part 70 can be included in the combined Web service providing process part 90.

In the first and second functional configuration, the multi-functional business apparatus 1200 provides the Web service to one network apparatus 10. However, when connecting with a plurality of network apparatuses 10 through the network 15, the multi-functional business apparatus 1200 can provides the Web service desired by each of the network apparatuses 10.

Moreover, the network apparatus 10 can describe the message in the XML and exchange messages with the multi-functional business apparatus 1200 in accordance with the SOAP. Therefore, it is possible for the network apparatus 10 to receive the Web service regardless of the machine type and the operating system of the network apparatus 10.

Furthermore, the combined-Web-service providing process part 90 of the multi-functional business apparatus 1200 includes the document list creation combined method 800. Therefore, it is possible to provide the Web service combining the plurality of method in a single Web service providing process. Also, it is possible to provide the Web service combining the plurality of the Web service providing process parts. Accordingly, the network apparatus 10 does not need to generate a plurality of HTTP requests for requesting of the multi-functional business apparatus 1200 according to the request from the user because of difference between a request unit of the user and a process unit of multi-functional business apparatus 1200. Therefore, the network apparatus 10 only processes a single HTTP response in respect to a single HTTP request. The network apparatus 10 is not required to conduct a special process for the request of the user.

Furthermore, the user is not required to install various driver software to a computer terminal (network apparatus 10) in order to utilize the plurality of image forming functions, and the user can utilize various functions of the image forming apparatus as accessible and programmable application components by using various Web protocol that is an Internet standard.

Moreover, within the multi-functional business apparatus 1200 or between the multi-functional business apparatus 1200 and other apparatuses, it is possible to realize a distributed environment in that the Web service exchanges messages with other Web services.

According to the first embodiment of the present invention, the multi-functional business apparatus 1200 controls the operation panel 1310, conducts the print process, a scanner control, and a like, and processes various internal information concerning the image process, and then, can realize the Web service providing a process result to an apparatus that requested the Web service. It should be noted that the internal information can be various information concerning the multi-functional business apparatus 1200 and the image process, for example, image information, status information concerning the image information, information including control parameters to change settings of the multi-functional business apparatus 1200 or a Network IP, or a like. According to the first embodiment, it is possible to realize to conduct a predetermined process for the internal information and provide the process result as the Web service.

In the second embodiment of the present invention, the httpd 2 corresponds to a network communication controlling part, the file management Web service providing process part 40 corresponds to a Web-service-providing process part, and each of the document-ID list obtaining method 401 and the bibliographic information obtaining method 402 corresponds to a process unit. The combined Web service providing process part 90 corresponds to a combined Web service providing process part, and the document list creation combined method 800 corresponds to a combining process executing part, in claims. Moreover, the operation panel control Web service providing process part 48 corresponds to an internal Web service providing process part, in claims. Moreover, the SOAP processing part 70 corresponds to a protocol process part, and the XML processing part 50 corresponds to a message-processing part, in claims.

As described above, according to the present invention, instead of installing several driver software to a computer terminal of a user in order to utilize several image forming functions, the user only installs software supporting a standard Web service. Moreover, regardless of the machine type and the operating system of the computer terminal of the user, the computer terminal can send the process request to the multi-functional business apparatus 1200 having the plurality of the image forming functions. Furthermore, the multi-functional business apparatus 1200 can systematically process the process requests from other apparatuses. Moreover, since a combined Web service controls a combination of a plurality of the Web service formed by small units, it is possible to provide various variations of the Web services. Furthermore, it is possible to reuse the same Web service between different Web services.

### [Third Embodiment]

In the following, a second embodiment of the present invention will be described with reference to the accompanying drawings.

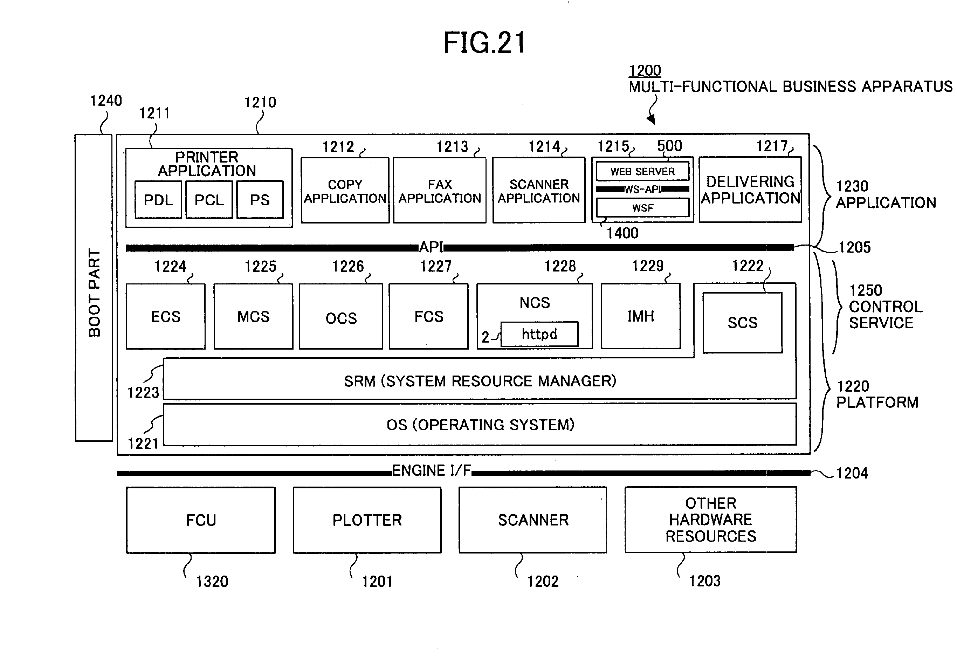

An image forming apparatus uniting various image forming functions (hereinafter, called a multi-functional business apparatus) has a functional configuration as shown in FIG.21. FIG.21 is a block diagram showing the functional configuration of the multi-functional business apparatus uniting various image forming functions according to the third embodiment of the present invention. In FIG. 21, parts that are the same as the ones in FIG. 1 are indicated by the same reference numerals and the explanation thereof will be omitted.

In FIG.21, the Web service process application 1215 includes a Web server 500 for processing a HTTP request of a GET METHOD or a POST METHOD and sending a HTTP response including an HTML, a Web service function (WSF) 1400 for conducting a predetermined process by using the control service 1250 through an API (Application Program Interface) and providing a process result trough a WS-API (Web Service Application Program Interface) as the Web service.

In the third embodiment of the present invention, the functional configuration shown in FIG. 21 and the hardware configuration shown in FIG. 2 can be applied the image forming apparatus 1200.

In the following, various functional configurations realizing the Web service will be described according to the third embodiment of the present invention, in which the multi-functional business apparatus 1200, which has the functional configuration shown in FIG.21 and the hardware configuration shown in FIG.2, provides the Web service. It should be noted that the Web service means that the multi-functional business apparatus 1200 conducts a predetermined process in response to a service request indicated by the HTTP request sent from the network apparatus and sends a process result indicated by the HTTP response. Body part of the HTTP response is described in an HTML ((Hypertext Markup Language).

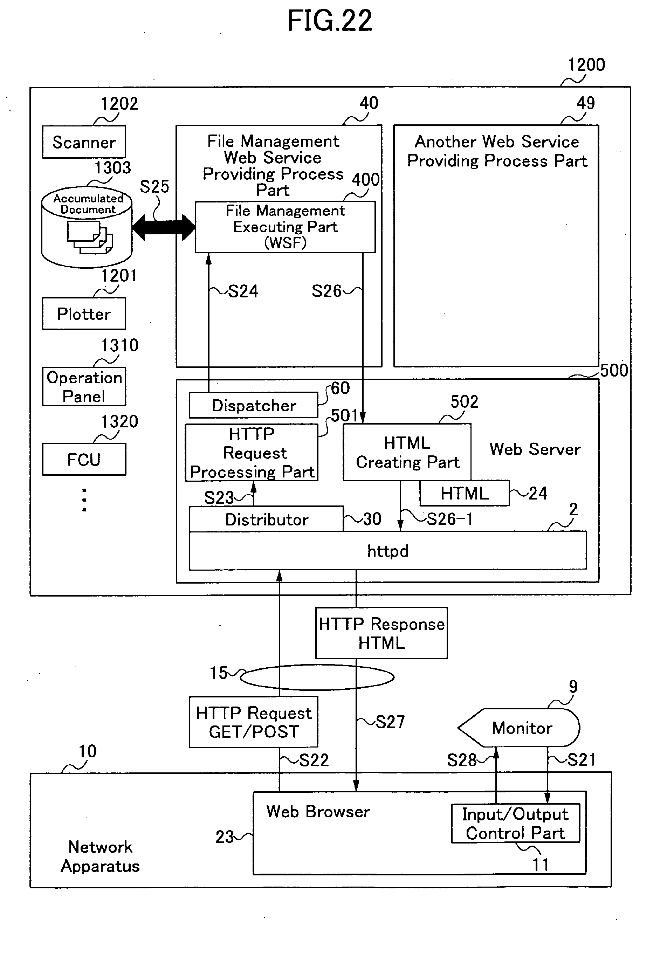

FIG. 22 is a block diagram showing an example of a first functional configuration of the multi-functional business apparatus including the Web server, according to the third embodiment of the present invention. In FIG.22, only main processing parts are illustrated among the processing parts of the multi-functional business apparatus 1200 shown in FIG.21, and other processing parts are omitted. In FIG.22, the multi-functional business apparatus 1200 mainly includes a file management Web service providing process part 40 and another Web service providing process part 49, a Web server 500 for controlling a message exchange by the HTTP request and the HTTP response, an operation panel 1310, a HDD (Hard Disk Drive) 1303, a FCU (Fax Control Unit) 1320, a plotter 1201, a scanner 1202, and a like.

The file management Web service providing process part 40 includes a file management executing part 400 for accumulating and managing a document in the HDD 1303, as the Web service function 1400 (FIG.22). The Web server 500 includes a httpd 2 for conducting the communication control in accordance with the HTTP, a distributor 30 for distributing a process to the Web service providing process part corresponding to the HTTP request, an HTTP request processing part 501 for processing the HTTP request by the GET METHOD or the POST METHOD received from the network 15, a dispatcher 60 for dispatching the process concerning the Web service, which is indicated by the HTTP request, to the file management executing part 400, an HTML (HyperTest Markup Language) showing a process result received from the file management executing part 400.

The network apparatus 10 connected to the multi-functional business apparatus 1200 through the network 15 includes a Web browser 23 including an input/output control part 11 for controlling the output data displayed at the monitor 9 while controlling the input data from an input unit, such as a keyboard or a mouse.

A user using the network apparatus 10 requests desired the Web service of the multi-functional business apparatus 1200 from a screen, which is displayed on the monitor 9, for requesting the Web service of the multi-functional business apparatus 1200, and the input/output control part 11 receives the request data (step S21). Based on the request data received by the input/output control part 11, the Web browser 23 generates the HTTP request indicating the GET METHOD or the POST METHOD, and sends the HTTP request to the multi-functional business apparatus 1200 through the network 15 (step S22).

When the multi-functional business apparatus 1200 receives the HTTP request from the network apparatus 10, the HTTP request is analyzed by the Web server 500. That is, when the httpd 2 which conducts the network communication control receives the HTTP request, the HTTP request is distributed to the HTTP request processing part 501, so as to analyze the HTTP request corresponding a method (the GET METHOD or the POST METHOD), which is indicated in the header part of the HTTP request (step S23). The HTTP request processing part 501 obtains the contents of a process from a body part according to a method. For example, in a case in which the file management Web service is indicated by a URL (Uniform Resource Locator) or a URI (Uniform Resource Indicator) by the header part, the dispatcher 60 dispatches the process in accordance to the contents of the process to the file management executing part 400 (step S24).

The file management executing part 400 executes the process in respect to the HDD 1303 in accordance to the contents of the process, and obtains the process result (step S25). For example, the document indicated by the contents of the process is added, updated, or deleted. The file management executing part 400 sends the process result to the Web server 500 (step S26).

When the Web server 500 receives a process result from the file management executing part 400, the Web server 500 creates an HTML 24 for displaying the process result at the monitor 9 so as to display the process result at the monitor 9 by the Web browser 23 of the network apparatus 10, by the HTML creating part 502. Then, the httpd 2 is requested to send the HTML 24 to the network apparatus 10 (step S26-1). The httpd 2 sends the HTML 24 to the network apparatus 10 in accordance with the HTTP (step S27).

When the HTTP response is received by the network apparatus 10, the Web browser 23 displays the HTML 24 on the monitor 9 by the input/output control part 11 (step S28).

In the first functional configuration, the network apparatus 10 does not need the special message exchange method with the multi-functional business apparatuses 1200. Only using the web browser, the network apparatus 10 can receive the Web service from the multi-functional business apparatus 1200, and can realize an RPC (Remote Procedure Call).

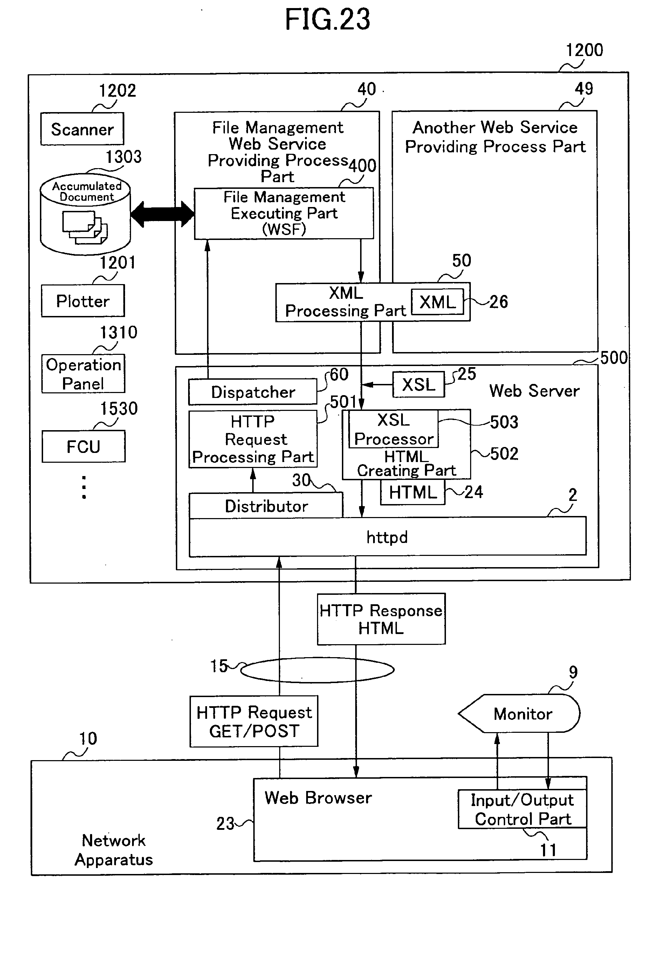

In the first functional configuration, the multi-functional business apparatus 1200 can be configured so that an XML is created based on the process result received from the file management executing part 400 as a Web service function (WSF), and an HTML form is created from the XML by using a predetermined XSL (extensible Stylesheet Language). In the following, a second functional configuration of the multi-functional business apparatus 1200 including the Web server will be described with reference to FIG.23.

FIG.23 is a block diagram showing the second functional configuration of the multi-functional business apparatus 1200 including the Web server, according to the third embodiment of the invention. In FIG. 23, parts that are the same as the ones in FIG.22 are indicated by the same reference numerals and the explanation thereof will be omitted. Also, a process flow in FIG.23 is similar to that in FIG.22and the explanation thereof will be omitted. In the second functional configuration shown in FIG.23, in a different point from the first functional configuration, the multi-functional business apparatus 1200 includes an XML processing part 50 shared with a plurality of Web service providing process parts such as the file management Web service providing process part 40 and another Web service providing process part 49, and the Web server 500 includes an XSL processor 503 for converting the XML generated by the XML processing part 50 into the HTML form.

In such the multi-functional business apparatus 1200, the XML processing part 50 creates an XML 26 based on the process result from the file management executing part 400, and sends the XML 26 to the HTML creating part 502. The HTML creating part 502 converts the XML 26 into the HTML form by the XSL processor 503 based on the XSL 25 showing the predetermined style list. The HTML creating part 502 creates the HTML 24 showing the process result in accordance with this HTML form.

In the second functional configuration, by the Web server 500 with the XSL 25 according to the characteristics of the process in the executing part of each Web service, in case in that the process result is displayed at the network apparatus 10, it is possible to provide a display screen for each Web service.

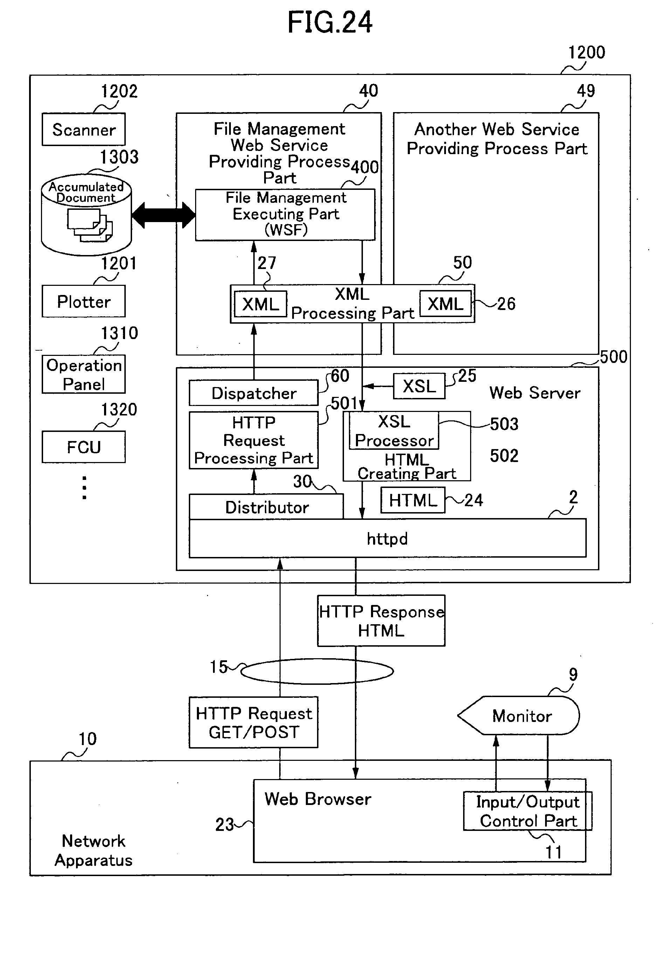

Moreover, in the second functional configuration, the XML processing part 50 creates the XML showing the contents of the process of the body part of the HTTP request, and corresponds to the contents of the process. For example, the multi-functional business apparatus 1200 can be configured so that the file management executing part 400 is executed by a function call. In the following, a third embodiment of the multi-functional business apparatus 1200 including the Web server will be described with reference to FIG.24.

FIG.24 is a diagram showing an example of the third functional configuration of the multi-functional business apparatus including the Web server, according to the third embodiment of the present invention. In FIG.24, parts that are the same as the ones in FIG.22 and FIG.23 are indicated by the same reference numerals and the explanation thereof will be omitted. Also, a process flow in FIG.24 is similar to that in FIG.23 and the explanation thereof will be omitted. In the third functional configuration shown in FIG.24, the Web server 500 sends the contents of the process to the XML processing part 50, and the XML processing part 50 creates an XML 27 showing the contents of the process and calls the file management executing part 400. The process after the notice of the process result by the file management executing part 400 is conducted as the same as that in the above-mentioned second functional configuration in the third embodiment of the present invention.

In the third functional configuration, since the Web server 500 can transmit the contents of the process to the XML processing part 50 and can receive the process result from the XML processing part 50, the Web server 500 does not need to know each Web service providing process part. The XML processing part 50 shared with the plurality of Web service providing process parts serves as an interface between the Web server 500 and each Web service providing process part.

At the network apparatus 10 connected through the network 15 to the multi-functional business apparatus 1200 including any one of the first, the second, the third functional configurations, for example, the process result by the file management Web service providing process part 40 is displayed at the screen as shown in FIG.19.

According to the third embodiment of the present invention, the network apparatus 10 does not need the special message exchange method with the multi-functional business apparatuses 1200. Only using the web browser, the network apparatus 10 can receive the Web service from the multi-functional business apparatus 1200, and can realize an RPC (Remote Procedure Call).

Moreover, for example, the multi-functional business apparatus 1200 can be configured so that the XML is created based on the process result received from the file management executing part 400 as the Web service function (WSF), and the HTML form is created from the XML by using the predetermined XSL (extensible Stylesheet Language) . by the Web server 500 with the XSL 25 according to the characteristics of the process in the executing part of each Web service, in case in that the process result is displayed at the network apparatus 10, it is possible to provide a display screen for each Web service.

Furthermore, the XML processing part 50 creates the XML showing the contents of the process of the body part of the HTTP request, and corresponds to the contents of the process. For example, the multi-functional business apparatus 1200 can be configured so that the file management executing part 400 is executed by a function call. Thus, the Web server 500 can transmit the contents of the process to the XML processing part 50, and can receive the process result from the XML processing part 50. The Web server 500 does not need to know each Web service providing process part, since the XML processing part 50 shared with the plurality of Web service providing process parts serves as an interface between the Web server 500 and each Web service providing process part.

Moreover, the present invention is not limited to the Web service concerning the file management. In the multi-functional business apparatus 1200 for forming images, the multi-functional business apparatus 1200 controls the operation panel 1310, conducts the print process, a scanner control, and a like, and processes various internal information concerning the image process, and then, can realize the Web service providing a process result to an apparatus that requested the Web service. It should be noted that the internal information can be various information concerning the multi-functional business apparatus 1200 and the image process, for example, image information, status information concerning the image information, information including control parameters to change settings of the multi-functional business apparatus 1200 or a Network IP, or a like. According to the first embodiment, it is possible to realize to conduct a predetermined process for the internal information and provide the process result as the Web service.

In the third embodiment of the present invention, the Web server 500 corresponds to a Web service communication control part, each of the Web service providing process parts 40 and 49 corresponds to a Web-service-providing process part, and a file management executing part 400 corresponds to a Web service executing part, in claims.

As described above, according to the present invention, instead of installing several driver software to a computer terminal of a user in order to utilize several image forming functions, the user only installs software supporting a standard Web service. Moreover, regardless of the machine type and the operating system of the computer terminal of the user, the computer terminal can send the process request to the multi-functional business apparatus 1200 having the plurality of the image forming functions. It is possible to conduct the process request by using the Web browser from the user to the multi-functional business apparatus 1200 including several image forming functions, regardless of the machine type and the operating system of the computer terminal. Furthermore, the multi-functional business apparatus 1200 can systematically process the process requests from other apparatuses.

### [Fourth Embodiment]

In the following, a fourth embodiment of the present invention will be described with reference to the accompanying drawings.

In the fourth embodiment of the present invention, the functional configuration shown in FIG.21 and the hardware configuration shown in FIG.2 can be applied to an image forming apparatus uniting various image forming functions (hereinafter, called a multi-functional business apparatus). Therefore, the explanation thereof will be omitted.

In FIG.21, the Web service process application 1215 includes a Web server 500 for processing a HTTP request of a GET METHOD or a POST METHOD and sending a HTTP response including an HTML, a Web service function (WSF) 1400 for conducting a predetermined process by using the control service 1250 through an API (Application Program Interface) and providing a process result trough a WS-API (Web Service Application Program Interface) as the Web service.

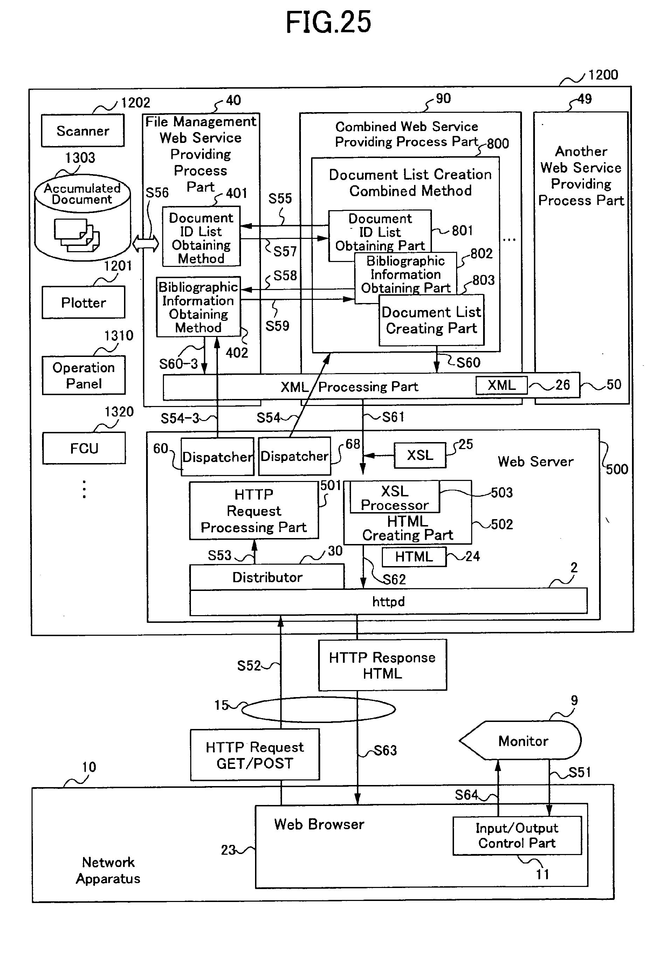

The multi-functional business apparatus 1200 including a combined Web service providing process part for providing a document list will be described in that the multi-functional business apparatus 1200 combines and executes a plurality of methods of one Web service providing process part. FIG.25 is a block diagram showing a first functional configuration of the multi-functional business apparatus including the Web server according to the fourth embodiment of the present invention. In FIG. 25, only main processing parts are illustrated among the processing parts of the multi-functional business apparatus 1200 shown in FIG.21, and other processing parts are omitted. In FIG.25, the multi-functional business apparatus 1200 mainly includes a file management Web service providing process part 40 and another Web service providing process part 49, a combined Web service providing process part 90 combining a plurality of methods of the file management Web service providing process part 40, an XML processing part 50 being shared with the Web service providing process parts 40, 49 and 90, a Web server 500 for controlling the message exchange by the HTTP request and the HTTP response, an operation panel 1310, a HDD (Hard Disk Drive) 1303, a FCU (Fax Control Unit) 1320, a plotter 1201, a scanner 1202, and a like. In the multi-functional business apparatus 1200, for the sake of convenience, as a plurality of Web service providing process parts, only the file management Web service providing process part 40, the combined Web service providing process part 90, and the other Web service providing process part 49 are shown. However, the multi-functional business apparatus 1200 can include more Web service providing process parts. Also, the XML processing part 50 is shared with those Web service providing process parts.

The file management Web service providing process part 40 includes a document ID list obtaining method 401 for obtaining a list of document IDs that specify the documents accumulated in the HDD 1303, and a bibliographic information obtaining method 402 for obtaining bibliographic information concerning the document accumulated in the HDD 1303 corresponding to the document ID. A method shows a unit of the process of the Web service by the file management Web service providing process part 40. The file management Web service providing process part 40 realizes the Web service function 1400 shown in FIG.21 by a plurality of methods, and provides the Web service in accordance with the request from the network apparatus 10. In a case of the first functional configuration shown in FIG.25, as the plurality of methods, it is not limited to the document ID list obtaining method 401 and the bibliographic information obtaining method 402. It is also possible to include a plurality of methods in addition to these methods.

The document list creation combined method 800 of the combined Web service providing process part 90 includes a document ID list obtaining part 801 for obtaining the list of document IDs by using the document ID list obtaining method 401, a bibliographic information obtaining part 802 for obtaining the bibliographic information corresponding to the document ID by using the bibliographic information obtaining method 402, and a document list creating part 803 for creating the document list based on the obtained bibliographic information. Since the document list creation combined method 800 utilizes the document ID list obtaining method 401 and the bibliographic information obtaining method 402, the document list creation combined method 800 does not have substantial methods. The portion developed in order to realize the document list creation combined method 800 is mainly only the document list creating part 803. Therefore, it is possible to reduce steps necessary to develop the document list creation combined method 800. Moreover, the combined Web service providing process part 90 includes a set of a plurality of process units in the document list creation combined method 800 and a plurality of process units by the methods having the substantial method, as the Web service function 1400 shown in FIG.21.

The Web server 500 includes a httpd 2 for conducting the communication control in accordance with the HTTP, a distributor 30 for distributing a process to the Web service providing process part corresponding to the HTTP request, an HTTP request processing part 501 for processing the HTTP request by the GET METHOD or the POST METHOD received from the network 15, dispatchers 60 and 68 for dispatching the process concerning the Web service, which is indicated by the HTTP request, to each Web service providing process, an HTML creating part 502 for creating an HTML 24 showing the process result in accordance with this HTML form. The HTML creating part 502 receives the process result described in the XML from the combined Web service providing process part 90. The HTML creating part 502 converts the XML 26 into the HTML form by the XSL processor 503 based on the XSL 25 showing the predetermined style list.

The network apparatus 10 connected to the multi-functional business apparatus 1200 through the network 15 includes a Web browser 23 including an input/output control part 11 for controlling the output data displayed at the monitor 9 while controlling the input data from an input unit, such as a keyboard or a mouse.

In such the first functional configuration in the fourth embodiment, the process flow of the Web service for providing the document list accumulated in the HDD 1303 will be described. A user using the network apparatus 10 requests desired the Web service of the multi-functional business apparatus 1200 from a screen, which is displayed on a monitor 9, for requesting the Web service of a multi-functional business apparatus 1200, and the input/output control part 11 receives the request data (step S51). Based on the request data received by the input/output control part 11, the Web browser 23 generates the HTTP request indicating the GET METHOD or the POST METHOD, and sends the HTTP request to the multi-functional business apparatus 1200 through the network 15 (step S52). For example, the web browser 23 sends the HTTP request by the GET METHOD such as

GET /documentListDcgi HTTP/1.1.

When the multi-functional business apparatus 1200 receives the HTTP request from the network apparatus 10, the distributor 30 distributes this HTTP request to the HTTP request processing part 501 which processes the HTTP request by the GET METHOD based on the GET METHOD of the HTTP request (step S53). The HTTP request processing part 501 dispatches the process to the document list creation combined method 800 specified by the header of the HTTP request, by the dispatcher 68 (step S54). For example, the document list creation combined method 800 equivalent to "documentList. cgi" is executed by "documentList.cgi."

First, the document list creation combined method 800 calls the document ID list obtaining method 401 of the file management Web service providing process part 40 by the document ID list obtaining part 801 (step S55). The document ID list obtaining method 401 obtains the document ID identifying the document managed by the HDD 1303 (step S56), and creates a document ID list.

Subsequently, the document list creation combined method 800 calls the bibliographic information obtaining method 402 of the file management Web service providing process part 40 by the bibliographic information obtaining part 802 (step S58). The bibliographic information obtaining method 402 inquires the bibliographic information by the document ID sent from the bibliographic information obtaining part 802 to the document managed in the HDD 1303, and creates the bibliographic information. For example, in a case in that the bibliographic information is obtained for the document ID "101", the bibliographic information obtaining part 802 executes the bibliographic information obtaining method 402 (getProps (docID, props)) by calling getProps (101 props).

The bibliographic information obtaining method 402 inquires the bibliographic information by the specified document ID in respect to the HDD 1303, and sends the bibliographic information to the bibliographic information obtaining part 802 (step S59). That is, the bibliographic information obtaining method 402 obtains the bibliographic information from the HDD 1303 by the document ID "101" received from the bibliographic information obtaining part 802. The bibliographic information obtaining method 402 creates the bibliographic information to send to the bibliographic information obtaining part 802. For example, the bibliographic information is created as follows:
prop= {a document ID, a document name, pagination, an owner, and 0} ("0 (zero)" shows the end of bibliographic information). In this case, prop= {101, the "accumulated document 1", 3, "a user 1", and 0} is set for the document ID "101". The bibliographic information obtaining method 402 sends a creation result of the bibliographic information for the specified document ID, to the bibliographic information obtaining part 802 of the document list creation combined method 800.

The bibliographic information obtaining part 802 of the document list creation combined method 800 repeats the same process as described above, for other document IDs "102" and "103", and then, obtains all document information.

The document list creation combined method 800 further creates the document list by the document list creating part 803, and sends the document list to the XML processing part 50 in order to describe in the XML (step S60). That is, for example, the document list creating part 803 creates a document list as follows:
docList={{101, the " accumulated document 1", 3, "a user 1", and 0}, {102, the " accumulated document 2", 10, "a user 2" and 0}, and {103, the " accumulated document 3", 1, "a user 1", 0}, 0}.
The document list (docList) is sent to the XML processing part 50. When the document list (docList) is received, the XML processing part 50 sends an XML 26 described in the XML to the Web server 500 (step S61). When the Web server 500 receives the XML 26, the Web server 500 executes the HTML creating part 502. The HTML creating part 502 converts the XML 26 into the HTML form by the XSL processor 503 based on the XSL 25 showing the predetermined style list. The HTML creating part 502 creates the HTML 24 showing the process result in accordance with this HTML form, and sends the HTTP response by the httpd 2 (step S62). Then, the httpd 2 sends the HTTP response to the network apparatus 10 through the network 15 (Step S63).

When the HTTP response is received by the network apparatus 10, the web browser 23 displays the HTML 24 on the monitor 9 by the input/output control part 11 (step S64).

In the first functional configuration in the fourth embodiment, the network apparatus 10 is not required to conduct a special message exchanging method with the multi-functional business apparatuses 1200. By using only the Web browser, the network apparatus 10 receives the Web service from the multi-functional business apparatuses 1200, and can realize an RPC (Remote Procedure Call). Moreover, the combined Web service providing process part 90 can process a sequence of Web services combining a plurality of methods by the document list creation combined method 800, without having the substantial document ID list obtaining method 401 and the bibliographic information obtaining method 402. Therefore, by combining a plurality of methods, it is possible to conduct a sequence of Web services.. Therefore, the network apparatus 10 can receive the sequence of Web services by a single HTTP request, without considering the unit of the Web service that the multi-functional business apparatus 1200 can provide.

Moreover, the first functional configuration, the XML processing part 50 can be included in the combined Web service providing process part 90.

The XML processing part 50 shown in FIG.25 describes a document list (docList) in the XML as shown in FIG. 16.

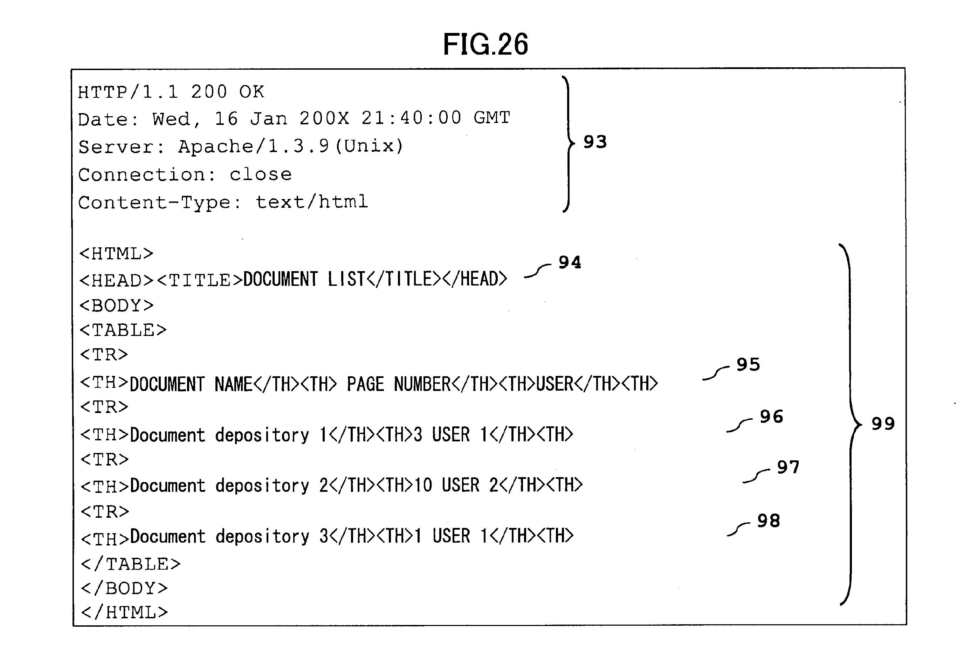

Moreover, the document list described in the XML shown in FIG. 16 is converted into the document list described by the XSL processor 503 of the HTML creating part 502 in the HTML based on XSL25 as shown in FIG.26. FIG.26 is a diagram showing the document list described in the HTML by the HTML creating part, according to the fourth embodiment of the present invention. In FIG.26, a description 93 shows the header of the HTTP response and a description 99 shows the body part of the HTTP response.

In a description 99, a description 94 shows the header of HTML and is description for displaying the title "a document list" corresponding to the Web service which the user of the network apparatus 10 requested. A description 95 is a description for displaying a subject name of the document list. A description 96 is a description in the HTML converted from the description 53 in the XML shown in FIG. 16. A description 97 is a description in the HTML converted from the description 54 in the XML shown in FIG. 16. A description 98 is a description in the HTML converted from the description 55 in the XML shown in FIG.16.

By these descriptions converted into HTML, a screen as shown in FIG. 19 is displayed on the monitor 9 of the network apparatus 10.

In FIG.25, it is also possible to provide the Web service by the file management Web service providing processing part 40 itself. That is, when the httpd 2 receives the HTTP request from the network apparatus 10 (step S52), the distributor 30 distributes this HTTP request to the HTTP request processing part 501 for processing the HTTP request by the GET method based on the GET method of the HTTP request (step S53). The HTTP request processing part 501 dispatches the process to the bibliographic information obtaining method 402 specified by the dispatcher 60 by the header of the HTTP request (step S54-3).

In respect to the document managed by the HDD 1303, the bibliographic information obtaining method 402 inquires the bibliographic information by the document ID specified by the HTTP request, creates bibliographic information, and sends to the XML processing part 50 in order for XML to describe the bibliographic information (step S60-3). By steps S61-S63, the bibliographic information is provided to the network apparatus 10.

Thus, the multi-functional business apparatus 1200 can execute the bibliographic information obtaining method 402 itself having a substantial method according to the HTTP request for providing the bibliographic information from the network apparatus 10. Similarly, it is possible to execute the document ID list obtaining method 401 itself.

Therefore, the multi-functional business apparatus 1200 can provide wider Web service by a plurality of methods conducting the Web service and also by combining the plurality of methods.

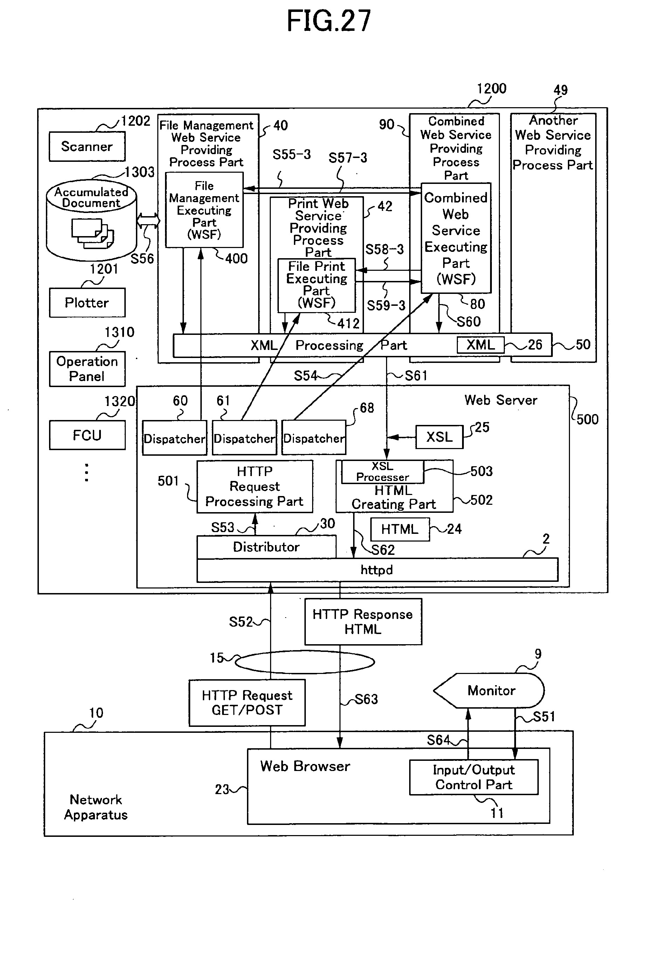

In the first functional configuration, the functional configuration and process flow of the multi-functional business apparatus 1200, which includes the combined Web service providing process part for combining and executing the plurality of methods in one Web service providing process part, are described above. In the following, the multi-functional business apparatus 1200, which includes the combined Web service providing process part for combining and executing the plurality of Web service providing process part and prints out the document list, will be described with reference to FIG.27. FIG.27 is a diagram showing a second functional configuration of the multi-functional business apparatus including the Web server, according to the fourth embodiment of the present invention. In FIG.27, only main processing parts are illustrated among the processing parts of the multi-functional business apparatus 1200 shown in FIG.21, and other processing parts are omitted. In FIG. 27, parts that are the same as the ones in FIG.25 are indicated by the same reference numerals and the explanation thereof will be omitted. Also, a process flow in FIG. 27 is similar to that in FIG. 25 and the explanation thereof will be omitted.

In the second functional configuration shown in FIG.27, the multi-functional business apparatus 1200 includes a file management Web service providing process part 40, and a print Web service providing process part 42. In a different point from the first functional configuration, the combined Web service executing part 80 of the combined Web service providing process part 90 combines and executes an executing part 400 of the file management Web service providing process part 40 and an executing part 412 of the print Web service providing process part 42.

In the second functional configuration, the file management Web service providing process part 40 includes the file management executing part 400 for controlling the HDD 1303 which accumulates a document as the Web service function 1400 shown in FIG.21. As the Web service function 1400, the print Web service providing process part 42 includes the file print executing part 412 for controlling the plotter 1201, in order to print the document. Since the combined Web service executing part 80 just utilizes the file management executing part 400 and the file print executing part 412, the combined Web service executing part 80 does not have a substantial executing part as the Web service function 1400. Therefore, it is possible to greatly reduce development time and cost for the combined Web service executing part 80.

In the second functional configuration, when the Web server 500 receives the request of the Web service for printing the document accumulated in the HDD 1303 from the network apparatus 10 by the HTTP request, in a case in which the dispatcher 68 dispatches the process, the combined Web service executing part 80 of the Web service providing process part 90 executes the file management executing part 400 (step S55-3). The file management executing part 400 obtains the document list by accessing the HDD 1303 (step S56). And the combined Web service executing part 80 obtains the document list from the HDD 1303 (step S57-3).

The combined Web service executing part 80 sends the request for printing the document list obtained from the file management executing part 400 to the file print executing part 402 of the file print Web service providing process part 42 (step S59-3). The file print executing part 402 conducts a print control of the document list sent from the combined Web service executing part 80 to the plotter 1201, and sends the process result to the combined Web service executing part 80 (step S59-3). The same process as the first functional configuration is conducted, and the information concerning the print process of the document list is displayed on the monitor 9 of the network apparatus 10.

As described above, in the second functional configuration, the combined Web service executing part 80 of the combined Web service providing process part 90 controls a plurality of Web service providing process parts. Therefore, the network apparatus 10 can receive the sequence of Web services by a single HTTP request, without considering the unit of the Web service that the multi-functional business apparatus 1200 can provide. The multi-functional business apparatus 1200 can provide wider Web service by the Web service providing process part itself and by combining the plurality of Web service providing process parts.

In the second functional configuration, the Web service by combining the file management Web service providing process 40 and the file print Web service providing process part 42 is described. However, it is not limited to this combination. For example, it is possible to provide a Web service for obtaining the document list by the file management Web service providing process part 40 and sends to a destination by he FCU 1320.

Similar to the first functional configuration, when the dispatcher 60 dispatches the process to the file management executing part 400, the file management executing part 400 obtains the document list from the HDD 1303, and provides the document list as the Web service by the Web server to the network apparatus 10. Also, when the dispatcher 61 dispatches the process to the file print executing part 400, the file print executing part 400 obtains the document from the HDD 1303, print the document by the plotter 1201, and sends a print result as the Web service by the Web server to the network apparatus 10.

As described above, the multi-functional business apparatus 1200 can also execute the substantial file management executing part 400 and the substantial file print executing part 41.

In the first and the second functional configurations, it is possible for a plurality of network apparatuses 10 to be connected to the multi-functional business apparatus 1200 through the network 15, and to conduct the Web service according to the HTTP request from each network apparatus 10 by the HTTP response.

By using only the Web browser, the network apparatus 10 receives the Web service from the multi-functional business apparatuses 1200, and can realize an RPC (Remote Procedure Call).

Furthermore, for example, the multi-functional business apparatuses 1200 can be configured so that the XML is created from the process result by the file management executing part 400 as the Web service function (WSF) and the HTML format is generated based on predetermined XSL. By the Web server 500 with the XSL 25 according to the characteristics of the process in the executing part of each Web service, in case in that the process result is displayed at the network apparatus 10, it is possible to provide a display screen for each Web service.

Moreover, the present invention is not limited to the Web service concerning the file management. In the multi-functional business apparatus 1200 for forming images, the multi-functional business apparatus 1200 controls the operation panel 1310, conducts the print process, a scanner control, and a like, and processes various internal information concerning the image process, and then, can realize the Web service providing a process result to an apparatus that requested the Web service. It should be noted that the internal information can be various information concerning the multi-functional business apparatus 1200 and the image process, for example, image information, status information concerning the image information, information including control parameters to change settings of the multi-functional business apparatus 1200 or a Network IP, or a like. According to the first embodiment, it is possible to realize to conduct a predetermined process for the internal information and provide the process result as the Web service.

In the second embodiment of the present invention, the httpd 2 corresponds to a network communication control part, the file management Web service providing process part 40 corresponds to a Web service providing process part, and each of the document-ID list obtaining method 401 and the bibliographic information obtaining method 402 corresponds per process. The combined Web service providing process part 90 corresponds to the combined Web service providing process part, and the document list creation combined method 800 corresponds to a combining process executing part. Moreover, the operation panel control Web service providing processing part 48 corresponds to an internal Web service providing process part.

As described above, according to the present invention, instead of installing several driver software to a computer terminal of a user in order to utilize several image forming functions, the user only installs software supporting a standard Web service. Moreover, regardless of the machine type and the operating system of the computer terminal of the user, the computer terminal can send the process request to the multi-functional business apparatus 1200 having the plurality of the image forming functions. It is possible to conduct the process request by using the Web browser from the user to the multi-functional business apparatus 1200 including several image forming functions, regardless of the machine type and the operating system of the computer terminal. Furthermore, the multi-functional business apparatus 1200 can systematically process the process requests from other apparatuses.

### [Fifth Embodiment]

In the following, a fifth embodiment of the present invention will be described with reference to the accompanying drawings.

In the fifth embodiment of the present invention, the functional configuration shown in FIG.21 and the hardware configuration shown in FIG.2 can be applied to an image forming apparatus uniting various image forming functions (hereinafter, called a multi-functional business apparatus). Therefore, the explanation thereof will be omitted.

In FIG.21, the Web service process application 1215 includes a Web server 500 for processing a HTTP (HyperText Transfer Protocol) request of and sending a HTTP response, a Web service function (WSF) 1400 for conducting a predetermined process by using the control service 1250 through an API (Application Program Interface) and providing a process result trough a WS-API (Web Service Application Program Interface) as the Web service.

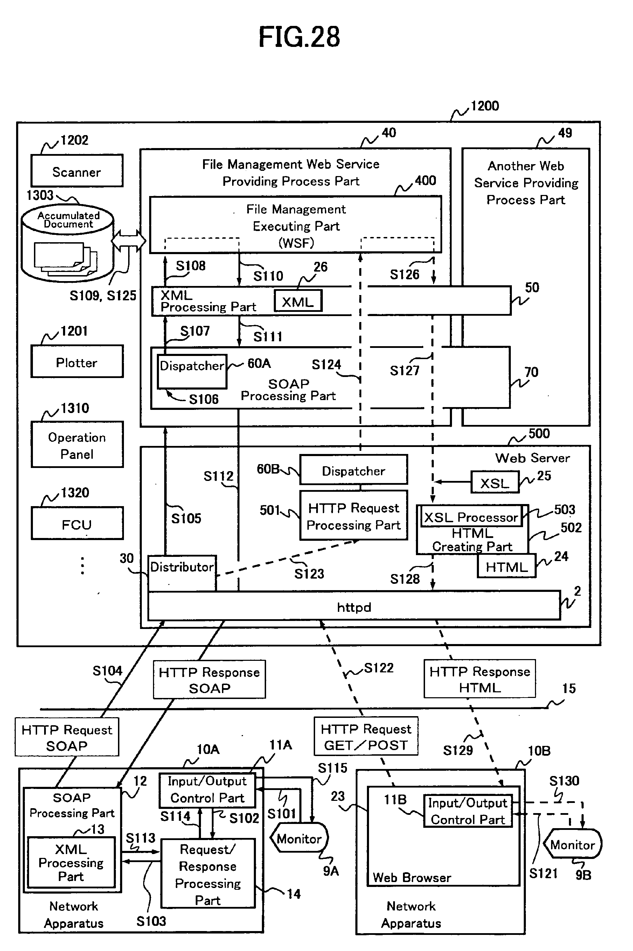

In the following, the functional configuration of the multi-functional business apparatus 1200 that can provide the Web service by the SOAP and the HTML will be described with reference to FIG.28. FIG 28 is a diagram showing a first functional configuration of the multi-functional business apparatus for providing Web service, according to the fifth embodiment of the present invention. In FIG.28, only main processing parts are illustrated among the processing parts of the multi-functional business apparatus 1200 shown in FIG.21, and other processing parts are omitted. The multi-functional business apparatus 1200 is connected to a network apparatus 10A which receives the Web service by the SOAP, and a network apparatus 10B which receives the Web service by the HTML through the network 15.

The multi-functional business apparatus 1200 includes a Web server 500 for distributing the process to an internal Web service providing process part while conducting communication control in accordance with the HTTP, a file management Web service providing process part 40 and another Web service providing process part 49 as a plurality of Web service providing process part, a scanner 1202, a HDD 1303, a plotter 1201, an operation panel 1310, a FAX control-unit 1530, and a like. The plurality of Web service providing process parts 40 and 49 include the Web service function (WSF) 1400, respectively.

In the case of the first functional configuration shown in FIG.28, the file management Web service providing process part 40 includes a file management executing part 400 for controlling the file management, such as a document accumulated to the HDD 1303, as the Web service function 1400 that executes the Web service. Also, the plurality of the Web service providing process part 40 and 49 are included in the Web service process application 1215.

The Web server 500 includes a httpd 2 for conducting the communication control in accordance with the HTTP, a distributor 30 for distributing a process to the Web service providing process part corresponding to the HTTP request, an HTTP request processing part 501 for processing the HTTP request by the GET METHOD or the POST METHOD received from the network 15, a dispatcher 60B for dispatching the process concerning the Web service, which is indicated by the HTTP request, to the file management executing part 400, an HTML (HyperTest Markup Language) showing a process result received from the file management executing part 400. The HTTP request is a request of the Web service by a data communication in accordance with the HTTP, and the HTTP response is a response showing a process result of the Web service.

The distributor 30 includes a judging part for judging whether or not the HTTP request is the HTTP request indicating the SOAP. When the HTTP request indicates the SOAP, the distributor 30 distributes the process to the Web service providing process part 40 or 49 indicated by a SOAPAction. On the other hand, when the HTTP request does not indicate the SOAP, that is, the HTTP request indicates a GET METHOD or POST METHOD, the distributor 30 distributes the HTTP request to the HTTP request processing part 501.

Furthermore, the HTML creating part 502 includes an XSL processor 503 for converting XML generated by the XML processing part 50 into an HTML format by using a predetermined XSL (eXtensible Stylesheet Language)25. The multi-functional business apparatus 1200 includes a XML processing part 50 for processing a message described in the XML and a SOAP processing part 70, which are shared with the plurality of the Web service providing parts 40 and 49.

The XML processing part 50 generates the body part of the HTTP response, which does not specify SOAP, by describing in the XML by the same method for generating the body part of the HTTP response indicating the SOAP. Furthermore, the SOAP processing part 70 includes a dispatcher 60A for dispatching to the file management executing part 400 based on the process message showing the contents of a process of Web service.

In the multi-functional business apparatus 1200, for the sake of convenience, as a plurality of Web service providing process parts, only the file management Web service providing process part 40, and the other Web service providing process part 49 are shown. However, the multi-functional business apparatus 1200 can include more Web service providing process parts. In this case, the SOAP processing part 70 includes a plurality of dispatcher 60A for dispatching the process to each executing part of the plurality of Web service providing process parts. Also, the XML processing part 50 and the SOAP processing part 70 are shared with the plurality of Web service providing process parts. A plurality of dispatchers 60B are corresponded to the plurality of Web service providing process parts.

Moreover, the network apparatus 10A connected to the multi-functional business apparatus 1200 through a network 15 controls'input data from input units, such as a keyboard or a mouse, and includes an input/output control part 11A for controlling output data displayed on a monitor 9A, a SOAP processing part 12 for exchanging messages to the multi-functional business apparatus 1200 in accordance to the SOAP, a request/response processing part 14 for generating the request and analyzing the response in accordance with the HTTP. The SOAP processing part 12 includes an XML processing part 13 for processing the contents of the process of the Web service to the multi-functional business apparatus 1200 and the process result of the Web service from the multi-functional business apparatus 1200 by the XML. The network apparatus 10A connected to the multi-functional business apparatus 1200 through a network 15 controls input data from input units, such as a keyboard or a mouse, and includes an input/output control part 11B for controlling output data displayed on a monitor 9B, and a Web browser 23 for generating a request displaying a response in accordance with the HTTP.

First, the process flow which provides Web service according to the request from the network apparatus 10A will be described. The user using the network apparatus 10A requests a desired Web service of the multi-functional business apparatus 1200 from the screen for requesting of the multi-functional business apparatus 1200 (step S101). In response to the request of the Web service by the user, the input/output control part 11A sends request data to the request/response processing part 14 (step S102). The request/response processing part 14 generates the HTTP request based on the request data from the input/output control part 11A (step S103). When the XML processing part 13 describes the contents of the process to the body part of the HTTP request in the XML, and the HTTP request is sent to the multi-functional business apparatus 1200 by the SOAP processing part 12 through the network 15 (step S104).

When the Web server 500 of the multi-functional business apparatus 1200 receives the HTTP request by the httpd 2, the HTTP request is distributed to the Web service providing process part specified by the header of the HTTP request by the distributor 30 (step S105). For example, when the file management Web service providing process part 40 is specified by the header of the HTTP request, the file management Web service providing process part 40 is called by the distributor 30.

In the file management Web service providing process part 40, the SOAP processing part 70 processes the HTTP request according to the SOAP, and sends to the dispatcher 60A for dispatching the process to the file management executing part 400 specified by the SOAP header (step S106). The dispatcher 60A dispatches the contents of the process by the header of the HTTP request, and sends them to the XML processing part 50 (step S107). The XML processing part 50 converts the message showing the contents of the process in the body part of the HTTP request described in the XML into a description which can be interpreted by the file management executing part 400, and executes the file management executing part 400 (step S108). The file management executing part 400 executes the process to the HDD 1303 in accordance with the contents of the process, and obtains the process result (step S109). For example, the document indicated by the contents of the process is added, updated, or deleted.

The file management executing part 400 sends the process result to the XML processing part 50 (step S110). The XML processing part 50 generates the XML 26 describing the process result in the XML, and sends to the SOAP processing part 70 in order to set in the body part of the HTTP response (step S111). And Web server 500 sends the HTTP response in accordance with the SOAP through the httpd 2 in the body part to the network apparatus 10A (step S112). The HTTP response includes the process result described in the XML.

When the HTTP response is received at the network apparatus 10A, the XML processing part 13 analyzes the body part of the HTTP response, and obtains the process result (step S113). The request/response processing part 14 passes the obtained process result to the input/output control part 11A as output data displayed on the monitor 9A (step S114). And the input/output control part 11A is controlled to display the received output data on the monitor 9A (step S115).

The network apparatus 10A describes the contents of the process to the body part of the HTTP request in accordance with the description format of the XML that is defined beforehand. Thus, the Web service can be requested from a remote place from the multi-functional business apparatus 1200. Thus, it is possible to provide the Web service to the network apparatus 10A in a remote place. A multi-functional business apparatus 1200 can also provide the Web service to a plurality of network apparatuses 10A through the network 15.

A process flow, in which the Web service is provided in response to the request from the network apparatus 10B, will be described. The user using the network apparatus 10B requests a desired Web service of the multi-functional business apparatus 1200 from the screen for requesting the Web service displayed on the monitor 9B of the multi-functional business apparatus 1200. The input/output control part 11B receives the request data (step S121). Based on the request data received by the input/output control part 11B, the web browser 23 generates the HTTP request by the GET METHOD or the POST METHOD, and sends to the multi-functional business apparatus 1200 through the network 15 (step S122).

The multi-functional business apparatus 1200 analyzes the HTTP request by the Web server 500, when the HTTP request is received from the network-apparatus 10B. That is, when the httpd 2 for conducting the network communication control receives the HTTP request, the HTTP request is distributed to the HTTP request processing part 501 by the distributor 30, so as to analyze the HTTP request in accordance with the method (GET METHOD or POST METHOD) indicated by the header of the HTTP request (step S123).

The HTTP request processing part 501 obtains the contents of the process from the body part in accordance to the method. For example, when the file management Web service is specified by a URL (Uniform Resource Locator) or a URI (Uniform Resource Indicator) by the header, the process according to the contents of the process is distributed to the file management executing part 400 by the dispatcher 60B (step S124). The file management executing part 400 executes the process to the HDD 1303 according to the contents of the process, and obtains the process result (step S125). For example, the document is added, updated, or deleted in accordance with the contents of the process.

The file management executing part 400 for obtaining the process result sends the process result to the XML processing part 50 (step S126). In the same method for generating the body part of the HTTP response in accordance with the SOAP, the XML processing part 50 generates the XML 26 showing the process result in the XML, and sends the HTML creating part 502 of the Web server 500 in order to set in the body part of a HTTP response (step S127). The HTML creating part 502 generates the HTML 24 converted into the HTML format by using a predetermined XSL 25 by the XSL processor 503, and sends the HTML 24 by the httpd 2 (step S128). The httpd 2 sends the HTML 24 to the network apparatus 10B in accordance with the http (step S129).

When the HTTP response is received in the network apparatus 10B, the web browser 23 displays the HTML 24 on the monitor 9B by the input/output control part 11B (step S130).

By using only the Web browser 23, the network apparatus 10B receives the Web service from the multi-functional business apparatuses 1200, and can realize an RPC (Remote Procedure Call) . By the Web server 500 with the XSL 25 according to the characteristics of the process in the executing part of each Web service, in case in that the process result is displayed at the network apparatus 10, it is possible to provide a display screen for each Web service.

Therefore, the multi-functional business apparatus 1200 can provide the Web service by the same file management executing part 400 to the network apparatus 10A which can conduct the message exchange in accordance with the SOAP, and also the network apparatus 10B using the web browser 23. The file management Web service providing process part 40 for including the file management executing part 400 can share with the process requests according to different protocols, respectively. Accordingly, It is not necessary to develop the file management Web service providing process part 40 to support each protocol of the process request.

Moreover, in the multi-functional business apparatus 1200, the Web server 500 uses the XSL 25, so that a process for describing the body part of the HTTP response indicating the SOAP can be the same as that for describing the body part of the HTTP response indicating other than the SOAP, in the XML processing part 50. Thus, a single process for describing the body part of the HTTP response can be shared with the HTTP responses indicating different protocols, respectively.

The examples of the HTTP request and the HTTP response in accordance with the SOAP are shown in FIG. 11A and FIG. 11B. Thus, the explanation thereof will be omitted.

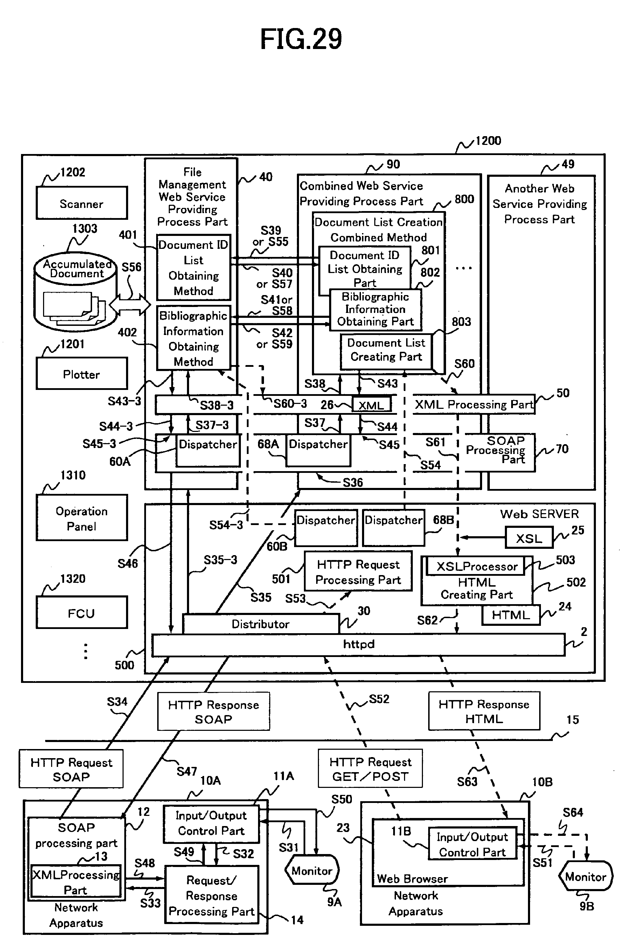

The multi-functional business apparatus 1200 including a combined Web service providing process part for providing a document list will be described in that the multi-functional business apparatus 1200 combines and executes a plurality of methods of one Web service providing process part. FIG.29 is a block diagram showing a second functional configuration of the multi-functional business apparatus including a combined Web service, according to the fifth embodiment of the present invention. In FIG.29, only main processing parts are illustrated among the processing parts of the multi-functional business apparatus 1200 shown in FIG.21, and other processing parts are omitted. The multi-functional business apparatus 1200 is connected to a network apparatus 10A which receives the Web service by the SOAP, and a network apparatus 10B which receives the Web service by the HTML through the network 15.

In FIG.29, The multi-functional business apparatus 1200 includes a Web server 500 for distributing the process to an internal Web service providing process part while conducting communication control in accordance with the HTTP, a file management Web service providing process part 40, another Web service providing process part 49, and combined-Web-service providing process part 90 as a plurality of Web service providing process part, an XML processing part 50 for processing the message described in the XML, a SOAP processing part 70 for exchanging the message in accordance with the SOAP between the network apparatuses 10A and 10B, a scanner 1202, a HDD 1303, a plotter 1201, an operation panel 1310, a FAX control-unit 1530, and a like.

The XML processing part 50 and the SOAP processing part 70 are shared the plurality of Web service providing process parts 40, 49, and 90. Moreover, the plurality of Web service providing process parts 40, 49, and 90 are included in the Web service process application 1215 shown in FIG.21.

The Web server 500 includes a httpd 2 for conducting a communication control in accordance with the HTTP, a distributor 30 for distributing the process to the Web service providing process part corresponding to the HTTP request, an HTTP request processing part 501 for processing the HTTP request by the GET METHOD or the POST METHOD received from the network 15, dispatchers 60A and 68A for dispatching the process of the Web service indicated by the HTTP request for each Web service providing process part, an HTML creating part 502 for creating the process result, which is sent from each of the Web service providing process parts 40, 90, and 49 and is described in the XML by the HTML 24. The HTML creating part 502 includes the XSL processor 503 for converting the XML generated by the XML processing part 50 into a HTML format. The HTTP request is a request of the Web service by a data communication in accordance with the HTTP and the HTTP response is a response showing a process result of the Web service.

The distributor 30 includes a judging part for judging whether or not the HTTP request is the HTTP request indicating the SOAP. When the HTTP request indicates the SOAP, the distributor 30 distributes the process to the Web service providing process part 40 or 49 indicated by a SOAPAction. On the other hand, when the HTTP request does not indicate the SOAP, that is, the HTTP request indicates a GET METHOD or POST METHOD, the distributor 30 distributes the HTTP request to the HTTP request processing part 501.

The file management Web-service-providing processing part 40 includes a document ID list obtaining method 401 for obtaining the list of document IDs identifying the document accumulated in the HDD 1303, and bibliographic information obtaining method 402 for obtaining bibliographic information concerning the document accumulated in the HDD 1303 corresponding to the document ID. A method shows a unit of the process of the Web service by the file management Web service providing process part 40. The file management Web service providing process part 40 realizes the Web service function 1400 shown in FIG.21 by a plurality of methods, and provides the Web service in accordance with the request from the network apparatus 10. In a case of the second functional configuration shown in FIG.29 as the plurality of methods, it is not limited to the document ID list obtaining method 401 and the bibliographic information obtaining method 402. It is also possible to include a plurality of methods in addition to these methods.

The document list creation combined method 800 of the combined Web service providing process part 90 includes a document ID list obtaining part 801 for obtaining the list of document IDs by using the document ID list obtaining method 401, a bibliographic information obtaining part 802 for obtaining the bibliographic information corresponding to the document ID by using the bibliographic information obtaining method 402, and a document list creating part 803 for creating the document list based on the obtained bibliographic information. Since the document list creation combined method 800 utilizes the document ID list obtaining method 401 and the bibliographic information obtaining method 402, the document list creation combined method 800 does not have substantial methods. The portion developed in order to realize the document list creation combined method 800 is mainly only the document list creating part 803. Therefore, it is possible to reduce steps necessary to develop the document list creation combined method 800. Moreover, the combined Web service providing process part 90 include a set of a plurality of process units in the document list creation combined method 800 and a plurality of process units by the methods having the substance thereof, as the Web service function 1400 shown in FIG.21.

Moreover, the SOAP processing part 70 includes the dispatchers 60A and 68A for dispatching the process to each of the Web service providing process parts 40 and 90. For example, the SOAP processing part 70 includes the dispatcher 60A for dispatching the process to each of methods 401 and 402 of the file management Web service providing process part 40, the dispatcher 68A for dispatching the process to the document list creation combined method 800 of the combined Web service providing process part 90, and other dispatchers (not shown in FIG.29) for dispatching the process to a method of the other Web service providing process part 49. In the multi-functional business apparatus 1200, for the sake of convenience, as a plurality of Web service providing process parts, only the file management Web service providing process part 40, the combined Web service providing process part 90, and the other Web service providing process part 49 are shown. However, the multi-functional business apparatus 1200 can include more Web service providing process parts. Also, the XML processing part 50 and the SOAP processing part 70 are shared with those Web service providing process parts.

Since the second functional configurations of the network apparatuses 10A and 10B connected to the multi-functional business apparatus 1200 through the network 15 are the same as those of the network apparatuses 10A and 10B shown in FIG.28, the explanation will be omitted.

First, the process flow for providing the Web service according to the request from the network apparatus 10A will be described. A user using such the network apparatus 10A requests a desired Web service of the multi-functional business apparatus 1200 from a screen for requesting of the multi-functional business apparatus 1200 (step S31). For example, it is assumed that the user requests the Web service that provides a list of the document accumulated in the HDD 1303 of the multi-functional business apparatus 1200 from the screen of the monitor 9A. In response to a request of the Web service from the user, the input/output control part 11A sends the request data to the request/response processing part 14 (step S32). The request/response processing part 14 generates the HTTP request based on the request data from the input/output control part 11A, and sends to the SOAP processing part 12 (step S33). The SOAP processing part 12 describes the contents of the process of the Web service in the XML by the XML processing part 13 and sets in the body part of the HTTP request, so as to generate the HTTP request in accordance with the SOAP. Then, the HTTP request is sent to the multi-functional business apparatus 1200 through the network 15 (step S34).

When the httpd 2 of the multi-functional business apparatus 1200 receives the HTTP request, the httpd 2distributes the HTTP request to the Web service providing process part, which is indicated by the header of the HTTP request, by the distributor 30 (step S35). For example, when the combined Web service providing process part 90 is specified by the header of the HTTP request, the combined Web service providing process part 90 is executed by the distributor 30.

The combined Web service providing process part 90 sends the HTTP request to the SOAP processing part 70, in order to process the HTTP request in accordance with SOAP (Step S36). The SOAP processing part 70 processes a HTTP request in accordance with SOAP. And the dispatcher 68 distributes the process to the document list creation combined method 800 specified by the header of the HTTP request, and executes the XML processing part 50 according to the method of HTTP (Step S37). The XML processing part 50 converts the message, which is described in the XML and shows the contents of the process in the body part of the HTTP request, into a description which can be interpreted by the document list creation combined method 800. Then, The XML processing part 50 sends the message to the document list creation combined method 800 (Step S38).

First, the document list creation combined method 800 calls the document ID list obtaining method 401 of the file management Web service providing process part 40 by the document ID list obtaining part 801 (Step S39). The document ID list obtaining method 401 obtains the document ID identifying the document managed by the HDD 1303, and creates the document ID list. In this case, it is assumed that the document ID list obtaining method 401 (listID (docIDList)) obtains a document ID "101", "102", and "103." A document ID list (docIDList) is set as follows: docIDList= {101, 102, 103, and 0} ("0 (zero)" shows an end),
and the document ID list is sent to the document ID list obtaining part 801 (step S40).

Subsequently, the document list creation combined method 800 calls the bibliographic information obtaining method 402 of the file management Web service providing process part 40 by the bibliographic information obtaining part 802 (step S41). In respect to the document managed in the HDD 1303, the bibliographic information obtaining method 402 inquires the bibliographic information by the document ID received from the bibliographic information obtaining part 802, and creates bibliographic information. For example, in a case in that the bibliographic information is obtained for the document ID "101", the bibliographic information obtaining part 802 executes the bibliographic information obtaining method 402 (getProps (docID, props)) by calling getProps (101 props).

The bibliographic information obtaining method 402 inquires the bibliographic information by the specified document ID in respect to the HDD 1303, and sends the bibliographic information to the bibliographic information obtaining part 802 (step S42). That is, the bibliographic information obtaining method 402 obtains the bibliographic information from the HDD 1303 by the document ID "101" received from the bibliographic information obtaining part 802. The bibliographic information obtaining method 402 creates the bibliographic information to send to the bibliographic information obtaining part 802. For example, the bibliographic information is created as follows:
prop= {a document ID, a document name, pagination, an owner, and 0} ("0 (zero)" shows the end of bibliographic information). In this case, prop= {101, the "accumulated document 1", 3, "a user 1", and 0} is set for the document ID "101". The bibliographic information obtaining method 402 sends a creation result of the bibliographic information for the specified document ID, to the bibliographic information obtaining part 802 of the document list creation combined method 800 (step S42).

The bibliographic information obtaining part 802 of the document list creation combined method 800 repeats the same process as described above, for other document IDs "102" and "103", and then, obtains all document information.

The document list creation combined method 800 further creates the document list by the document list creating part 803, and sends the document list to the XML processing part 50 in order to describe in the XML (step S43). That is, for example, the document list creating part 803 creates a document list as follows:
docList={{101, the " accumulated document 1", 3, "a user 1", and 0}, {102, the " accumulated document 2", 10, "a user 2" and 0}, and {103, the " accumulated document 3", 1, "a user 1", 0}, 0}.
The document list (docList) is sent to the XML processing part 50. When the document list (docList) is received, the XML processing part 50 describes the document list (docList) in the XML and sends to the SOAP processing part 70 (step S44). When the SOAP processing part 70 receives the document list described in the XML, the SOAP processing part 70 sets the document list described in XML to the body part of the HTTP response, and generates the HTTP response in accordance to SOAP (step S45).

The SOAP processing part 70 sends the HTTP response to the httpd 2 (step S46), and then the HTTP response is sent to the network apparatus 10A (step S47).

At the network apparatus 10A receives the HTTP response, the SOAP processing part 12 processes the HTTP response by using the XML processing part 13. The XML processing part 13 analyzes the body part of the HTTP response, and obtains the process result, and sends to the request/response processing part 14 (step S48). The request/response processing part 14 passes the obtained process result to the input/output control part 11A as output data displayed on the monitor 9A (step S50).

In the second functional configuration, by the document list creation combined method 800, the combined Web service providing process part 90 can process the sequence of Web services combining the plurality of methods, without having a substantial document ID list obtaining method 401 and a substantial bibliographic information obtaining method 402. Therefore, the network apparatus 10A can receive the sequence of Web services by a single HTTP request, without considering the unit of the Web service that the multi-functional business apparatus 1200 can provide.

Furthermore, in FIG.29, it is also possible to provide the Web service by the file management Web service providing process part 40 itself. That is, when the httpd 2 receives the HTTP request from the network apparatus 10A or 10B (Step S34), the distributor 30 distributes the HTTP request to the bibliographic information obtaining method 402 of the file management Web-service-providing processing part 40, in response to a request of the Web service for obtaining the bibliographic information indicated in the header of the HTTP request (step S35-3).

The file management Web service providing process part 40 sends the HTTP request to the SOAP processing part 70, in order to process the HTTP request in accordance with SOAP (step S36-3). The SOAP processing part 70 processes the HTTP request in accordance with the SOAP. The dispatcher 60A dispatches the process to the bibliographic information obtaining method 402 specified by the header of the HTTP request, and executes the XML processing part 50 according to the method of HTTP (step S37-3). The XML processing part 50 converts the message showing the contents of the process in the body part of the HTTP request described in the XML into the data format that can be interpreted by the bibliographic information obtaining method 402, and sends to the bibliographic information obtaining method 402 (step S38-3).

In respect to the document managed in the HDD 1303, the bibliographic information obtaining method 402 inquires the bibliographic information by the document ID specified by the message processed by the XML processing part 50. And the bibliographic information obtaining method 402 sends to the XML processing part 50, in order to describe the bibliographic information in the XML (step S43-3). The XML processing part 50 generates the XML 26 describing the bibliographic information in the XML and sends the XML 26 to the SOAP processing part 70 (step S44-3). Furthermore, in the SOAP processing part 70, the bibliographic information described in the XML is set in the body part of the HTTP response, and the HTTP response is generated in accordance with the SOAP (step S45-3). Then, the HTTP response is sent to a network apparatus 10 from httpd2 (Step S46 and S47).

As described above, in response to the HTTP request for providing the bibliographic information from the network apparatus 10A, the multi-functional business apparatus 1200 can execute the bibliographic information obtaining method 402 itself. Moreover, it is also possible to execute the document ID list obtaining method 401 itself.

Therefore, the multi-functional business apparatus 1200 forms an image, and provides wider Web service by a plurality of methods conducting the Web service and also by combining the plurality of methods.

Next, a process flow for providing the Web service according to the request from the network apparatus 10B will be described. A user using the network apparatus 10B requests desired the Web service of the multi-functional business apparatus 1200 from a screen, which is displayed on the monitor 9B, for requesting the Web service of the multi-functional business apparatus 1200, and the input/output control part 11 -receives the request data (step S51). Based on the request data received by the input/output control part 11B, the Web browser 23 generates the HTTP request indicating the GET METHOD or the POST METHOD, and sends the HTTP request to the multi-functional business apparatus 1200 through the network 15 (step S52). For example, the web browser 23 sends the HTTP request by the GET METHOD such as

GET /documentListDcgi HTTP/1.1.

When the multi-functional business apparatus 1200 receives the HTTP request from the network apparatus 10B, the distributor 30 distributes this HTTP request to the HTTP request processing part 501 which processes the HTTP request by the GET METHOD based on the GET METHOD of the HTTP request (step S53). The HTTP request processing part 501 dispatches the process to the document list creation combined method 800 specified by the header of the HTTP request, by the dispatcher 68 (Step S54). For example, the document list creation combined method 800 equivalent to "documentList.cgi" is executed by "documentList.cgi."

First, the document list creation combined method 800 calls the document ID list obtaining method 401 of the file management Web service providing process part 40 by the document ID list obtaining part 801 (step S55). The document ID list obtaining method 401 obtains the document ID identifying the document managed by the HDD 1303 (step S56), and creates a document ID list. In this case, it is assumed that the document ID list obtaining method 401 (listID (docIDList)) obtains a document ID "101", "102", and "103." A document ID list (docIDList) is set as follows:
docIDList= {101, 102, 103, and 0} ("0 (zero)" shows an end),
and the document ID list is sent to the document ID list obtaining part 801 (step S57).

Subsequently, the document list creation combined method 800 calls the bibliographic information obtaining method 402 of the file management Web service providing process part 40 by the bibliographic information obtaining part 802 (step S58). The bibliographic information obtaining method 402 inquires the bibliographic information by the document ID sent from the bibliographic information obtaining part 802 to the document managed in the HDD 1303, and creates the bibliographic information. For example, in a case in that the bibliographic information is obtained for the document ID "101", the bibliographic information obtaining part 802 executes the bibliographic information obtaining method 402 (getProps (docID, props)) by calling getProps (101 props).

The bibliographic information obtaining method 402 inquires the bibliographic information by the specified document ID in respect to the HDD 1303, and sends the bibliographic information to the bibliographic information obtaining part 802 (step S59). That is, the bibliographic information obtaining method 402 obtains the bibliographic information from the HDD 1303 by the document ID "101" received from the bibliographic information obtaining part 802. The bibliographic information obtaining method 402 creates the bibliographic information to send to the bibliographic information obtaining part 802. For example, the bibliographic information is created as follows: prop= {a document ID, a document name, pagination, an owner, and 0} ("0 (zero)" shows the end of bibliographic information). In this case, prop= {101, the "accumulated document 1", 3, "a user 1", and 0} is set for the document ID "101". The bibliographic information obtaining method 402 sends a creation result of the bibliographic information for the specified document ID, to the bibliographic information obtaining part 802 of the document list creation combined method 800.

The bibliographic information obtaining part 802 of the document list creation combined method 800 repeats the same process as described above, for other document IDs "102" and "103", and then, obtains all document information.

The document list creation combined method 800 further creates the document list by the document list creating part 803, and sends the document list to the XML processing part 50 in order to describe in the XML (step S60). That is, for example, the document list creating part 803 creates a document list as follows:
docList={{101, the " accumulated document 1", 3, "a user 1", and 0}, {102, the " accumulated document 2", 10, "a user 2" and 0}, and {103, the " accumulated document 3", 1, "a user 1", 0}, 0}.
The document list (docList) is sent to the XML processing part 50. When the document list (docList) is received, the XML processing part 50 sends an XML 26 described in the XML to the Web server 500 (step S61). When the Web server 500 receives the XML 26, the Web server 500 executes the HTML creating part 502. The HTML creating part 502 converts the XML 26 into the HTML form by the XSL processor 503 based on the XSL 25 showing the predetermined style list. The HTML creating part 502 creates the HTML 24 showing the process result in accordance with this HTML form, and sends the HTTP response by the httpd 2 (step S62). Then, the httpd 2 sends the HTTP response to the network apparatus 10B through the network 15 (Step S63).

When the HTTP response is received by the network apparatus 10B, the web browser 23 displays the HTML 24 on the monitor 9 by the input/output control part 11 (step S64).

Furthermore, in FIG.29, it is also possible to provide the Web service by the file management Web service providing process part 40 itself. That is, when the httpd 2 receives the HTTP request from the network apparatus 10B, the distributor 30 distributes this HTTP request to the HTTP request processing part 501 which processes the HTTP request by the GET METHOD based on the GET METHOD of the HTTP request (step S53). The HTTP request processing part 501 dispatches the process to the bibliographic information obtaining method 402 specified by the dispatcher 60 by the header of the HTTP request (step S54-3).

In respect to the document managed by the HDD 1303, the bibliographic information obtaining method 402 inquires the bibliographic information by the document ID specified by the HTTP request, creates bibliographic information, and sends to the XML processing part 50 in order for XML to describe the bibliographic information (step S60-3). By steps S61-S63, the bibliographic information is provided to the network apparatus 10B.

Thus, the multi-functional business apparatus 1200 can execute the bibliographic information obtaining method 402 itself having a substantial method according to the HTTP request for providing the bibliographic information from the network apparatus 10B. Similarly, it is possible similarly to execute the document ID list obtaining method 401 itself.

Therefore, the multi-functional business apparatus 1200 can provide wider Web service by a plurality of methods conducting the Web service and also by combining the plurality of methods.

In the second functional configuration, the network apparatus 10B does not need the special message exchange method with the multi-functional business apparatuses 1200. Only using the web browser, the network apparatus 10 can receive the Web service from the multi-functional business apparatus 1200, and can realize an RPC (Remote Procedure Call). Moreover, the combined Web service providing process part 90 can process a sequence of Web services combining a plurality of methods by the document list creation combined method 800, without having the substantial document ID list obtaining method 401 and the bibliographic information obtaining method 402. Therefore, by combining a plurality of methods, it is possible to conduct a sequence of Web services. Therefore, the network apparatus 10B can receive the sequence of Web services by a single HTTP request, without considering the unit of the Web service that the multi-functional business apparatus 1200 can provide.

Furthermore, the combined Web service providing process part 90 can share by the process requests indicating different protocols. Therefore, it is not necessary to develop the combined Web service providing process part 90 for each protocol of the process request.

The XML processing part 50 includes the XSL 25, so that the process for describing the body of the HTTP response that indicates the SOAP can be shared with the HTTP response that does not indicate the SOAP.

For example, the XML processing part 50 shown in FIG.29 describes the document list (docList) in the XML as shown in FIG.16. And the SOAP processing part 12 of the network apparatus 10A creates the HTTP request as shown in FIG.17 and the SOAP processing part 80 of the multi-functional business apparatus 1200 creates the HTTP response as shown in FIG.18.

As described above, the multi-functional business apparatus 1200 according to the present invention can provide the Web service by the message exchange by the SOAP and also by the HTML. Accordingly, it is possible to provide the same Web service to the users using the network apparatuses 10A and 10B.

Moreover, the same Web service function can be executed for both the HTTP request that indicates the SOAP and the HTTP request that does not indicate the SOAP. Furthermore, in respect to both the HTTP request that indicates the SOAP and the HTTP request that does not indicate the SOAP, it is possible to generate the body part by the XML 26 generated by the XML processing part 50.

In the fifth embodiment, the above-mentioned example explains that the same Web service can support the SOAP and the Web browser. Alternatively, it is possible for the multi-functional business apparatus 1200 to support a third different protocol that is a special protocol defined between the network apparatus 10A or 10B and the multi-functional business apparatus 1200. For example, an XML in accordance with the special protocol can be set in the body part of the HTTP request and the HTTP response, and the same Web service can be provided to the network apparatus 10A or 10B in accordance with the special protocol.

As described above, according to the present invention, instead of installing several driver software to a computer terminal of a user in order to utilize several image forming functions, the user only installs software supporting a standard Web service. Moreover, regardless of the machine type and the operating system of the computer terminal of the user, the computer terminal can send the process request to the multi-functional business apparatus 1200 having the plurality of the image forming functions. It is possible to conduct the process request by using the Web browser from the user to the multi-functional business apparatus 1200 including several image forming functions, regardless of the machine type and the operating system of the computer terminal. Furthermore, the multi-functional business apparatus 1200 can systematically process the process requests from other apparatuses.

### [Sixth Embodiment]

In the following, a fifth embodiment of the present invention will be described with reference to the accompanying drawings.

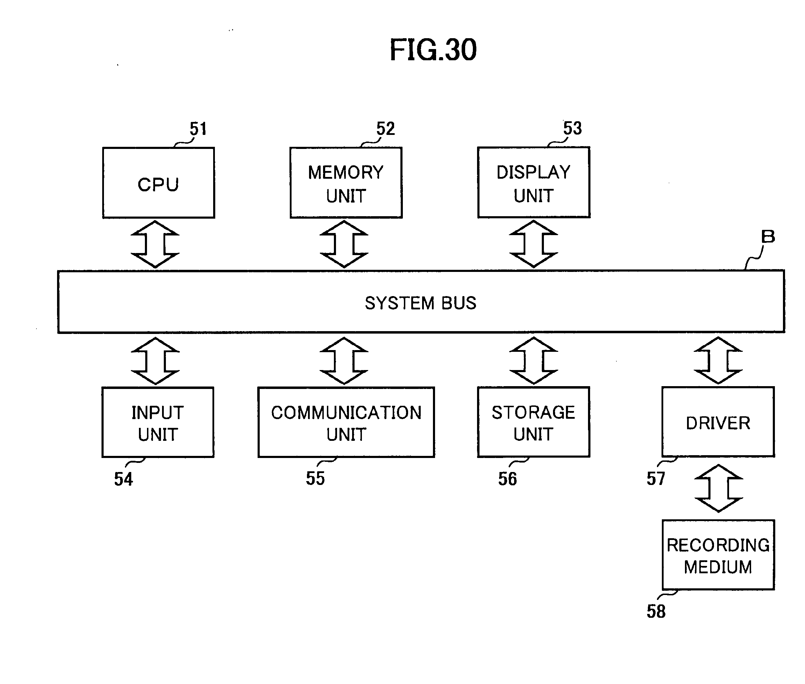

An information processing apparatus has a hardware configuration as shown in FIG. 30. FIG. 30 is a block diagram showing the hardware configuration of the information processing apparatus according to the sixth embodiment of the present invention.

In FIG.30, the information processing apparatus 200 is an apparatus, which is controlled by a computer, for executing a print process, and includes a CPU (central processing unit) 51, a memory unit 52, a display unit 53, an input unit 54, a communication unit 55, a storage unit 56, and a driver 57, which are mutually connected through a system bus B.

The CPU 51 controls an information processing apparatus 200 in accordance to a program stored in the memory unit 52. The memory unit 52 includes a RAM (Random Access Memory), a ROM (Read-Only Memory), and a like, and stores programs executed by the CPU 51, and data required for the process by the CPU 51, data obtained by the process by the CPU 51, and a like. Also, the memory unit 52 is partially used as a work area for the CPU 51.

The display unit 53 displays various information needed by the user under control of the CPU 51. The input unit 54 includes a mouse, a keyboard, and the like, and is used to input various information necessary for conducting the process by the CPU 51. The communication unit 55 is a unit for conducting a communication control between the information processing apparatus 200 and a plurality of network apparatuses, in a case of connecting the plurality of the network apparatuses through Internet the Internet, a LAN (Local Area Network) or a like. For example, the storage unit 56 includes a hard disk unit, and stores the program for executing various processes, document data, or a like.

For example, the program realizing the print process conducted by the information processing apparatus 200 can be provided to the information processing apparatus 200 by a recording medium 58 such as a CD-ROM (Compact Disc Read-Only Memory) or the like. That is, when the recording medium 58 recording the program is inserted in the drive unit 57, the drive unit 57 reads the program from the recording medium 58, the program read from the recording medium 58 is installed to the storage unit 56 via the system bus B. When program is executed, the CPU 51 starts the process in accordance to the program installed in the storage 56. It should be noted that the recording medium 58 is not limited to the CD-ROM, but any medium readable for the computer is used as the recording medium 58. The program realizing the print process according to the present invention can be downloaded through the network by the communication unit 55, and the program can be installed into the storage 56.

A first functional configuration of the information processing apparatus 200 including the hardware configuration shown in FIG.30 will be described. It should be noted that the Web service means that the information processing apparatus 200 conducts a predetermined process in response to a service request indicated by a HTTP request sent from the network apparatus and sends a process result indicated by a HTTP response.

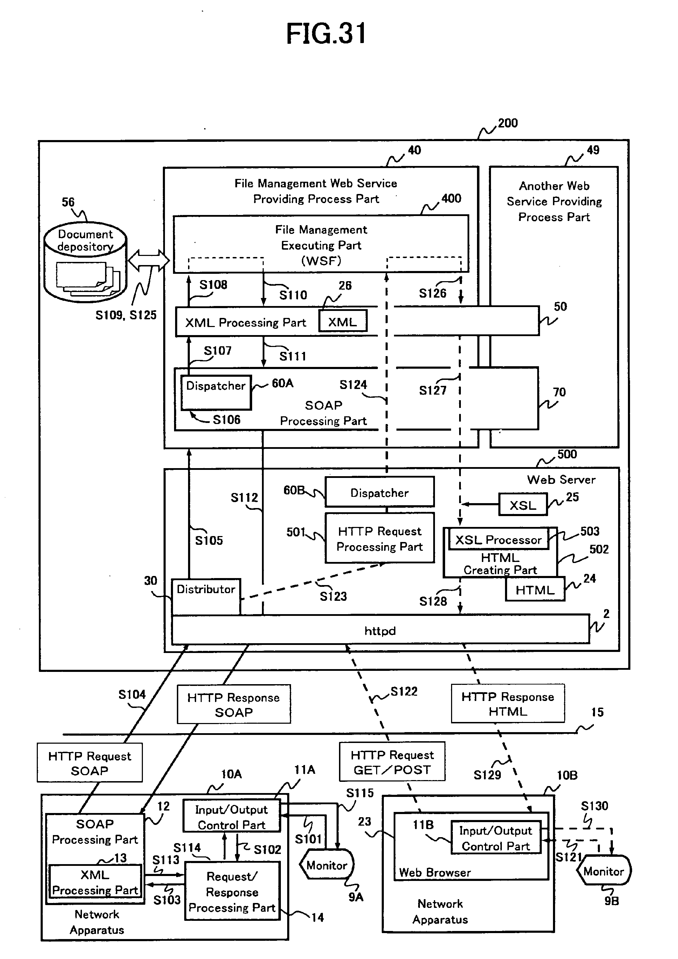

In the following, first functional configuration of the information processing apparatus 200 that can provide the Web service by the SOAP and the HTML. FIG.31 is a diagram showing the first functional configuration of the information processing apparatus for providing the Web service, according to the sixth embodiment of the present invention. The information processing apparatus 200 is connected to a network apparatus 10A which receives the Web service by the SOAP, and a network apparatus 10B which receives the Web service by the HTML through the network 15.

In FIG.31, the information processing apparatus 200 includes a Web server 500 for distributing the process to an internal Web service providing process part while conducting communication control in accordance with the HTTP, a file management Web service providing process part 40 and another Web service providing process part 49 as a plurality of Web service providing process part, and a like. The plurality of Web service providing process parts 40 and 49 include the Web service function (WSF) 1400, respectively.

In the case of the first functional configuration shown in FIG.31, the file management Web service providing process part 40 includes a file management executing part 400 for controlling the file management, such as a document accumulated to the storage unit 56, as the Web service function 1400 that executes the Web service.

The Web server 500 includes a httpd 2 for conducting the communication control in accordance with the HTTP, a distributor 30 for distributing a process to the Web service providing process part corresponding to the HTTP request, an HTTP request processing part 501 for processing the HTTP request by the GET METHOD or the POST METHOD received from the network 15, a dispatcher 60B for dispatching the process concerning the Web service, which is indicated by the HTTP request, to the file management executing part 400, an HTML (HyperTest Markup Language) showing a process result received from the file management executing part 400. The HTTP request is a request of the Web service by a data communication in accordance with the HTTP, and the HTTP response is a response showing a process result of the Web service.

The distributor 30 includes a judging part for judging whether or not the HTTP request is the HTTP request indicating the SOAP. When the HTTP request indicates the SOAP, the distributor 30 distributes the process to the Web service providing process part 40 or 49 indicated by a SOAPAction. On the other hand, when the HTTP request does not indicate the SOAP, that is, the HTTP request indicates a GET METHOD or POST METHOD, the distributor 30 distributes the HTTP request to the HTTP request processing part 501.

Furthermore, the HTML creating part 502 includes an XSL processor 503 for converting XML generated by the XML processing part 50 into an HTML format by using a predetermined XSL (eXtensible Stylesheet Language)25. The information processing apparatus 200 includes a XML processing part 50 for processing a message described in the XML and a SOAP processing part 70, which are shared with the plurality of the Web service providing parts 40 and 49.

The XML processing part 50 generates the body part of the HTTP response, which does not specify SOAP, by describing in the XML by the same method for generating the body part of the HTTP response indicating the SOAP. Furthermore, the SOAP processing part 70 includes a dispatcher 60A for dispatching to the file management executing part 400 based on the process message showing the contents of a process of Web service.

In the information processing apparatus 200, for the sake of convenience, as a plurality of Web service providing process parts, only the file management Web service providing process part 40, and the other Web service providing process part 49 are shown. However, the information processing apparatus 200 can include more Web service providing process parts. In this case, the SOAP processing part 70 includes a plurality of dispatcher 60A for dispatching the process to each executing part of the plurality of Web service providing process parts. Also, the XML processing part 50 and the SOAP processing part 70 are shared with the plurality of Web service providing process parts. A plurality of dispatchers 60B are corresponded to the plurality of Web service providing process parts.

Moreover, the network apparatus 10A connected to the information processing apparatus 200 through a network 15 controls input data from input units, such as a keyboard or a mouse, and includes an input/output control part 11A for controlling output data displayed on a monitor 9A, a SOAP processing part 12 for exchanging messages to the information processing apparatus 200 in accordance to the SOAP, a request/response processing part 14 for generating the request and analyzing the response in accordance with the HTTP. The SOAP processing part 12 includes an XML processing part 13 for processing the contents of the process of the Web service to the information processing apparatus 200and the process result of the Web service from the information processing apparatus 200 by the XML. The network apparatus 10A connected to the information processing apparatus 200 through a network 15 controls input data from input units, such as a keyboard or a mouse, and includes an input/output control part 11B for controlling output data displayed on a monitor 9B, and a Web browser 23 for generating a request displaying a response in accordance with the HTTP.

First, the process flow which provides Web service according to the request from the network apparatus 10A will be described. The user using the network apparatus 10A requests a desired Web service of the information processing apparatus 200 from the screen for requesting of the information processing apparatus 200 (step S101). In response to the request of the Web service by the user, the input/output control part 11A sends request data to the request/response processing part 14 (step S102). The request/response processing part 14 generates the HTTP request based on the request data from the input/output control part 11A (step S103). When the XML processing part 13 describes the contents of the process to the body part of the HTTP request in the XML, and the HTTP request is sent to the information processing apparatus 200 by the SOAP processing part 12 through the network 15 (step S104).

When the Web server 500 of the information processing apparatus 200 receives the HTTP request by the httpd 2, the HTTP request is distributed to the Web service providing process part specified by the header of the HTTP request by the distributor 30 (step S105). For example, when the file management Web service providing process part 40 is specified by the header of the HTTP request, the file management Web service providing process part 40 is called by the distributor 30.

In the file management Web service providing process part 40, the SOAP processing part 70 processes the HTTP request according to the SOAP, and sends to the dispatcher 60A for dispatching the process to the file management executing part 400 specified by the SOAP header (step S106). The dispatcher 60A dispatches the contents of the process by the header of the HTTP request, and sends them to the XML processing part 50 (step S107). The XML processing part 50 converts the message showing the contents of the process in the body part of the HTTP request described in the XML into a description which can be interpreted by the file management executing part 400, and executes the file management executing part 400 (step S108). The file management executing part 400 executes the process to the storage unit 56 in accordance with the contents of the process, and obtains the process result (step S109). For example, the document indicated by the contents of the process is added, updated, or deleted.

The file management executing part 400 sends the process result to the XML processing part 50 (step S110). The XML processing part 50 generates the XML 26 describing the process result in the XML, and sends to the SOAP processing part 70 in order to set in the body part of the HTTP response (step S111). And Web server 500 sends the HTTP response in accordance with the SOAP through the httpd 2 in the body part to the network apparatus 10A (step S112). The HTTP response includes the process result described in the XML.

When the HTTP response is received at the network apparatus 10A, the XML processing part 13 analyzes the body part of the HTTP response, and obtains the process result (step S113). The request/response processing part 14 passes the obtained process result to the input/output control part 11A as output data displayed on the monitor 9A (step S114). And the input/output control part 11A is controlled to display the received output data on the monitor 9A (step S115).

The network apparatus 10A describes the contents of the process to the body part of the HTTP request in accordance with the description format of the XML that is defined beforehand. Thus, the Web service can be requested from a remote place from the information processing apparatus 200. Thus, it is possible to provide the Web service to the network apparatus 10A in a remote place. The information processing apparatus 200 can also provide the Web service to a plurality of network apparatuses 10A through the network 15.

A process flow, in which the Web service is provided in response to the request from the network apparatus 10B, will be described. The user using the network apparatus 10B requests a desired Web service of the information processing apparatus 200 from the screen for requesting the Web service displayed on the monitor 9B of the information processing apparatus 200. The input/output control part 11B receives the request data (step S121). Based on the request data received by the input/output control part 11B, the web browser 23 generates the HTTP request by the GET METHOD or the POST METHOD, and sends to the information processing apparatus 200 through the network 15 (step S122).

The information processing apparatus 200 analyzes the HTTP request by the Web server 500, when the HTTP request is received from the network-apparatus 10B. That is, when the httpd 2 for conducting the network communication control receives the HTTP request, the HTTP request is distributed to the HTTP request processing part 501 by the distributor 30, so as to analyze the HTTP request in accordance with the method (GET METHOD or POST METHOD) indicated by the header of the HTTP request (step S123).

The HTTP request processing part 501 obtains the contents of the process from the body part in accordance to the method. For example, when the file management Web service is specified by a URL (Uniform Resource Locator) or a URI (Uniform Resource Indicator) by the header, the process according to the contents of the process is distributed to the file management executing part 400 by the dispatcher 60B (step S124). The file management executing part 400 executes the process to the storage unit 56 according to the contents of the process, and obtains the process result (step S125). For example, the document is added, updated, or deleted in accordance with the contents of the process.

The file management executing part 400 for obtaining the process result sends the process result to the XML processing part 50 (step S126). In the same method for generating the body part of the HTTP response in accordance with the SOAP, the XML processing part 50 generates the XML 26 showing the process result in the XML, and sends the HTML creating part 502 of the Web server 500 in order to set in the body part of a HTTP response (step S127). The HTML creating part 502 generates the HTML 24 converted into the HTML format by using a predetermined XSL 25 by the XSL processor 503, and sends the HTML 24 by the httpd 2 (step S128). The httpd 2 sends the HTML 24 to the network apparatus 10B in accordance with the http (step S129).

When the HTTP response is received in the network apparatus 10B, the web browser 23 displays the HTML 24 on the monitor 9B by the input/output control part 11B (step S130).

By using only the Web browser 23, the network apparatus 10B receives the Web service from the information processing apparatus 200, and can realize an RPC (Remote Procedure Call). By the Web server 500 with the XSL 25 according to the characteristics of the process in the executing part of each Web service, in case in that the process result is displayed at the network apparatus 10, it is possible to provide a display screen for each Web service.

Therefore, the information processing apparatus 200 can provide the Web service by the same file management executing part 400 to the network apparatus 10A which can conduct the message exchange in accordance with the SOAP, and also the network apparatus 10B using the web browser 23. The file management Web service providing process part 40 for including the file management executing part 400 can share with the process requests according to different protocols, respectively. Accordingly, It is not necessary to develop the file management Web service providing process part 40 to support each protocol of the process request.

Moreover, in the information processing apparatus 200, the Web server 500 uses the XSL 25, so that a process for describing the body part of the HTTP response indicating the SOAP can be the same as that for describing the body part of the HTTP response indicating other than the SOAP, in the XML processing part 50. Thus, a single process for describing the body part of the HTTP response can be shared with the HTTP responses indicating different protocols, respectively.

The examples of the HTTP request and the HTTP response in accordance with the SOAP are shown in FIG.11A and FIG. 11B. Thus, the explanation thereof will be omitted.

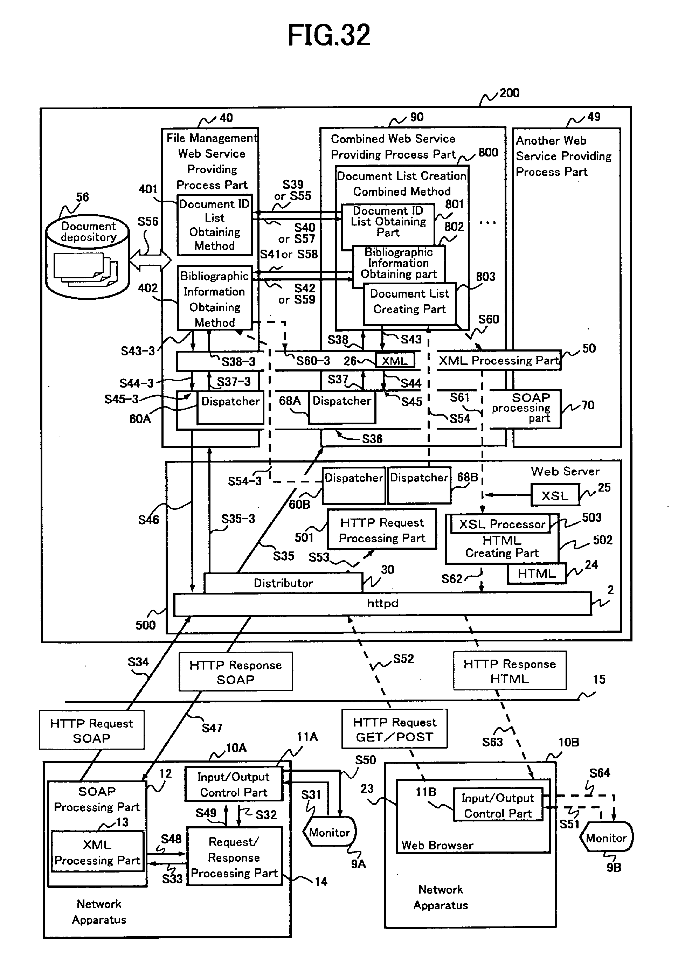

The information processing apparatus 200including a combined Web service providing process part for providing a document list will be described in that the information processing apparatus 200combines and executes a plurality of methods of one Web service providing process part. FIG.32 is a block diagram showing a second functional configuration of the information processing apparatus including a combined Web service, according to the sixth embodiment of the present invention. In FIG.32, only main processing parts are illustrated among the processing parts of the information processing apparatus 200 shown in FIG.21, and other processing parts are omitted. The information processing apparatus 200 is connected to a network apparatus 10A which receives the Web service by the SOAP, and a network apparatus 10B which receives the Web service by the HTML through the network 15.

In FIG.32, The information processing apparatus 200includes a Web server 500 for distributing the process to an internal Web service providing process part while conducting communication control in accordance with the HTTP, a file management Web service providing process part 40, another Web service providing process part 49, and combined-Web-service providing process part 90 as a plurality of Web service providing process part, an XML processing part 50 for processing the message described in the XML, a SOAP processing part 70 for exchanging the message in accordance with the SOAP between the network apparatuses 10A and 10B, and a like. The XML processing part 50 and the SOAP processing part 70 are shared the plurality of Web service providing process parts 40, 49, and 90.

The Web server 500 includes a httpd 2 for conducting a communication control in accordance with the HTTP, a distributor 30 for distributing the process to the Web service providing process part corresponding to the HTTP request, an HTTP request processing part 501 for processing the HTTP request by the GET METHOD or the POST METHOD received from the network 15, dispatchers 60A and 68A for dispatching the process of the Web service indicated by the HTTP request for each Web service providing process part, an HTML creating part 502 for creating the process result, which is sent from each of the Web service providing process parts 40, 90, and 49 and is described in the XML by the HTML 24. The HTML creating part 502 includes the XSL processor 503 for converting the XML generated by the XML processing part 50 into a HTML format. The HTTP request is a request of the Web service by a data communication in accordance with the HTTP and the HTTP response is a response showing a process result of the Web service.

The distributor 30 includes a judging part for judging whether or not the HTTP request is the HTTP request indicating the SOAP. When the HTTP request indicates the SOAP, the distributor 30 distributes the process to the Web service providing process part 40 or 49 indicated by a SOAPAction. On the other hand, when the HTTP request does not indicate the SOAP, that is, the HTTP request indicates a GET METHOD or POST METHOD, the distributor 30 distributes the HTTP request to the HTTP request processing part 501.

The file management Web-service-providing processing part 40 includes a document ID list obtaining method 401 for obtaining the list of document IDs identifying the document accumulated in the storage unit 56, and bibliographic information obtaining method 402 for obtaining bibliographic information concerning the document accumulated in the storage unit 56 corresponding to the document ID. A method shows a unit of the process of the Web service by the file management Web service providing process part 40. The file management Web service providing process part 40 realizes the Web service function 1400 shown in FIG. 21 by a plurality of methods, and provides the Web service in accordance with the request from the network apparatus 10. In a case of the second functional configuration shown in FIG.29 as the plurality of methods, it is not limited to the document ID list obtaining method 401 and the bibliographic information obtaining method 402. It is also possible to include a plurality of methods in addition to these methods.

The document list creation combined method 800 of the combined Web service providing process part 90 includes a document ID list obtaining part 801 for obtaining the list of document IDs by using the document ID list obtaining method 401, a bibliographic information obtaining part 802 for obtaining the bibliographic information corresponding to the document ID by using the bibliographic information obtaining method 402, and a document list creating part 803 for creating the document list based on the obtained bibliographic information. Since the document list creation combined method 800 utilizes the document ID list obtaining method 401 and the bibliographic information obtaining method 402, the document list creation combined method 800 does not have substantial methods. The portion developed in order to realize the document list creation combined method 800 is mainly only the document list creating part 803. Therefore, it is possible to reduce steps necessary to develop the document list creation combined method 800. Moreover, the combined Web service providing process part 90 include a set of a plurality of process units in the document list creation combined method 800 and a plurality of process units by the methods having the substance thereof, as the Web service function 1400 shown in FIG.21.

Moreover, the SOAP processing part 70 includes the dispatchers 60A and 68A for dispatching the process to each of the Web service providing process parts 40 and 90. For example, the SOAP processing part 70 includes the dispatcher 60A for dispatching the process to each of methods 401 and 402 of the file management Web service providing process part 40, the dispatcher 68A for dispatching the process to the document list creation combined method 800 of the combined Web service providing process part 90, and other dispatchers (not shown in FIG.29) for dispatching the process to a method of the other Web service providing process part 49. In the information processing apparatus 200, for the sake of convenience, as a plurality of Web service providing process parts, only the file management Web service providing process part 40, the combined Web service providing process part 90, and the other Web service providing process part 49 are shown. However, the information processing apparatus 200 can include more Web service providing process parts. Also, the XML processing part 50 and the SOAP processing part 70 are shared with those Web service providing process parts.

Since the second functional configurations of the network apparatuses 10A and 10B connected to the information processing apparatus 200 through the network 15 are the same as those of the network apparatuses 10A and 10B shown in FIG.28, the explanation will be omitted.

First, the process flow for providing the Web service according to the request from the network apparatus 10A will be described. A user using such the network apparatus 10A requests a desired Web service of the information processing apparatus 200 from a screen for requesting of the information processing apparatus 200 (step S31). For example, it is assumed that the user requests the Web service that provides a list of the document accumulated in the storage unit 56 of the information processing apparatus 200 from the screen of the monitor 9A. In response to a request of the Web service from the user, the input/output control part 11A sends the request data to the request/response processing part 14 (step S32). The request/response processing part 14 generates the HTTP request based on the request data from the input/output control part 11A, and sends to the SOAP processing part 12 (step S33). The SOAP processing part 12 describes the contents of the process of the Web service in the XML by the XML processing part 13 and sets in the body part of the HTTP request, so as to generate the HTTP request in accordance with the SOAP. Then, the HTTP request is sent to the information processing apparatus 200 through the network 15 (step S34).

When the httpd 2 of the information processing apparatus 200 receives the HTTP request, the httpd 2distributes. the HTTP request to the Web service providing process part, which is indicated by the header of the HTTP request, by the distributor 30 (step S35). For example, when the combined Web service providing process part 90 is specified by the header of the HTTP request, the combined Web service providing process part 90 is executed by the distributor 30.

The combined Web service providing process part 90 sends the HTTP request to the SOAP processing part 70, in order to process the HTTP request in accordance with SOAP (Step S36). The SOAP processing part 70 processes a HTTP request in accordance with SOAP. And the dispatcher 68 distributes the process to the document list creation combined method 800 specified by the header of the HTTP request, and executes the XML processing part 50 according to the method of HTTP (Step S37). The XML processing part 50 converts the message, which is described in the XML and shows the contents of the process in the body part of the HTTP request, into a description which can be interpreted by the document list creation combined method 800. Then, The XML processing part 50 sends the message to the document list creation combined method 800 (Step S38).

First, the document list creation combined method 800 calls the document ID list obtaining method 401 of the file management Web service providing process part 40 by the document ID list obtaining part 801 (Step S39). The document ID list obtaining method 401 obtains the document ID identifying the document managed by the storage unit 56, and creates the document ID list. In this case, it is assumed that the document ID list obtaining method 401 (listID (docIDList)) obtains a document ID "101", "102", and "103." A document ID list (docIDList) is set as follows:
docIDList= {101, 102, 103, and 0} ("0 (zero)" shows an end),
and the document ID list is sent to the document ID list obtaining part 801 (step S40).

Subsequently, the document list creation combined method 800 calls the bibliographic information obtaining method 402 of the file management Web service providing process part 40 by the bibliographic information obtaining part 802 (step S41). In respect to the document managed in the storage unit 56, the bibliographic information obtaining method 402 inquires the bibliographic information by the document ID received from the bibliographic information obtaining part 802, and creates bibliographic information. For example, in a case in that the bibliographic information is obtained for the document ID "101", the bibliographic information obtaining part 802 executes the bibliographic information obtaining method 402 (getProps (docID, props)) by calling getProps (101 props).

The bibliographic information obtaining method 402 inquires the bibliographic information by the specified document ID in respect to the storage unit 56, and sends the bibliographic information to the bibliographic information obtaining part 802 (step S42). That is, the bibliographic information obtaining method 402 obtains the bibliographic information from the storage unit 56 by the document ID "101" received from the bibliographic information obtaining part 802. The bibliographic information obtaining method 402 creates the bibliographic information to send to the bibliographic information obtaining part 802. For example, the bibliographic information is created as follows:
prop= {a document ID, a document name, pagination, an owner, and 0} ("0 (zero)" shows the end of bibliographic information). In this case, prop= {101, the "accumulated document 1", 3, "a user 1", and 0} is set for the document ID "101". The bibliographic information obtaining method 402 sends a creation result of the bibliographic information for the specified document ID, to the bibliographic information obtaining part 802 of the document list creation combined method 800 (step S42).

The bibliographic information obtaining part 802 of the document list creation combined method 800 repeats the same process as described above, for other document IDs "102" and "103", and then, obtains all document information.

The document list creation combined method 800 further creates the document list by the document list creating part 803, and sends the document list to the XML processing part 50 in order to describe in the XML (step S43). That is, for example, the document list creating part 803 creates a document list as follows:
docList={{101, the " accumulated document 1", 3, "a user 1", and 0}, (102, the " accumulated document 2", 10, "a user 2" and 0}, and (103, the " accumulated document 3", 1, "a user 1", 0}, 0}.
The document list (docList) is sent to the XML processing part 50. When the document list (docList) is received, the XML processing part 50 describes the document list (docList) in the XML and sends to the SOAP processing part 70 (step S44). When the SOAP processing part 70 receives the document list described in the XML, the SOAP processing part 70 sets the document list described in XML to the body part of the HTTP response, and generates the HTTP response in accordance to SOAP (step S45).

The SOAP processing part 70 sends the HTTP response to the httpd 2 (step S46), and then the HTTP response is sent to the network apparatus 10A (step S47).

At the network apparatus 10A receives the HTTP response, the SOAP processing part 12 processes the HTTP response by using the XML processing part 13. The XML processing part 13 analyzes the body part of the HTTP response, and obtains the process result, and sends to the request/response processing part 14 (step S48). The request/response processing part 14 passes the obtained process result to the input/output control part 11A as output data displayed on the monitor 9A (step S50).

In the second functional configuration, by the document list creation combined method 800, the combined Web service providing process part 90 can process the sequence of Web services combining the plurality of methods, without having a substantial document ID list obtaining method 401 and a substantial bibliographic information obtaining method 402. Therefore, the network apparatus 10A can receive the sequence of Web services by a single HTTP request, without considering the unit of the Web service that the information processing apparatus 200 can provide.

Furthermore, in FIG.29, it is also possible to provide the Web service by the file management Web service providing process part 40 itself. That is, when the httpd 2 receives the HTTP request from the network apparatus 10A or 10B (Step S34), the distributor 30 distributes the HTTP request to the bibliographic information obtaining method 402 of the file management Web-service-providing processing part 40, in response to a request of the Web service for obtaining the bibliographic information indicated in the header of the HTTP request (step S35-3).

The file management Web service providing process part 40 sends the HTTP request to the SOAP processing part 70, in order to process the HTTP request in accordance with SOAP (step S36-3). The SOAP processing part 70 processes the HTTP request in accordance with the SOAP. The dispatcher 60A dispatches the process to the bibliographic information obtaining method 402 specified by the header of the HTTP request, and executes the XML processing part 50 according to the method of HTTP (step S37-3). The XML processing part 50 converts the message showing the contents of the process in the body part of the HTTP request described in the XML into the data format that can be interpreted by the bibliographic information obtaining method 402, and sends to the bibliographic information obtaining method 402 (step S38-3).

In respect to the document managed in the storage unit 56, the bibliographic information obtaining method 402 inquires the bibliographic information by the document ID specified by the message processed by the XML processing part 50. And the bibliographic information obtaining method 402 sends to the XML processing part 50, in order to describe the bibliographic information in the XML (step S43-3). The XML processing part 50 generates the XML 26 describing the bibliographic information in the XML and sends the XML 26 to the SOAP processing part 70 (step S44-3). Furthermore, in the SOAP processing part 70, the bibliographic information described in the XML is set in the body part of the HTTP response, and the HTTP response is generated in accordance with the SOAP (step S45-3). Then, the HTTP response is sent to a network apparatus 10 from httpd2 (Step S 46 and S47).

As described above, in response to the HTTP request for providing the bibliographic information from the network apparatus 10A, the information processing apparatus 200 can execute the bibliographic information obtaining method 402 itself. Moreover, it is also possible to execute the document ID list obtaining method 401 itself.

Therefore, the information processing apparatus 200 forms an image, and provides wider Web service by a plurality of methods conducting the Web service and also by combining the plurality of methods.

Next, a process flow for providing the Web service according to the request from the network apparatus 10B will be described. A user using the network apparatus 10B requests desired the Web service of the information processing apparatus 200 from a screen, which is displayed on the monitor 9B, for requesting the Web service of the information processing apparatus 200, and the input/output control part 11 receives the request data (step S51). Based on the request data received by the input/output control part 11B, the Web browser 23 generates the HTTP request indicating the GET METHOD or the POST METHOD, and sends the HTTP request to the information processing apparatus 200 through the network 15 (step S52). For example, the web browser 23 sends the HTTP request by the GET METHOD such as
GET /documentListDcgi HTTP/1.1.

When the information processing apparatus 200 receives the HTTP request from the network apparatus 10B, the distributor 30 distributes this HTTP request to the HTTP request processing part 501 which processes the HTTP request by the GET METHOD based on the GET METHOD of the HTTP request (step S53). The HTTP request processing part 501 dispatches the process to the document list creation combined method 800 specified by the header of the HTTP request, by the dispatcher 68 (Step S54). For example, the document list creation combined method 800 equivalent to "documentList.cgi" is executed by "documentList.cgi."

First, the document list creation combined method 800 calls the document ID list obtaining method 401 of the file management Web service providing process part 40 by the document ID list obtaining part 801 (step S55). The document ID list obtaining method 401 obtains the document ID identifying the document managed by the storage unit 56 (step S56), and creates a document ID list. In this case, it is assumed that the document ID list obtaining method 401 (listID (docIDList)) obtains a document ID "101", "102", and "103." A document ID list (docIDList) is set as follows:
docIDList= {101, 102, 103, and 0} ("0 (zero)" shows an end),
and the document ID list is sent to the document ID list obtaining part 801 (step S57).

Subsequently, the document list creation combined method 800 calls the bibliographic information obtaining method 402 of the file management Web service providing process part 40 by the bibliographic information obtaining part 802 (step S58). The bibliographic information obtaining method 402 inquires the bibliographic information by the document ID sent from the bibliographic information obtaining part 802 to the document managed in the storage unit 56, and creates the bibliographic information. For example, in a case in that the bibliographic information is obtained for the document ID "101", the bibliographic information obtaining part 802 executes the bibliographic information obtaining method 402 (getProps (docID, props)) by calling getProps (101 props).

The bibliographic information obtaining method 402 inquires the bibliographic information by the specified document ID in respect to the storage unit 56, and sends the bibliographic information to the bibliographic information obtaining part 802 (step S59). That is, the bibliographic information obtaining method 402 obtains the bibliographic information from the storage unit 56 by the document ID "101" received from the bibliographic information obtaining part 802. The bibliographic information obtaining method 402 creates the bibliographic information to send to the bibliographic information obtaining part 802. For example, the bibliographic information is created as follows:
prop= {a document ID, a document name, pagination, an owner, and 0} ("0 (zero)" shows the end of bibliographic information). In this case, prop= {101, the "accumulated document 1", 3, "a user 1", and 0} is set for the document ID "101". The bibliographic information obtaining method 402 sends a creation result of the bibliographic information for the specified document ID, to the bibliographic information obtaining part 802 of the document list creation combined method 800.

The bibliographic information obtaining part 802 of the document list creation combined method 800 repeats the same process as described above, for other document IDs "102" and "103", and then, obtains all document information.

The document list creation combined method 800 further creates the document list by the document list creating part 803, and sends the document list to the XML processing part 50 in order to describe in the XML (step S60). That is, for example, the document list creating part 803 creates a document list as follows:
docList={{101, the " accumulated document 1", 3, "a user 1", and 0}, {102, the " accumulated document 2", 10, "a user 2" and 0), and {103, the " accumulated document 3", 1, "a user 1", 0}, 0}.
The document list (docList) is sent to the XML processing part 50. When the document list (docList) is received, the XML processing part 50 sends an XML 26 described in the XML to the Web server 500 (step S61). When the Web server 500 receives the XML 26, the Web server 500 executes the HTML creating part 502. The HTML creating part 502 converts the XML 26 into the HTML form by the XSL processor 503 based on the XSL 25 showing the predetermined style list. The HTML creating part 502 creates the HTML 24 showing the process result in accordance with this HTML form, and sends the HTTP response by the httpd 2 (step S62). Then, the httpd 2 sends the HTTP response to the network apparatus 10B through the network 15 (Step S63).

When the HTTP response is received by the network apparatus 10B, the web browser 23 displays the HTML 24 on the monitor 9 by the input/output control part 11 (step 364).

Furthermore, in FIG.29, it is also possible to provide the Web service by the file management Web service providing process part 40 itself. That is, when the httpd 2 receives the HTTP request from the network apparatus 10B, the distributor 30 distributes this HTTP request to the HTTP request processing part 501 which processes the HTTP request by the GET METHOD based on the GET METHOD of the HTTP request (step S53). The HTTP request processing part 501 dispatches the process to the bibliographic information obtaining method 402 specified by the dispatcher 60 by the header of the HTTP request (step S54-3).

In respect to the document managed by the storage unit 56, the bibliographic information obtaining method 402 inquires the bibliographic information by the document ID specified by the HTTP request, creates bibliographic information, and sends to the XML processing part 50 in order for XML to describe the bibliographic information (step S60-3). By steps S61-S63, the bibliographic information is provided to the network apparatus 10B.

Thus, the information processing apparatus 200 can execute the bibliographic information obtaining method 402 itself having a substantial method according to the HTTP request for providing the bibliographic information from the network apparatus 10B. Similarly, it is possible similarly to execute the document ID list obtaining method 401 itself.

Therefore, the information processing apparatus 200 can provide wider Web service by a plurality of methods conducting the Web service and also by combining the plurality of methods.

In the second functional configuration, the network apparatus 10B does not need the special message exchange method with the information processing apparatus 200. Only using the web browser, the network apparatus 10 can receive the Web service from the information processing apparatus 200, and can realize an RPC (Remote Procedure Call) . Moreover, the combined Web service providing process part 90 can process a sequence of Web services combining a plurality of methods by the document list creation combined method 800, without having the substantial document ID list obtaining method 401 and the bibliographic information obtaining method 402. Therefore, by combining a plurality of methods, it is possible to conduct a sequence of Web services. Therefore, the network apparatus 10B can receive the sequence of Web services by a single HTTP request, without considering the unit of the Web service that the information processing apparatus 200 can provide.

Furthermore, the combined Web service providing process part 90 can share by the process requests indicating different protocols. Therefore, it is not necessary to develop the combined Web service providing process part 90 for each protocol of the process request.

The XML processing part 50 includes the XSL 25, so that the process for describing the body of the HTTP response that indicates the SOAP can be shared with the HTTP response that does not indicate the SOAP.

For example, the XML processing part 50 shown in FIG.32 describes the document list (docList) in the XML as shown in FIG. 16. And the SOAP processing part 12 of the network apparatus 10A creates the HTTP request as shown in FIG. 17 and the SOAP processing part 80 of the information processing apparatus 200 creates the HTTP response as shown in FIG.18.

As described above, the information processing apparatus 200 according to the present invention can provide the Web service by the message exchange by the SOAP and also by the HTML. Accordingly, it is possible to provide the same Web service to the users using the network apparatuses 10A and 10B.

Moreover, the same Web service function can be executed for both the HTTP request that indicates the SOAP and the HTTP request that does not indicate the SOAP. Furthermore, in respect to both the HTTP request that indicates the SOAP and the HTTP request that does not indicate the SOAP, it is possible to generate the body part by the XML 26 generated by the XML processing part 50.

In the sixth embodiment, the above-mentioned example explains that the same Web service can support the SOAP and the Web browser. Alternatively, it is possible for the information processing apparatus 200 to support a third' different protocol that is a special protocol defined between the network apparatus 10A or 10B and the information processing apparatus 200. For example, an XML in accordance with the special protocol can be set in the body part of the HTTP request and the HTTP response, and the same Web service can be provided to the network apparatus 10A or 10B in accordance with the special protocol.

As described above, according to the present invention, instead of installing several driver software to a computer terminal of a user in order to utilize several image forming functions, the user only installs software supporting a standard Web service. Moreover, regardless of the machine type and the operating system of the computer terminal of the user, the computer terminal can send the process request to the information processing apparatus 200 having the plurality of the image forming functions. It is possible to conduct the process request by using the Web browser from the user to the information processing apparatus 200 including several image forming functions, regardless of the machine type and the operating system of the computer terminal. Furthermore, the information processing apparatus 200 can systematically process the process requests from other apparatuses.

The present invention is not limited to the specifically disclosed embodiments, and variations and modifications may be made without departing from the scope of the present invention.

The present application is based on the Japanese priority applications No. 2002-084556 filed on March 25, 2002, No.2002-255333 filed on August 30, 2002, No.2002-255334 filed on August 30, No.2002-084555 filed on March 25, 2002, N0.2002-255335 filed on August 30, No.2002-255336 filed on August 30, 2002, No.2002-327061 filed on November 11, 2002, No.2003-74119 filed on March 18, 2003 and No.2003-74120 filed on March 18, 2003, the entire contents of which are hereby incorporated by reference.

## Claims

**1.** An image forming apparatus, comprising:
a network communication controlling part controlling communications by a process request from a device connected through a network and a process response to the device; and
a Web service providing process part processing internal information concerning said image forming apparatus based on a message described in accordance with a predetermined message exchange protocol within the process request and generating the process response showing a process result.

**2.** The image forming apparatus as claimed in claim 1, further comprising:
an application including said Web service providing process part;
a control service managing hardware resources used in an image forming process and controlling use in respect to the hardware resources in response to a use request from the application; and
an operating system controlling said application and said control service.

**3.** The image forming apparatus as claimed in claim 1, wherein said Web service providing process part comprises:
a Web service executing part executing a process concerning a Web service;
a handler part converting the message into data form that said Web service executing part can process, executing said Web service executing part, and converting the process result shown in the data form by said Web service executing part, in accordance with said predetermined message exchange protocol so as to generate the process response showing the process result.

**4.** The image forming apparatus as claimed in claim 3, wherein said handler part is generated based on a protocol specification of the Web service, said protocol specification described in a predetermined service description language for describing contents of the Web service.

**5.** The image forming apparatus as claimed in claim 3, further comprising a handler generating part automatically generating said handler part based on a protocol specification of the Web service described in a predetermined service description language for describing contents of the Web service.

**6.** The image forming apparatus as claimed in claim 3, wherein said handler part can be described in a predetermined service description language for describing contents of the Web service, as a protocol specification of the Web service.

**7.** The image forming apparatus as claimed in claim 3, further comprising a plurality of said Web service providing process parts,
wherein said handler part comprises:
a protocol processing part, which is shared by said plurality of said Web service providing process parts, controlling the message in accordance with the predetermined message exchange protocol.

**8.** The image forming apparatus as claimed in claim 7, wherein said handler part comprises a message processing part, that is shared by said plurality of said Web service providing process parts, processing the message.

**9.** The image forming apparatus as claimed in claim 7, further comprising a distributing part analyzing a request type of the process request received by said network communication controlling part, and distributing the process request to one of said plurality of said Web service providing process part based on an analysis result.

**10.** The image forming apparatus as claimed in claim 7, wherein said handler part comprises a dispatching part analyzing specification information specifying the Web service in the process request in accordance with the predetermined message exchange, and dispatching the process to the Web service executing part, which executes the Web service specified by the specification information.

**11.** The image forming apparatus as claimed in claim 7, wherein said handler part comprises a plurality of said dispatching part corresponding to said plurality of said Web service providing process parts, respectively.

**12.** The image forming apparatus as claimed in claim 7, further comprising a combined Web service providing process part combining two or more said Web service providing process part.

**13.** The image forming apparatus as claimed in claim 12, wherein said combined Web service providing process part comprises a combined Web service executing part making two or more said Web service providing process part processed the internal information.

**14.** An image forming apparatus, comprising:
a network communication controlling part controlling communications by a process request from a device connected through a network and a process response to the device; and
a Web service providing process part processing internal information concerning said image forming apparatus based on a message described in a predetermined description form within the process request and generating the process response showing a process result.

**15.** The image forming apparatus as claimed in claim 14, wherein said Web service providing process part comprises:
a Web service executing part executing a process concerning a Web service;
a handler part converting the message into data form that said Web service executing part can process, executing said Web service executing part, and converting the process result shown in the data form by said Web service executing part, in accordance with said predetermined description form so as to generate the process response showing the process result.

**16.** The image forming apparatus as claimed in claim 15, further comprising a plurality of said Web service providing process parts,
wherein said handler part comprises:
a message processing part, that is shared by said plurality of said Web service providing process parts, processing the message;
a dispatching part dispatching a process to said Web service executing part corresponding to specification information specifying the Web service indicated by the message processed by said message processing part.

**17.** The image forming apparatus as claimed in claim 14, further comprising:
a plurality of said Web service providing process parts; and
a distributing part analyzing a request type of the process request received by said network communication controlling part and distributing the process request to one of said plurality of said Web service providing process parts based on an analysis result,
wherein each of said Web service providing process parts includes a dispatching part analyzing specification information specifying the Web service in the process request, and dispatching the process to said Web service executing part executing web service specified by the specification information.

**18.** An image forming method, comprising the steps of:
controlling communications by a process request from a device connected through a network and a process response to the device; and
processing internal information concerning said image forming apparatus based on a message described in accordance with a predetermined message exchange protocol within the process request and generating the process response showing a process result.

**19.** An image forming method, comprising the steps of:
controlling communications by a process request from a device connected through a network and a process response to the device; and
processing internal information concerning said image forming apparatus based on a message described in a predetermined description form within the process request and generating the process response showing a process result.

**20.** A user terminal, comprising:
a process request generating part generating a process request showing a user request in accordance with a predetermined message exchange protocol in response to the user request indicated by a user; and
an output controlling part controlling an output of a process result shown in a process response for the process request, said process response sent from an apparatus providing a Web service in accordance with the predetermined message exchange protocol.

**21.** A user terminal, comprising:
a process request generating part generating a process request showing a user request in accordance with a predetermined description form in response to the user request by a user; and
an output controlling part controlling an output of a process result shown in a process response for the process request, said process response sent from an apparatus providing a Web service in accordance with the predetermined description form.

**22.** An image forming apparatus, comprising:
a network communication controlling part controlling communications by a process request from a device connected through a network and a process response to the device;
a Web service providing process part processing internal information concerning said image forming apparatus based on a message described in accordance with a predetermined message exchange protocol within the process request and generating the process response showing a process result; and
a combined Web service providing process part processing the internal information by executing two or more process units forming said Web service providing process part, and generating the process response in response to the process request by conducting an additional process using a process result.

**23.** The image forming apparatus as claimed in claim 22, further comprising:
an application including said combined Web service providing process part;
a control service managing hardware resources used in an image forming process and controlling use in respect to the hardware resources in response to a use request from the application; and
an operating system controlling said application and said control service.

**24.** The image forming apparatus as claimed in claim 22, wherein said combined Web service providing process part includes one or more combined process executing parts, which is the process unit in said combined Web service providing process part, combining and executing the process units.

**25.** The image forming apparatus as claimed in claim 22, further comprising an internal Web service providing process part executing said combined process executing part in response to an internal event occurred within said image forming apparatus.

**26.** The image forming apparatus as claimed in claim 22, wherein said combined process executing part obtains said internal event from said internal Web service providing process part and generates the process response in response to the process request by combining and executing the process units of said Web service providing process part based on the internal event.

**27.** The image forming apparatus as claimed in claim 24, further comprising a plurality of said Web service providing process parts each including one or more the process units,
wherein said combined process executing part processes the internal information by combining the process units of said combined said plurality of said Web service providing process parts.

**28.** The image forming apparatus as claimed in claim 27, further comprising a protocol processing part, which is shared with said plurality of said Web service providing process part and said combined Web service providing process part, controlling the message in accordance with the predetermined message exchange protocol.

**29.** The image forming apparatus as claimed in claim 27, further comprising a message processing part, which is shared with said plurality of said Web service providing process part and said combined Web service providing process part, processing the message.

**30.** The image forming apparatus as claimed in claim 28, further comprising a distributing part analyzing a request type of the process request received by said network communication controlling part in accordance with the predetermined message exchange protocol, and distributing the process request to said combined Web service providing process part or said Web service providing process part.

**31.** The image forming apparatus as claimed in claim 28, further comprising a dispatching part analyzing specification information specifying Web service in the process request in accordance with the predetermined message exchange protocol, and dispatching the process to said combined process executing part executing Web service specified by the specification information.

**32.** The image forming apparatus as claimed in claim 22, further comprising:
a document accumulating part accumulating a document file; and
a document management Web service providing process part, as the Web service providing process part, providing information concerning the document file accumulated in the document accumulating part.

**33.** The image forming apparatus as claimed in claim 22, wherein said document management Web service providing process part comprises:
a first process unit obtaining a document ID identifying the document file from said document part; and
a second process unit obtaining bibliographic information corresponding to the document ID specified from said document accumulating part.

**34.** The image forming apparatus as claimed in claim 31, wherein said combined process executing part comprises:
a first process part executing said first process unit based on the internal information and obtaining a document ID;
a second process part executing the second process unit based on the document ID obtained by said first process part; and
a third process part creating a document list based on the bibliographic information obtained by said second process part.

**35.** The image forming apparatus as claimed in claim 31, further comprising:
a operating part providing operation information to a user and receiving an indication in respect to the internal information from said user;
an operation panel control Web service providing process part, as said internal Web service providing process part, providing the document list of the documents accumulated in said document accumulating part, through said combined Web service providing process part.

**36.** The image forming apparatus as claimed in claim 35, wherein said combined Web service providing process part obtaining display information displayed on said operating part from said operation panel control Web service providing process part based on the internal information requesting a display of the operating part, and controlling said combined process executing part to create the document list corresponding to the display information.

**37.** An image forming method, comprising the steps of:
(a) controlling communications by a process request from a device connected through a network and a process response to the device;
(b) processing internal information concerning said image forming apparatus based on a message described in accordance with a predetermined message exchange protocol within the process request and generating the process response showing a process result; and
(c) processing the internal information by executing two or more process units forming said Web service providing process part, and generating the process response in response to the process request by conducting an additional process using a process result.

**38.** The image forming method as claimed in claim 37, wherein said (c) step includes one or more steps of (d) combining and executing process units forming said (c) step.

**39.** The image forming method as claimed in claim 37, further comprising a plurality of said steps (b),
wherein said step (d) processes the internal information by combining said plurality of said steps (b).

**40.** An image forming apparatus, comprising:
a Web service communication controlling part receiving a process request from a device connected through a network and sending a process response showing a process result in response to the process request, the process response in accordance with a display form in which the process result can be displayed at the device; and
a Web service providing process part processing internal information concerning the image forming apparatus based on the process request, and providing the process request to said Web service communication controlling part.

**41.** The image forming apparatus as claimed in claim 40, further comprising:
an application including said Web service providing process part;
a control service managing hardware resources used in an image forming process and controlling use in respect to the hardware resources in response to a use request from the application; and
an operating system controlling said application and said control service.

**42.** The image forming apparatus as claimed in claim 40, further comprising a plurality of said Web service providing process parts.

**43.** The image forming apparatus as claimed in claim 40, wherein each of said Web service providing process comprises a Web service executing part executing at least one Web service.

**44.** The image forming apparatus as claimed in claim 43, wherein said Web service communication control part includes a network communication controlling part controlling communications by a process request from a device connected through a network and a process response to the device; and
a process request processing part processing the process request and executing said Web service executing part based on the process result.

**45.** The image forming apparatus as claimed in claim 44, wherein said Web service communication controlling part comprises a display form creating part creating the process response in a display language representing the display form, said process response showing the process result provided from the Web service providing process part.

**46.** The image forming apparatus as claimed in claim 45, wherein said Web service communication controlling part comprises:
a distributing part analyzing a request type of the process request received by said network communication controlling part, and distributing the process request to said process request processing part based on an analysis result; and
a dispatching part analyzing specification information specifying the Web service in the process request, and dispatching the process to the Web service executing part, which executes the Web service specified by the specification information.

**47.** The image forming apparatus as claimed in claim 42, further comprising a description form processing part, which is shared with said plurality of said Web service providing process part, processing the process result in accordance with a predetermined description form.

**48.** The image forming apparatus as claimed in claim 47, wherein said display form creating part comprises a description form converting part converting the process result processed by said description form processing part into a process result according to said display form, based on a format style of the description form.

**49.** The image forming apparatus as claimed in claim 47, wherein said description form processing part comprises a part describing the internal information indicated by the process request, in accordance with the predetermined description form.

**50.** An image forming method, comprising the steps of:
(a) receiving a process request from a device connected through a network and sending a process response showing a process result in response to the process request, the process response in accordance with a display form in which the process result can be displayed at the device; and
(b) processing internal information concerning the image forming apparatus based on the process request, and providing the process request to said Web service communication controlling part.

**51.** The image forming method, further comprising a plurality of said steps (a),
wherein each of said steps (a) includes one or more steps of (c) executing the Web service.

**52.** The image forming method, wherein said step (a) comprises the steps of:
(d) controlling communications by a process request from a device connected through a network and a process response to the device;
(e) processing the process request and executing said Web service executing part based on the process result;
(f) creating the process response in a display language representing the display form, said process response showing the. process result provided from the Web service providing process part.

**53.** The image forming method, wherein:
said step (a) comprises the step of (g) analyzing a request type of the process request received by said network communication controlling part, and distributing the process request to said process request processing part based on an analysis result; and
each of said steps (b) comprises the step of analyzing specification information specifying the Web service in the process request, and dispatching the process to said step (c) executing the web service specified by the specification information.

**54.** The image forming method, further comprising the step of processing part, which is shared with said plurality of said steps (b), processing the process result in accordance with a predetermined description form,
wherein said step (f) comprises the step of (j) converting the process result processed in said step (i) into a process result according to said display form, based on a format style of the description form.

**55.** A user terminal, comprising:
a receiving part receiving a process result processed according to a predetermined display form sent from an image forming apparatus connected through a network, in response to a process request by a user; and
a displaying part displaying the process result received from the image forming apparatus in accordance with the predetermined display form at a display unit.

**56.** An image forming apparatus, comprising:
a Web service communication controlling part receiving a process request from a device connected through a network and sending a process response showing a process result in response to the process request, the process response in accordance with a display form in which the process result can be displayed at the device;
a Web service providing process part processing internal information concerning the image forming apparatus based on the process request, and providing the process request to said Web service communication controlling part; and
a combined Web service providing process part processing the internal information by executing two or more process units forming said Web service providing process part, and generating the process response in response to the process request by conducting an additional process using a process result.

**57.** The image forming apparatus as claimed in claim 56, further comprising:
an application including said Web service providing process part and said combined Web service providing process part;
a control service managing hardware resources used in an image forming process and controlling use in respect to the hardware resources in response to a use request from the application; and
an operating system controlling said application and said control service.

**58.** The image forming apparatus as claimed in claim 56, wherein said combined Web service providing process part includes one or more combined process executing parts combining and executing the process units, said combined process executing parts being the process unit in said combined Web service providing process part.

**59.** The image forming apparatus as claimed in claim 56, further comprising a plurality of said Web service providing process parts,
wherein said combined process executing part processes the internal information by combining the process units of said plurality of said Web service providing process parts.

**60.** The image forming apparatus as claimed in claim 56, wherein said Web service communication controlling part comprises a network communication controlling part controlling communications by a process request from a device connected through a network and a process response to the device, in accordance with a predetermined network communication protocol.

**61.** The image forming apparatus as claimed in claim 59, further comprising a process result describing part describing the process result in accordance with a predetermined description form, said process result describing part being shared with said plurality of said Web service providing process part and said combined Web service providing process part.

**62.** The image forming apparatus as claimed in claim 60, further a distributing part analyzing a request type of the process request received by said network communication controlling part, and distributing the process request to one of said plurality of said Web service providing process part or said combined Web service providing process part based on an analysis result.

**63.** The image forming apparatus as claimed in claim 61, further comprising:
a process request analyzing part analyzing specification information specifying the Web service in the process request in accordance with the predetermined network communication protocol; and
a dispatching part dispatching the process to said combined process executing part executing the Web service specified by the specification information.

**64.** The image forming apparatus as claimed in claim 56, further comprising:
a document accumulating part accumulating a document file; and
a document management Web service providing process part providing information concerning the document file accumulated in said document accumulating part.

**65.** The image forming apparatus as claimed in claim 64, wherein said document management Web service providing process part comprises:
a first process unit obtaining a document ID identifying the document file from said document part; and
a second process unit obtaining bibliographic information corresponding to the document ID specified from said document accumulating part.

**66.** The image forming apparatus as claimed in claim 65, wherein said combined process executing part comprises:
a first process part executing said first process unit based on the internal information and obtaining a document ID;
a second process part executing the second process unit based on the document ID obtained by said first process part; and
a third process part creating a document list based on the bibliographic information obtained by said second process part.

**67.** The image forming apparatus as claimed in claim 64, further comprising a print Web service providing process part printing the information concerning the document file as one of said Web service providing process parts.

**68.** The image forming apparatus as claimed in claim 67, wherein said combined process executing part executes said document management Web service providing process part in response to the process request and subsequently executing said print Web service providing process part.

**69.** An image forming method, comprising:
(a) receiving a process request from a device connected through a network and sending a process response showing a process result in response to the process request, the process response in accordance with a display form in which the process result can be displayed at the device;
(b) processing internal information concerning the image forming apparatus based on the process request, and providing the process request to said step (a); and
(c) processing the internal information by executing two or more process units forming said step (b), and generating the process response in response to the process request by conducting an additional process using a process result.

**70.** The image forming method as claimed in claim 69, wherein said step (c) comprises the step of (d) combining and executing the process units, said step (d) being the process unit in said combined Web service providing process part.

**71.** The image forming method as claimed in claim 69, further comprising a plurality of said steps (b),
wherein said step (d) processes the internal information by combining the process units of said steps (b) .

**72.** The image forming method as claimed in claim 69, further comprising the step of:
(e) accumulating a document file;
wherein said plurality of said steps (b) comprises the steps of:
(f) providing information concerning the document file accumulated in said step (e); and
(g) printing the information concerning the document file,
whereby the step (d) executes the step (f) in response to the process request, and subsequently executing said step (g).

**73.** An image forming apparatus, comprising:
a Web service communication controlling part receiving a first process request indicating a first protocol for exchanging a predetermined message and a second process request indicating a second protocol other than the first protocol, and sending a first process response in accordance with the first protocol and a second process response in accordance with the second protocol; and
a Web service providing process part receiving the first process request and the second process request that are different protocols each other wherein a process for internal information concerning said image forming apparatus is shared with the first process request and the second process request, and sending a process result to said Web service communication controlling part.

**74.** The image forming apparatus as claimed in claim 73, further comprising:
a description format processing part, converting the message described in accordance with a predetermined description format in the first process request, and processing the process result corresponding to the second process request in accordance with the predetermined description format by a same process method, which is used to process the process result corresponding to the first process request in accordance with the description format, said description format processing part being shared with said plurality of Web service providing processing part.

**75.** The image forming apparatus as claimed in claim 74, wherein said Web server communication controlling part comprises a display format creating part creating the second process response, which shows the process result corresponding to the second process request provided from said Web service providing process part, in accordance with the display format, by a same process for the first process request.

**76.** The image forming apparatus as claimed in claim 75, wherein said display format creating part comprises a description format converting part the process result corresponding to the second process request, which is processed similar to the process result corresponding to the first process request by the description format processing part, into the process result in accordance with the display format.

**77.** An image forming apparatus, comprising:
a Web service communication controlling part receiving a first process request indicating a first protocol for exchanging a predetermined message and a second process request indicating a second protocol other than the first protocol, and sending a first process response in accordance with the first protocol and a second process response in accordance with the second protocol;
a Web service providing process part receiving the first process request and the second process request that are different protocols each other wherein a process for internal information concerning said image forming apparatus is shared with the first process request and the second process request, and sending a process result to said Web service communication controlling part; and
a combined Web service providing process part processing the internal information by executing one or more process units, which forms said Web service providing process part and are shared with the first process request and the second process request, generating the process result corresponding to the first process request or the second process request by conducting an additional process using the process result.

**79.** An image forming apparatus, comprising:
a Web service communication controlling part capable of supporting at least two of a first protocol exchanging a predetermined message with a device connected through a network, a second protocol indicating a display format to display information at the device, and a third protocol originally defined between the image forming apparatus and the device; and
a Web service providing process part processing internal information concerning the image forming apparatus in response to a request from said at least two protocols that can be supportable by said Web service communication controlling part, and providing a process result to said Web service communication controlling part, the process being shared by said at least two protocols.

**80.** An information processing apparatus, comprising:
a Web service communication controlling part receiving a first process request indicating a first protocol for exchanging a predetermined message and a second process request indicating a second protocol other than the first protocol, and sending a first process response in accordance with the first protocol and a second process response in accordance with the second protocol; and
a Web service providing process part receiving the first process request and the second process request that are different protocols each other wherein a process for internal information concerning said image forming apparatus is shared with the first process request and the second process request, and sending a process result to said Web service communication controlling part.

**81.** The information processing as claimed in claim 80, further comprising:
a description format processing part, converting the message described in accordance with a predetermined description format in the first process request, and processing the process result corresponding to the second process request in accordance with the predetermined description format by a same process method, which is used to process the process result corresponding to the first process request in accordance with the description format, said description format processing part being shared with said plurality of Web service providing processing part.

**82.** The information processing apparatus as claimed in claim 81, wherein said Web server communication controlling part comprises a display format creating part creating the second process response, which shows the process result corresponding to the second process request provided from said Web service providing process part, in accordance with the display format, by a same process for the first process request.

**83.** The information processing apparatus as claimed in claim 82, wherein said display format creating part comprises a description format converting part the process result corresponding to the second process request, which is processed similar to the process result corresponding to the first process request by the description format processing part, into the process result in accordance with the display format.

**84.** An information processing apparatus, comprising:
a Web service communication controlling part receiving a first process request indicating a first protocol for exchanging a predetermined message and a second process request indicating a second protocol other than the first protocol, and sending a first process response in accordance with the first protocol and a second- process response in accordance with the second protocol;
a Web service providing process part receiving the first process request and the second process request that are different protocols each other wherein a process for internal information concerning said image forming apparatus is shared with the first process request and the second process request, and sending a process result to said Web service communication controlling part; and
a combined Web service providing process part processing the internal information by executing one or more process units, which forms said Web service providing process part and are shared with the first process request and the second process request, generating the process result corresponding to the first process request or the second process request by conducting an additional process using the process result.

**85.** An image forming apparatus, comprising:
a Web service communication controlling part capable of supporting at least two of a first protocol exchanging a predetermined message with a device connected through a network, a second protocol indicating a display format to display information at the device, and a third protocol originally defined between the image forming apparatus and the device; and
a Web service providing process part processing internal information concerning the image forming apparatus in response to a request from said at least two protocols that can be supportable by said Web service communication controlling part, and providing a process result to said Web service communication controlling part, the process being shared by said at least two protocols.
